(19) Europäisches Patentamt

European Patent Office

Office européen des brevets

(11) **EP 1 686 516 A1**

(12) **EUROPEAN PATENT APPLICATION**
published in accordance with Art. 158(3) EPC

(43) Date of publication:
**02.08.2006 Bulletin 2006/31**

(51) Int Cl.:
**G06Q 10/00** *(2006.01)*

(21) Application number: **04723751.6**

(22) Date of filing: **26.03.2004**

(86) International application number:
**PCT/JP2004/004293**

(87) International publication number:
**WO 2005/041096 (06.05.2005 Gazette 2005/18)**

(84) Designated Contracting States:
**AT BE BG CH CY CZ DE DK EE ES FI FR GB GR HU IE IT LI LU MC NL PL PT RO SE SI SK TR**

(30) Priority: **23.10.2003 JP 2003396346**
**30.01.2004 JP 2004023635**

(72) Inventors:
• **MASUYAMA, Hiroaki**
  **Toyonaka-shi,**
  **Osaka 5600054 (JP)**
• **MIYAMOTO, Kaoru**
  **Toshima-ku,**
  **Tokyo 1710051 (JP)**

(74) Representative: **Style, Kelda Camilla Karen et al**
  **Page White & Farrer,**
  **54 Doughty Street**
  **London WC1N 2LS (GB)**

(71) Applicants:
• **Intellectual Property Bank Corp.**
  **Tokyo 105-0001 (JP)**
• **Masuyama, Hiroaki**
  **Toyonaka-shi,**
  **Osaka 560-0054 (JP)**

(54) **SYSTEM FOR EVALUATING ENTERPRISE AND PROGRAM FOR EVALUATING ENTERPRISE**

(57)    An enterprise evaluation system and an enterprise evaluation program capable of evaluating the value of an enterprise by analyzing the search and development strategy or the intellectual property strategy of the enterprise. Among patent applications filed by a specified enterprise within a specified period, required registration period is calculated for individual applications by subtracting the date of application from the date of registration of a patent subjected to registration of setting, an average required registration period is calculated from the required registration periods thus calculated and delivered to a display means (372), a print means (e.g. a printer (32)) and a recording medium (377) or delivered to many communication apparatuses through a communication line. A user can recognize on which technical field an enterprise under inspection is placing emphasis or in which technical field the invention is positioned defensively, and can judge the attitude of the enterprise toward patent.

FIG. 12

AVERAGE YEARS REQUIRED FOR REGISTRATION (PTMY)
(ELECTRICAL EQUIPMENT)

| NAME OF ENTERPRISE | 1999 | 2000 | 2001 | 2002 |
|---|---|---|---|---|
| MS | 7.2 | 6.9 | 6.8 | 6.6 |
| SN | 9.2 | 9.0 | 9.0 | 8.9 |
| HT | 8.2 | 8.0 | 7.9 | 7.5 |
| TS | 8.0 | 8.1 | 8.0 | 7.5 |
| MB | 6.8 | 6.8 | 6.8 | 6.7 |
| FJ | 8.3 | 8.4 | 8.1 | 7.7 |
| NC | 5.0 | 4.6 | 4.2 | 3.9 |
| SY | 6.9 | 6.8 | 6.8 | 6.6 |
| SH | 6.7 | 6.7 | 6.5 | 6.1 |
| PI | 9.1 | 9.1 | 8.9 | 8.7 |

**Description**

TECHNICAL FIELD

The present invention relates to an enterprise evaluation device and enterprise evaluation program for evaluating the value of an enterprise based on patent documents.

BACKGROUND ART

Japanese Patent Laid-Open Publication No. 2000-348015 describes a system, method and recording medium for evaluating an evaluation item based on first data having a predetermined renewal interval and second data having a renewal interval that is shorter than the first data. This evaluation system has (a) means for creating a first evaluation model according to input of the first data of sample targets, (b) means for applying the first data of the sample targets to the first evaluation model and calculating first evaluation output, (c) means for creating a second evaluation model according to input of the second data and the first evaluation output of the sample targets, (d) means for applying the first data to the first evaluation model according to the input of the first data of an evaluation target and calculating second evaluation output, and (e) means for applying the second data and the second evaluation output of the evaluation target to the second evaluation model and calculating the evaluation output of the evaluation target, and thereby evaluates the evaluation item of the evaluation target that could change with time.

In Japanese Patent Laid-Open Publication No. 2000-348015, to predict changes in the enterprise evaluation derived from data in which the renewal period is relatively long such as every year or every quarter, data in which the renewal period is relatively short such as stock price, interest and currency exchange that fluctuate from day to day is used to reflect changes in the economy. In this system, enterprise evaluation is made in a timely manner at the point in time such evaluation is to be made.

Further, Japanese Patent Laid-Open Publication No. 2001-76042 describes an intellectual property evaluation device and intellectual property evaluation method for evaluating the proprietary nature of intellectual property relating to a pending or registered invention or the like. This evaluation device has an actual profit input means for inputting data regarding the actual profit, a compound cost rate input means for inputting data regarding the compound cost rate per year, a compound present value calculation means for calculating the compound present values of annual compensation by multiplying the data regarding the actual profit with the data regarding the compound cost rates per year, an intellectual property price calculation means for calculating an intellectual property price by totaling the compound present value of the calculated annual compensation amounts, and an output means for outputting the calculated intellectual property value amount calculated with the intellectual property price calculation means.

The above-mentioned Laid-Open Publication No. 2001-76042 describes a technique of comprehending the asset value of currently remaining patents by depreciating registered patents and the related sales volume and profits. Moreover, with respect to the evaluation of the value of each patent, the input ranking of evaluation conducted by one's own company and evaluation conducted by other companies is evaluated as the contribution.

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

DISCLOSURE OF THE INVENTION

Recently, with the increasing ratio of intangible assets making up the enterprise value, the value of intangible assets now has a great influence on the enterprise value.
Nevertheless, generally speaking, an enterprise value is not a book value in a balance sheet represented by total assets = liabilities + stockholders' equity, and is roughly calculated by the total market value + liabilities. Therefore, when complete current value accounting is applied, the amount calculated by the total market value - stockholders' equity will represent the validity of invisible assets (intangible assets) of the enterprise. Nevertheless, there is a drawback in that it is difficult to specifically calculate the value of intangible assets and judge the value according to application.

Further, with the system described in Japanese Patent Laid-Open Publication No. 2000-348015, a model for enterprise evaluation is created by inputting data (dynamic data) with a short renewal period such as stock prices in addition to data (static data) with a long renewal period such as financial data to be publicly announced at the end of the fiscal term. The static data and dynamic data related to the evaluation target are applied to this model. Thereby, this publication is indicating that the evaluation of the item to be evaluated, which could change over time, is calculated in a timely manner and as the latest information. Nevertheless, there is a drawback in that it is not possible to easily judge whether an invention in a predetermined technical field is in a monopolistic state by a specific enterprise, or in a competitive state, and to judge to what degree the competitive position relating to inventions is absolute or relative.

Moreover, the intellectual property evaluation device described in Japanese Patent Laid-Open Publication No. 2001-76042 is to evaluate the intellectual property such as patents one by one each year, and there is a drawback in that it is not possible to judge the enterprise value.

The total market value is determined by the stock prices in the market. Thus, whether the current stock price and the value of intangible assets calculated based on the stockholders' equity in the book are valid is an extremely important element for investors in the decision-making of stock trading. Enterprises are hoping to increase their value of intangible assets and thereby increase their enterprise value by procuring funds and continuing technical developments. Therefore, increasing the value of intangible assets will be positioned as an important issue in the management strategy for enterprises.

There have been attempts of trying to evaluate intangible assets from the past. Nevertheless, there is a drawback in that it is not possible to evaluate the enterprise value validity by quantitatively and qualitatively incorporating the value of intangible assets. Further, when making an investment in a specified enterprise or jointly developing a product with a specified enterprise, or desiring to be employed in a specified enterprise, there is a drawback in that it is difficult to know the trend of such enterprise in each technical field or to predict the potential of such enterprise.

Thus, in light of the conventional circumstances described above, an object of the present invention is to provide an enterprise evaluation device and an enterprise evaluation program capable of acquiring the unexamined publications or publications of registrations based on patent applications of a specified enterprise, analyzing the research and development strategy and intellectual property strategy of such enterprise, and combining this with management-finance information for evaluating the enterprise value.

In order to achieve the foregoing object, the present invention provides an enterprise evaluation device, comprising:

official gazette acquisition means for acquiring, from a database, publications of patent registrations subjected to registration from among the patent applications filed by a specified enterprise within a specified period;
average period required for registration calculation means for calculating a required registration period for individual applications by subtracting the filing date from the registration date indicated in the acquired publications of registrations, calculating an accumulated required registration period by counting the calculated required registration period for all patents subjected to the registration, and calculating an average period required for registration through dividing the accumulated required registration period by the total number of patents subjected to the registration; and
output means for outputting the calculated average period required for registration to display means, printing means, recording medium, or another telecommunications device via a communication line.

Further, in order to achieve the foregoing object, in the enterprise evaluation device of the present invention, the average period required for registration calculation means calculate the average period required for registration through dividing the accumulated required registration period by the total number of patents subjected to the registration and the average number of days of one year or one month.

Further, in order to achieve the foregoing object, the present invention provides an enterprise evaluation device, comprising:

official gazette acquisition means for acquiring, from a database, publications of patent registrations subjected to registration from among patent applications in a predetermined technical field filed by a specified enterprise within a specified period;
average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration; and
output means for outputting the calculated average period required for registration to display means, printing means, recording medium, or another telecommunications device via a communication line.

Further, in order to achieve the foregoing object, in the enterprise evaluation device of the present invention, the average period required for registration calculation means calculate the average period required for registration through dividing the accumulated required registration period by the total number of patents subjected to the registration and the average number of days of one year or one month.

Further, in order to achieve the foregoing object, the present invention uses, as the publications of registrations for calculation of the average period required for registration, publications of patent registrations, publications of examined patent applications, publications of examined utility model applications or publications of utility model registrations.

Further, in order to achieve the foregoing object, the present invention provides an enterprise evaluation device, comprising:

official gazette acquisition means for acquiring, from a database, unexamined publications requested for examination and publications of patent registrations subjected to registration from among patent applications filed by a specified enterprise within a specified period;

average period before examination request calculation means for calculating a period before examination request for individual applications by subtracting a filing date from a date of examination request described in the acquired unexamined.publications or publications of registrations, calculating an accumulated period before examination request by counting the calculated period before examination request for all patents requested for examination, and calculating the average period before examination request through dividing the accumulated period before examination request by the total number of patents requested for examination; and

output means for outputting the calculated average period before examination request to display means, printing means, recording medium, or another telecommunications device via a communication line.

Further, in order to achieve the foregoing object, in the enterprise evaluation device of the present invention, the average period before examination request calculation means calculate the average period before examination request through dividing the accumulated period before examination request by the total number of patents requested for examination and the average number of days of one year or one month.

Further, in order to achieve the foregoing object, the present invention provides an enterprise evaluation device, comprising:

official gazette acquisition means for acquiring, from a database, unexamined publications requested for examination and publications of patent registrations subjected to registration from among patent applications in a predetermined technical field filed by a specified enterprise within a specified period;

average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination; and

output means for outputting the calculated average period before examination request to display means, printing means, recording medium, or another telecommunications device via a communication line.

Further, in order to achieve the foregoing object, in the enterprise evaluation device of the present invention, the average period before examination request calculation means calculate the average period before examination request through dividing the accumulated period before examination request by the total number of patents requested for examination and the average number of days of one year or one month.

Further, in order to achieve the foregoing object, the present invention uses, as the publications of registrations, publications of patent registrations, publications of examined patent applications, publications of examined utility model applications or publications of utility model registrations, and uses, as the unexamined publications, publications of unexamined patent applications, published Japanese translations of PCT international applications for patents, publications of unexamined utility model applications or published Japanese translations of PCT international applications for utility models for calculation of the average period before examination request.

Further, in order to achieve the foregoing object, the present invention provides an enterprise evaluation device, comprising:

official gazette acquisition means for acquiring, from a database, unexamined publications or publications of registrations based on patent applications or utility model applications filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost; and output means for outputting the calculated patent application productivity to display means, printing means, recording medium, or another telecommunications device via a communication line.

Further, in order to achieve the foregoing object, in the enterprise evaluation device of the present invention, number-of-inventions-per-applicant acquisition means acquire the number of patent applications or utility model applications or the number of claims from each of the acquired unexamined publications or publications of registrations, acquire the number of applicants indicated in each of the acquired publications, and acquire the number of inventions per unit of applicants through dividing the number of patent applications or utility model applications or the number of claims by the number of applicants; and

the number-of-inventions acquisition means acquire the total number of inventions by counting the acquired number of inventions per unit of applicants for all of the acquired publications.

Further, in order to achieve the foregoing object, the enterprise evaluation device of the present invention calculates the patent application productivity in a predetermined technical field and in a specified enterprise.

Further, in order to achieve the foregoing object, the present invention provides an enterprise evaluation device, comprising:

official gazette acquisition means for acquiring, from a database, unexamined publications or publications of registrations based on patent applications or utility model applications filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

publication in which an examination request period has passed acquisition means for acquiring, from a database, unexamined publications or publications of registrations based on patent applications or utility model applications filed by the specified enterprise within a third specified period so that the examination request period pass before tabulation;

estimated examination request ratio acquisition means for acquiring the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and

output means for outputting the calculated examination request productivity to display means, printing means, recording medium, or another telecommunications device via a communication line.

Further, in order to achieve the foregoing object, the present invention provides an enterprise evaluation device, comprising:

first official gazette acquisition means for acquiring, from a database, unexamined publications or publications of registrations based on patent applications filed by a specified enterprise within a first specified period;

number-of-inventions acquisition means for acquiring number of inventions including the number of patent applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

fourth official gazette acquisition means for acquiring, from a database, publications of patent registrations subjected to registration from among the patent applications filed by the specified enterprise within a fourth specified period;

average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;

fifth official gazette acquisition means for acquiring, from a database, unexamined publications or publications of registrations based on patent applications filed by the specified enterprise within a fifth specified period, and the publications of patent registrations subjected to registration by the arrival of a predetermined time from among the patent applications;

cumulative number of patent applications acquisition means for acquiring, for each predetermined period, the cumulative number of patent applications filed by the specified enterprise within the specified period based on the acquired unexamined publications or publications of registrations;

cumulative number of patent registrations acquisition means for acquiring, for each predetermined time, the cumulative number of patent registrations of patents subjected to registration by the arrival of each predetermined time based on the acquired publication of registrations;

cumulative patent registration ratio calculation means for calculating, for each predetermined time, the cumulative patent registration ratio through dividing the acquired cumulative number of patent registrations by the cumulative number of patent applications;

estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;

patent acquisition productivity calculation means for calculating the patent acquisition productivity by multiplying the calculated patent application productivity with the estimated registration ratio; and

output means for outputting the calculated patent acquisition productivity to display means, printing means, recording medium, or another telecommunications device via a communication line.

Further, in order to achieve the foregoing object, the present invention uses, as the predetermined technical field, a technical field classified by IPC sub-classes, keywords or inventors.

Further, in order to achieve the foregoing object, the present invention comprises:

display data generation means for generating display data for associating and displaying the patent application productivity and the examination request productivity in a graph or the like; and

output means for outputting the display data to display means, printing means, recording medium, or another telecommunications device via a communication line.

Further, in order to achieve the foregoing object, the present invention comprises:

display data generation means for generating display data for associating and displaying the patent application productivity and the patent acquisition productivity in a graph or the like; and

output means for outputting the display data to display means, printing means, recording medium, or another telecommunications device via a communication line.

Further, in order to achieve the foregoing object, the present invention comprises:

display data generation means for generating display data for associating and displaying the examination request productivity and the patent acquisition productivity in a graph or the like; and

output means for outputting the display data to display means, printing means, recording medium, or another telecommunications device via a communication line.

According to the present invention,

official gazette acquisition means acquire, from a database, publications of patent registrations subjected to registration from among the patent applications filed by a specified enterprise within a specified period;

average period required for registration calculation means calculate a required registration period for individual applications by subtracting the filing date from the registration date indicated in the acquired publications of registrations, calculate an accumulated required registration period by counting the calculated required registration period for all patents subjected to the registration, and calculate an average period required for registration through dividing the accumulated required registration period by the total number of patents subjected to the registration and average number of days of one year or one month.

Therefore, the average years required for registration can be calculated and displayed upon classification per technical area such as based on enterprises, based on workplaces, based on inventors, based on IPC and the like, and the user will be able to know which technical field the enterprise to be researched is laying emphasis, or which technical field the enterprise to be researched is defensively positioning the inventions.

Further, a user will be able to judge that a business department having a short average period required for registration is a department that is advancing development with strategic emphasis, and, contrarily, a user will be able to judge that a technical field having a long average period required for registration is a relatively defensive department. Like this, by perusing the average period required for registration, a user will be able to judge the attitude of an enterprise to patents.

Further, according to the present invention, since the average period required for registration calculation means calculates the average period required for registration through dividing the accumulated required registration period by the total number of patents subjected to registration and average number of days of one year or one month, the results can be displayed to the user in a.easy-to-view manner, and the user will be able to instantaneously understand the average period required for registration in units of years or months. For instance, if the average period required for registration per patent application is 365.25 days, this can be notified as 1 year or 12 months.

Moreover, according to the present invention, since the average period required for registration is calculated based on patent applications per predetermined technical field in a specified enterprise, it will be possible to compare the average period required for registration with competitors per technical field, and use this as information for deciding on whether one's company should enter into a new technical field.

Further, the present invention comprises:

> official gazette acquisition means for acquiring, from a database, unexamined publications requested for examination and publications of patent registrations subjected to registration from among patent applications filed by a specified enterprise within a specified period;
> average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination; and
> output means for outputting the calculated average period before examination request to display means, printing means, recording medium, or another telecommunications device via a communication line.

Therefore, it will be possible to judge that patent applications of a certain business department to request for examination at an early stage belong to a strategically important technical field, and it will be possible to judge that technical fields with a long average period before examination request belong to a relatively defensive department. Therefore, based on the calculated average period before examination request, the user will be able to know which technical field the enterprise to be researched is laying emphasis, or which technical field the enterprise to be researched is defensively positioning the inventions, and the user will be able to judge the attitude of an enterprise to patents.

Moreover, according to the present invention, since the average period before examination request calculation means calculates the average period before examination request through dividing the accumulated period before examination request by the total number of examination requests and the average number of days of one year or one month, the results can be displayed to the user in a easy-to-view manner, and the user will be able to instantaneously understand the average period before examination request in units of years or months.

Moreover, according to the present invention, since the average period before examination request is calculated based on patent applications per predetermined technical field in a specified enterprise, it will be possible to total the average years before examination request according to workplaces of enterprises, inventors, IPC and the like. Also it is possible to compare the average period before examination request with competitors per technical field, and use this as information for deciding on whether one's company should enter into a new technical field, enabling to learn, for example, that a sector for which the average period before examination request is short is a sector strategically important.

Further, the present invention uses, as the publications of registrations, publications of patent registrations, publications of examined patent applications, publications of examined utility model applications or publications of utility model registrations, and uses, as the unexamined publications, publications of unexamined patent applications, published Japanese translations of PCT international applications for patents, publications of unexamined utility model applications or published Japanese translations of PCT international applications for utility models. Therefore, enterprise evaluation can be conducted more accurately based on broader technical documents.

Moreover, the present invention comprises:

> official gazette acquisition means for acquiring, from a database, unexamined publications or publications of registrations based on patent applications or utility model applications filed by a specified enterprise within a first specified period;
number-of-inventions acquisition means for acquiring number of inventions including the number of patent applications or utility model applications or the number of claims from the acquired unexamined publications or publications of registrations;
management-finance information acquisition means for acquiring R&D cost in the specified enterprise within a second specified period from a management-finance database storing management-finance information of enterprises;
patent application productivity calculation means for calculating the number of inventions per unit of R&D cost as the patent application productivity through dividing the acquired number of inventions by the R&D cost; and
output means for outputting the calculated patent application productivity to display means, printing means, recording medium, or another telecommunications device via a communication line.

Therefore, it will be possible to calculate the number of claims filed per R&D cost, measure the productivity of creating patents as a part of the results of research and development, and estimate the efficiency of the research and development. The larger the calculated value of the patent application productivity, it will be possible to judge that the productivity of the number of patent applications or number of inventions such as the number of claims in the research and development is high, and that the enterprise's consciousness of patents is high. Further, it will be possible to judge whether the enterprise is making efficient research investment.

Further, with respect to patent applications filed by a specific enterprise within a first specified period, by calculating the patent application productivity using the R&D cost of the previous year (during the second specified period) of such patent applications, it will be possible to calculate the patent application productivity of the number of inventions (number of claims filed or the like) of the following year having a high coefficient of correlation with the variation in the R&D cost, and the productivity of the number of inventions of an enterprise can be judged more accurately.

Further, according to the present invention,
number-of-inventions-per-applicant acquisition means acquire the number of patent applications or utility model applications or the number of claims from each of the acquired unexamined publications or publications of registrations, acquire the number of applicants indicated in each of the acquired publications, and acquire the number of inventions per unit of applicants through dividing the number of patent applications or utility model applications or the number of claims by the number of applicants; and
the number-of-inventions acquisition means acquire the total number of inventions by counting the acquired number of inventions per unit of applicants for all of the acquired publications.

Therefore, the productivity of the number of inventions of an enterprise can be judged more accurately even for enterprises filing numerous joint applications.

According to the present invention, since the patent application productivity is calculated in the predetermined technical field of a specific enterprise, it will be possible to judge the productivity of the number of inventions per technical field or per manufacturing department even for enterprises engaged in numerous fields of technical development.

Further, the present invention comprises:

official gazette acquisition means for acquiring, from a database, unexamined publications or publications of registrations based on patent applications or utility model applications filed by a specified enterprise within a first specified period;
number-of-inventions acquisition means for acquiring number of inventions including the number of patent applications or utility model applications or the number of claims from the acquired unexamined publications or publications of registrations;
management-finance information acquisition means for acquiring R&D cost in the specified enterprise within a second specified period from a management-finance database storing management-finance information of enterprises;
patent application productivity calculation means for calculating the number of inventions per unit of R&D cost as the patent application productivity through dividing the acquired number of inventions by the R&D cost;
publication in which an examination request period has passed acquisition means for acquiring, from a database, unexamined publications or publications of registrations based on patent applications or utility model applications filed by the specified enterprise within a third specified period so that the examination request period pass before tabulation;
estimated examination request ratio acquisition means for acquiring the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and
output means for outputting the calculated examination request productivity to display means, printing means, recording medium, or another telecommunications device via a communication line.

Therefore, it will be possible to correct the patent application productivity based on the performance of previous examination requests, and the productivity of patent applications can be corrected into an easy-to-use format. By perusing the examination request productivity, the user will be able to predict the productivity or establishment of rights of future patent applications, and it will be possible to judge whether the enterprise has numerous effective applications, numerous defensive applications, or numerous wasteful applications.

Moreover, the present invention comprises:

first official gazette acquisition means for acquiring, from a database, unexamined publications or publications of registrations based on patent applications filed by a specified enterprise within a first specified period;
number-of-inventions acquisition means for acquiring number of inventions including the number of patent applications or the number of claims from the acquired unexamined publications or publications of registrations;
management-finance information acquisition means for acquiring R&D cost in the specified enterprise within a second specified period from a management-finance database storing management-finance information of enterprises;
patent application productivity calculation means for calculating the number of inventions per unit of R&D cost as the patent application productivity through dividing the acquired number of inventions by the R&D cost;
fourth official gazette acquisition means for acquiring, from a database, publications of patent registrations subjected to registration from among the patent applications filed by the specified enterprise within a fourth specified period;
average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;
fifth official gazette acquisition means for acquiring, from a database, unexamined publications or publications of registrations based on patent applications filed by the specified enterprise within a fifth specified period, and the publications of patent registrations subjected to registration by the arrival of a predetermined time from among the patent applications;
cumulative number of patent applications acquisition means for acquiring, for each predetermined period, the cumulative number of patent applications filed by the specified enterprise within the specified period based on the acquired unexamined publications or publications of registrations;
cumulative number of patent registrations acquisition means for acquiring, for each predetermined time, the cumulative number of patent registrations of patents subjected to registration by the arrival of each predetermined.time based on the acquired publication of registrations;
cumulative patent registration ratio calculation means for calculating, for each predetermined time, the cumulative patent registration ratio through dividing the acquired cumulative number of patent registrations by the cumulative number of patent applications;
estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;
patent acquisition productivity calculation means for calculating the patent acquisition productivity by multiplying the calculated patent application productivity with the estimated registration ratio; and
output means for outputting the calculated patent acquisition productivity to display means, printing means, recording medium, or another telecommunications device via a communication line.

Therefore, it will be possible to correct the patent application productivity based on the estimated registration ratio which is an estimate of the patents to be ultimate acquired, and the proper R&D cost and productivity creating the patents can be provided to the user. Since the important issue for an enterprise is the number of patents that it is able to ultimately acquire, by providing the patent acquisition productivity according to the present invention to the user, the user will be able to judge the strength or weakness of development capability per technical field.

Further, the present invention comprises:

display data generation means for generating display data for associating and displaying the patent application productivity and the examination request productivity in a graph or the like; and
output means for outputting the display data to display means, printing means, recording medium, or another telecommunications device via a communication line.

Therefore, it will be possible to evaluate, per enterprise or per technical field, whether the R&D cost are being effectively injected and whether the inventions in the filed patent applications are being requested for examination.
Moreover, it will be easy to search for enterprises that are efficiently filing patent applications in relation to the amount invested in the R&D cost and have a high examination request ratio, thereby of a posture of not wasting the inventions filed, and to search for enterprises that are not sufficiently creating inventions in relation to the invested amount and have a low examination request ratio, whereby the amount invested in the research and development is not being utilized effectively.

Further, the present invention comprises:

display data generation means for generating display data for associating and displaying the patent application productivity and the patent acquisition productivity in a graph or the like; and
output means for outputting the display data to display means, printing means, recording medium, or another telecommunications device via a communication line.

Therefore, it will be possible to easily research whether the enterprise is effectively injecting R&D cost and effectively acquiring patents.
Moreover, it will be possible to easily research an enterprise showing high patent application productivity even though the number of patent applications is small, or an enterprise have efficiently expended R&D cost in patent applications, or an enterprise superior in methods of research and development.
Further, by searching for enterprises in which patent applications are becoming registered as patents in an extremely high percentage, the patent registration ratio per R&D cost can be estimated to be high, and it will be possible to easily search for an enterprise that is highly likely to enter into a monopolistic state regarding its future technology.

Moreover, the present invention comprises:

display data generation means for generating display data for associating and displaying the examination request productivity and the patent acquisition productivity in a graph or the like; and
output means for outputting the display data to display means, printing means, recording medium, or another telecommunications device via a communication line.

Therefore, it will be possible to judge whether the inventions of a specified enterprise requested for examination as a result of the effective injection of R&D cost are being subject to the effective registration.
Further, it will be possible to easily judge whether an enterprise is making examination requests in a high rate for the inventions that it filed and whether such inventions are patented in a high rate, and whether the enterprise is patenting its inventions and taking care of such patents.
Moreover, when an enterprise has a low examination request productivity value and a low patent acquisition productivity value regarding its filed inventions, the number of examination requests will be low and the percentage of obtaining patents will also be low. Therefore, it will be possible to easily judge whether an enterprise has numerous patent applications going to waste with respect to the allowance of patents, or whether an enterprise may possibly have some strategic problems regarding patent applications.
Further, by operating the indexes relating to patent productivity in a plurality of industries or technical fields and displaying the distribution of the respective enterprises, the user will be able to easily discover the characteristics of the respective industries and the existence of characteristic enterprises in such industries. It will also be possible to utilize this in judging the value or status of the displayed enterprise.

BRIEF DESCRIPTION OF THE DRAWINGS

FIG. 1 is a diagram showing the overall configuration of an enterprise evaluation system;
FIG. 2 is a signal processing system block diagram of an enterprise evaluation device;
FIG. 3 is a diagram showing an example of management-finance information;
FIGS. 4A and 4B are diagrams showing an example of technical information;
FIG. 5 is a chart illustrating the respective indexes of "business, profit, market value" calculated by the enterprise evaluation device and the calculating formula thereof;

FIG. 6 is a chart illustrating the respective indexes of "business, profit, market value" calculated by the enterprise evaluation device and the calculating formula thereof;

FIG. 7 is a chart illustrating the respective indexes of "R&D, patent" calculated by the enterprise evaluation device and the calculating formula thereof;

FIG. 8 is a chart illustrating the respective indexes of "R&D, patent" calculated by the enterprise evaluation device and the calculating formula thereof;

FIG. 9 is a chart illustrating the respective indexes of "patent portfolio" calculated by the enterprise evaluation device and the calculating formula thereof;

FIG. 10 is a chart showing a display example of a patent acquisition (registration) related index in the electrical equipment industry;

FIG. 11 is a chart showing a display example of a patent acquisition (registration) related index in the chemical industry;

FIG. 12 is a chart denoting the average years required for registration (PTMY) per enterprise in the electrical equipment industry;

FIG. 13 is a chart denoting the average years required for registration (PTMY) per enterprise in the chemical industry;

FIG. 14 is a chart denoting the calculation of indexes relating to the patent productivity of ten companies in the electrical equipment industry;

FIG. 15 is a chart denoting the calculation of indexes relating to the patent productivity of ten companies in the chemical industry;

FIG. 16 is a diagram showing the relationship of the patent application productivity (PPFI) and patent acquisition productivity (PPPD) in the electrical equipment industry;

FIG. 17 is a diagram showing the relationship of the patent application productivity (PPFI) and patent acquisition productivity (PPPD) in the chemical industry;

FIG. 18 is a diagram showing the relationship of the patent application productivity (PPFI) and examination request productivity (PPEX) in the chemical industry;

FIG. 19 is a diagram showing the relationship of the patent application productivity (PPFI) and examination request productivity (PPEX) in the electrical equipment industry;

FIG. 20 is a diagram showing the relationship of the patent acquisition productivity (PPPD) and examination request productivity (PPEX) in the chemical industry;

FIG. 21 is a diagram showing the relationship of the patent acquisition productivity (PPPD) and examination request productivity (PPEX) in the electrical equipment industry;

FIG. 22 is a chart showing the results of calculating the logarithm with the cumulative patent registration ratio (PTSR) as the antilogarithm upon calculating the estimated registration ratio;

FIG. 23 is a diagram plotting the natural logarithm of the cumulative patent registration ratio (PTSR) for each year elapsed and representing the regression curve thereof;

FIG. 24 is a diagram plotting the natural logarithm of the cumulative patent registration ratio (PTSR) for each year elapsed and representing the regression line thereof;

FIG. 25 is a processing flowchart upon calculating and outputting the various indexes;

FIG. 26 is a diagram showing a display example of the display menu for selecting the type of index upon evaluating the enterprise value;

FIG. 27 is a diagram showing a state where the user selected "(PT) patent acquisition (registration) related index" in the display menu for selecting the type of index;

FIG. 28 is a diagram showing an example of a case where the user selected "(PS) patent stock related index" in the display menu for selecting the type of index;

FIG. 29 is a diagram showing an example of a case where the user selected "patent stock index" among the items of "(C) profit related index" in the display menu for selecting the type of index;

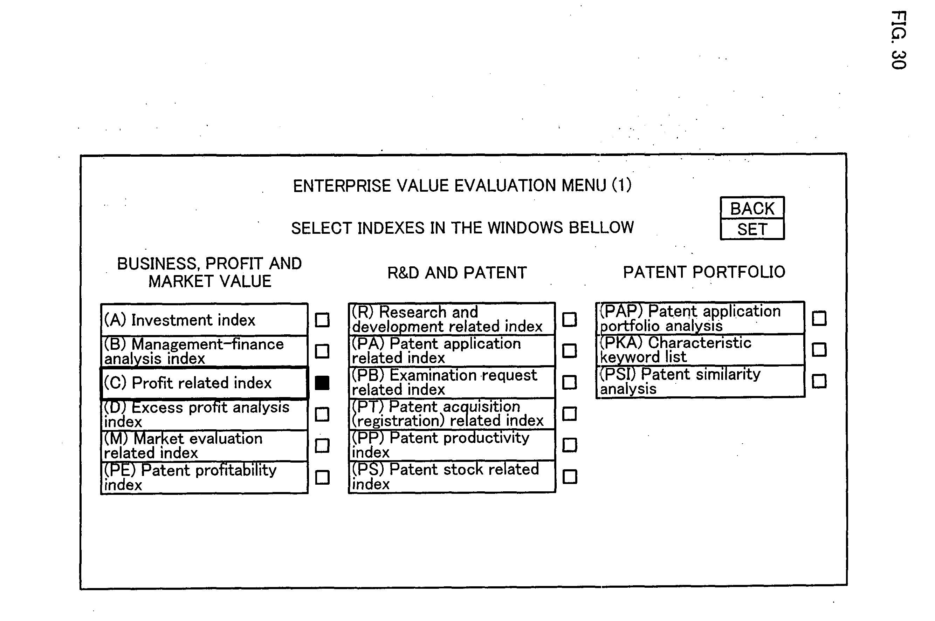

FIG. 30 is a diagram showing an example of a case where the user selected "(C) profit related index" among the selection menu of "business, profit, market value" in the display menu for selecting the type of index;

FIG. 31 is a diagram showing an example of a case where the user selected "sales volume" among the items of "(C) profit related index" in the display menu for selecting the type of index;

FIG. 32 is a diagram showing a display example of an enterprise value evaluation input condition setting screen for selecting the conditions of the "target document" and "reading of data" upon calculating the index for determining the enterprise value;

FIG. 33 is a diagram showing a display example of an enterprise value evaluation input condition setting screen for selecting the conditions of the target industry or respective enterprises upon calculating the index for determining the enterprise value;

FIG. 34 is a diagram showing an output condition setting screen of the calculated index;

FIG. 35 is a diagram showing a state where the user selected "(A) investment index" in the display menu for selecting the type of index;

FIG. 36 is a diagram showing an example where the user selected "investment trend index" from the selection menu of "(C) investment index" in the display menu for selecting the type of index;

FIG. 37 is a diagram showing an example where the user selected the items of "(PA) patent application related index" in the display menu for selecting the type of index; and

FIG. 38 is a diagram showing an example where the user selected "number of claims filed" from the items of "(PA) patent application related index" in the display menu for selecting the type of index;

BEST MODE FOR CARRYING OUT THE INVENTION

Embodiments of the present invention are now explained with reference to the drawings.

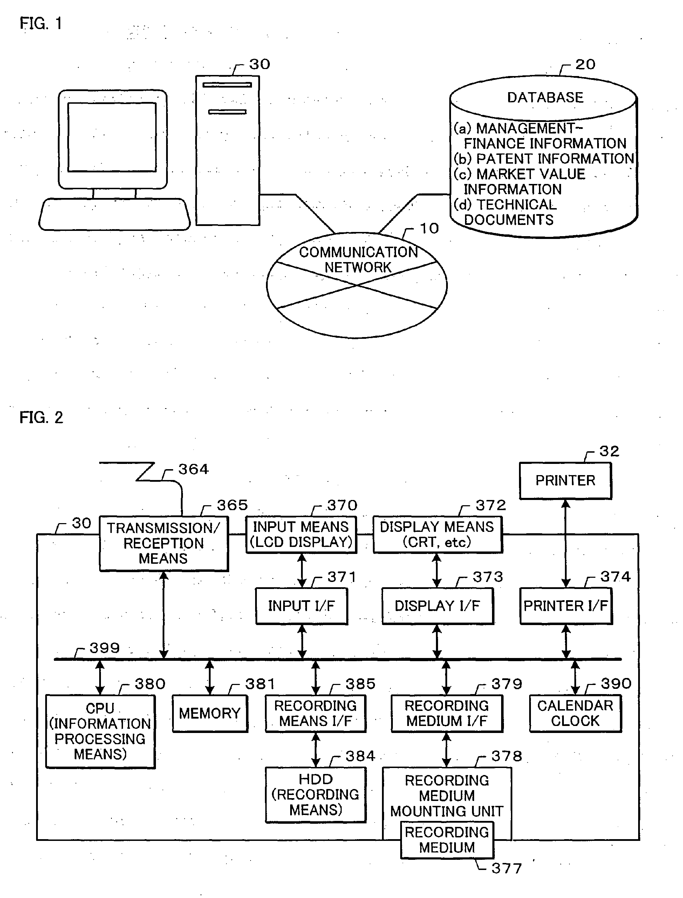

FIG. 1 is a diagram showing the overall configuration of an enterprise evaluation system according to the present invention.

As shown in FIG. 1, the enterprise value evaluation system is configured from a database 20 recording various types of information such as management-finance information, technical documents (in addition to patent information, numerical value information relating to utility models and technical journals), market value information (numerical value information of the market value), threshold for determining the validity of the enterprise value, determination result of the validity and category based on such threshold; an enterprise evaluation device 30 for inputting various types of information such as management-finance information, technical documents and market value information and outputting the judgment results of the validity of the enterprise value; and a communication network 10 such as the Internet or dedicated communication line for communicably connecting the enterprise evaluation device 30 and database 20.

Incidentally, the database 20 may be provided inside the enterprise evaluation device 30.

FIG. 2 is a signal processing system block diagram of an enterprise evaluation device 30 according to the present invention.

As shown in FIG. 2, the information transmission-reception unit of the enterprise evaluation device 30 is provided with a transmission-reception means 365 (including the functions of a management-finance information acquisition means, official gazette acquisition means or output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting this to the information processing means described later, and outputting display commands to an LCD or the like based on instructions from the information processing means, a display means 372 for displaying information such as images or texts, graphs or charts, a display interface 373 (including the function of an output means) for outputting image signals for display to the display means 372 based on the command from the information processing means, and a printer interface 374 for outputting information such as images or texts, graphs or charts to a printer 32 or the like. Incidentally, the input means 370 includes input devices such as a keyboard, mouse, tablet and the like.

Further, the enterprise evaluation device 30 is also provided with a recording medium mounting unit 378 for detachably mounting a recording medium 377, and a recording medium interface 379 (including the functions of a management-finance information acquisition means, official gazette acquisition means or output means) for recording and reading various types of information in and from the recording medium 377. Incidentally, the recording medium 377 is a detachable recording medium in a magnetic recording format or optical recording format as represented by semiconductors such as a memory card, MO, magnetic disk and so on.

Moreover, the enterprise evaluation device 30 is also provided with an information processing means 380 for controlling the overall enterprise evaluation device 30, and a memory 381 configured from a ROM recording programs to be executed by the information processing means 380 and various constants, or a RAM which is a recording means to become the working area upon the information processing means 380 executing processing.

Further, the information processing means 380 is able to realize the various functions of a management-finance information acquisition means, official gazette acquisition means, average period required for registration calculation means, average period before examination request calculation means, number-of-inventions acquisition means, patent application productivity calculation means, number-of-inventions-per-applicant acquisition means, publication in which an examination request period has passed acquisition means, estimated examination request ratio acquisition means, examination request productivity calculation means, cumulative number of patent applications acquisition means, cumulative number of patent registrations acquisition means, cumulative patent registration ratio calculation means, estimated registration ratio calculation means, patent acquisition productivity calculation means, display data generation means and output means. Incidentally, instead of the information processing means 380 performing all of the processing to be performed by the foregoing means, a plurality of dedicated processing devices may be provided so that the respective processing devices can share and execute such processing in order to achieve the objects of the present invention.

Moreover, the enterprise evaluation device 30 is also provided with a recording means 384 such as a hard disk recording various types of information; for example, various constants relating to the processing of the enterprise evaluation device 30, attribute information upon communicably connecting to a telecommunications device on a network, connection information such as a URL (Uniform Resource Locators), gateway information, DNS (Domain Name System), management-finance information relating to the management of the enterprise, technical documents relating to patents, market value information, threshold for determining the enterprise value and determination results of validity based on such threshold; recording means interface 385 (including the functions of a management-finance information acquisition means, official gazette acquisition means or output means) for reading information recorded in the recording means 384 and writing information to the recording means 384; and a calendar clock 390 for clocking the time.

The respective peripheral circuits of the information processing means 380, display interface 373, memory 381, recording means interface 385 and calendar clock 390 in the enterprise evaluation device 30 is connected to a bus 399, and the respective peripheral circuits can be controlled based on the processing program to be executed by the information processing means 380.

Incidentally, various databases of the management-finance information, technical documents and market value information may be stored in the recording means 384, provided by the storage medium 377 such as a CD-ROM, CD-RW, DVD or MO, or acquired from another telecommunications device (database 20 or the like) via the communication network 364.

Further, the enterprise evaluation device 30 can be realized by using various types of computers such as a personal computer or workstation. Moreover, computers may be connected via a network to share and implement the functions.

The management-finance information acquisition means of the transmission-reception means 365, recording means interface 385, recording medium interface 379 and information processing means 380 is capable of acquiring management-finance information in a period to be researched from a management-finance information database (database 20, recording means 384, recording medium 377 or the like) recording information showing the size of the enterprise to be researched or management-finance information such as the finance information of the enterprise.

In addition, the technical document acquisition means of the transmission-reception means 365, recording means interface 385, recording medium interface 379 and information processing means 380 is capable of acquiring technical documents in an enterprise to be researched, technical field to be researched or period to be researched from a technical document database (database 20, recording means 384, recording medium 377 or the like) recording technical documents relating to unexamined applications of patents or utility models which have been filed, or publications of registrations of patents or utility models which have been subject to registration and owned by the enterprise to be researched.

Further, the official gazette acquisition means is capable of acquiring publications of registrations such as publications of patent registrations, publications of examined patent applications, publications of examined utility model applications or publications of utility model registrations, or unexamined publications such as publications of unexamined patent applications, published Japanese translations of PCT international applications for patents, publications of unexamined utility model applications or published Japanese translations of PCT international applications for utility models from a technical document database (database 20, recording means 384, recording medium 377 or the like).

Moreover, the output means of the transmission-reception means 365, recording means interface 385, recording medium interface 379, printer interface 374 and information processing means 380 is capable of outputting various indexes such as the average period required for registration, average period before examination request, patent application productivity, examination request productivity or patent acquisition productivity to a display means, printing means, recording medium, or another telecommunications device via a communication line.

Further, the output means of the transmission-reception means 365, recording means interface 385, recording medium interface 379, printer interface 374 and information processing means 380 is capable of outputting display data for associating and displaying the patent application productivity and examination request productivity, display data for associating and displaying the patent application productivity and patent acquisition productivity, and display data for associating and displaying the examination request productivity and patent acquisition productivity to a display means, printing means, recording medium, or another telecommunications device via a communication line.

Moreover, the average period required for registration calculation means of the information processing means 380 and the like is capable of calculating a required registration period for individual applications by subtracting the filing date from the registration date indicated in the acquired publications of registrations, calculating an accumulated required registration period by counting the calculated required registration period for all patents subjected to the registration, and calculating an average period required for registration through dividing the accumulated required registration period by the total number of patents subjected to the registration.

Further, the average period required for registration calculation means of the information processing means 380 and the like is capable of calculating a required registration period for individual applications by subtracting the filing date from the registration date indicated in the acquired publications of registrations, calculating an accumulated required registration period by counting the calculated required registration period for all patents subjected to the registration, and calculating an average period required for registration through dividing the accumulated required registration period by the total number of patents subjected to the registration and the average number of days of one year or one month.

Moreover, the average period before examination request calculation means of the information processing means 380 and the like is capable of calculating a period before examination request for individual applications by subtracting the filing date from the date of examination request described in the acquired unexamined publications or publications of registrations, calculating an accumulated period before examination request by counting the calculated period before examination request for all patents requested for examination, and calculating an average period before examination request through dividing the accumulated period before examination request by the total number of patents requested for examination.

Further, the average period before examination request calculation means of the information processing means 380 and the like is capable of calculating a period before examination request for individual applications by subtracting the filing date from the date of examination request described in the acquired unexamined publications or publications of registrations, calculating an accumulated period before examination request by counting the calculated period before examination request for all patents requested for examination, and calculating an average period before examination request through dividing the accumulated period before examination request by the total number of patents requested for examination and the average number of days of one year or one month.

Moreover, the number-of-inventions acquisition means of the information processing means 380 and the like is capable of acquiring the number of patent applications or utility model applications or number of inventions such as the number of claims from the acquired unexamined publications or publications of registrations.

Moreover, the number-of-inventions-per-applicant acquisition means of the information processing means 380 and the like is capable of acquiring the number of patent applications or utility model applications or the number of claims from each of the acquired unexamined publications or publications of registrations, acquiring the number of applicants indicated in each of the acquired publications, and acquiring the number of inventions per unit of applicants through dividing the number of patent applications or utility model applications or the number of claims by the number of applicants.

Further, the number-of-inventions acquisition means of the information processing means 380 and the like is capable of acquiring the total number of inventions by counting the acquired number of inventions per unit of applicants for all of the acquired publications.

Moreover, the patent application productivity calculation means of the information processing means 380 and the like is capable of calculating the number of inventions per unit of R&D cost as the patent application productivity through dividing the acquired number of inventions by the R&D cost.

Moreover, the patent application productivity calculation means of the information processing means 380 and the like is capable of calculating the number of inventions per unit of R&D cost as the patent application productivity through dividing the acquired number of inventions by the R&D cost.

Further, the estimated examination request ratio acquisition means of the information processing means 380 and the like is capable of acquiring from a database the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications.

Moreover, the examination request productivity calculation means of the information processing means 380 and the like is capable of calculating the examination request productivity by multiplying the calculated patent application productivity with the estimated examination request ratio.

Further, the publication in which an examination request period has passed acquisition means of the information processing means 380 and the like is capable of acquiring from a database the unexamined publications or publications of registrations based on patent applications or utility model applications filed by the specified enterprise within a third specified period so that the examination request period pass before tabulation.

Further, the estimated examination request ratio acquisition means of the information processing means 380 and the like is capable of acquiring from a database the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications.

Moreover, the examination request productivity calculation means of the information processing means 380 and the like is capable of calculating the examination request productivity by multiplying the calculated patent application productivity with the estimated examination request ratio.

Moreover, the cumulative number of patent applications acquisition means of the information processing means 380 and the like is capable of acquiring, for each predetermined period, the cumulative number of patent applications filed by a specified enterprise within a specified period based on the acquired unexamined publications or publications of registrations.

Further, the cumulative number of patent registrations acquisition means of the information processing means 380 and the like is capable of acquiring, for each predetermined time, the cumulative number of patent registrations of patents subjected to registration by each predetermined time based on the acquired publications of registrations.

Moreover, the cumulative number of patent registrations acquisition means of the information processing means 380 and the like is capable of calculating, for each predetermined time, the cumulative patent registration ratio through dividing the acquired cumulative number of patent registrations by the cumulative number of patent applications.

Further, the estimated registration ratio calculation means of the information processing means 380 and the like is capable of calculating, for each predetermined time, the natural logarithm of the cumulative patent registration ratio and calculating the regression line or regression curve thereof, and calculating the future estimated registration ratio by substituting the calculated average period required for registration for the calculated regression line or regression curve.

Moreover, the patent acquisition productivity calculation means of the information processing means 380 and the like is capable of calculating the patent acquisition productivity by multiplying the calculated patent application productivity with the estimated registration ratio.

Further, the display data generation means of the information processing means 380 and the like is capable of creating display data for displaying the respective indexes of patent application productivity and examination request productivity, patent application productivity and patent acquisition productivity, and examination request productivity and patent acquisition productivity in a chart format or graph format.

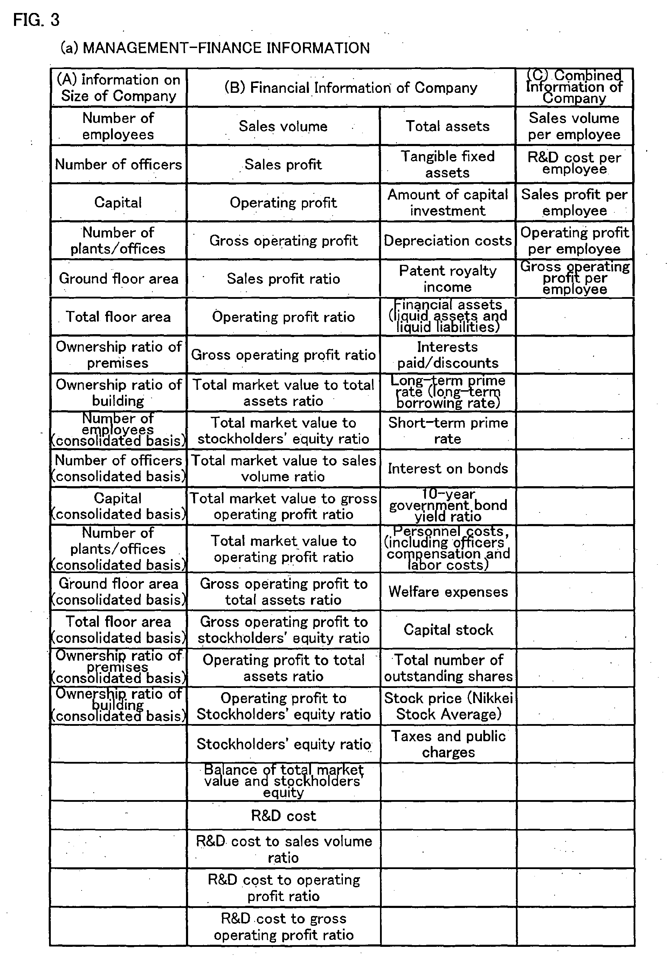

FIG. 3 is a chart representing an example of management-finance information recorded in the recording means of the database 20 or the like.

As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers and research institutes may be used.

Information showing the size of the company includes the number of employees, number of officers, capital, number of plants, number of offices, ground floor area, total floor area, ownership ratio of premises, ownership ratio of building, number of employees (consolidated basis), number of officers (consolidated basis), capital (consolidated basis), number of plants (consolidated basis), number of offices (consolidated basis), ground floor area (consolidated basis), total floor area (consolidated basis), ownership ratio of premises (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio, R&D cost to operating profit ratio or gross operating profit.

Moreover, finance information of the company includes total assets, tangible fixed assets, amount of capital investment, depreciation costs, patent royalty income, financial assets (liquid assets and liquid liabilities), interests paid, discounts, long-term prime rate (long-term borrowing rate), short-term prime rate, interest on bonds, 10-year government bond yield ratio, personnel costs (including officers' compensation and labor costs), welfare expenses, capital stock, total number of outstanding shares, stock price (Nikkei Stock Average) or taxes and public charges.

The combined information of the company includes the sales volume per employee, R&D cost per employee, sales profit per employee, operating profit per employee, gross operating profit per employee and so on.

The gross operating profit is now explained.

Pursuant to the revision of the accounting standards, as a general rule in Japan, R&D cost must be recorded entirely as expenses in the settlement of accounts after the term ending March 2000. Conventionally, there were numerous companies that did not disclose the breakdown of the R&D cost included in the manufacturing costs and general administrative expenses. Nevertheless, after the enforcement of these regulations, the amount of R&D cost pertaining to the calculation of profits and losses became clear. Thereupon, for the purpose of multilaterally analyzing the actual status of such R&D cost of the company, and index referred to as the "gross operating profit" has been developed.

This is an estimate of hypothetical profits (main business excluding research and development activities; that is, gross profit generated from the manufacture and sale activities) sought by adding the R&D cost to the operating profit. As a result of the R&D cost being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing estimate

**EP 1 686 516 A1**

is considered to provide a perspective to this problem.

This gross operating profit is an index that is positioned roughly between the sales profit and operating profit. By using the gross operating profit simultaneously with the sales profit and operating profit, it will be possible to grasp the profitability of the company from many angles.

The sales profit is the gross margin sought by subtracting the manufacturing cost from the sales volume. Nevertheless, some R&D cost are included in manufacturing costs, whereas others are included in general administrative expenses. Thus, strictly speaking, the gross operating profit cannot be called a profit index positioned between the sales profit and operating profit. The relationship of the gross operating profit and other profit indexes can be represented with the formula indicated below.

```
Gross operating profit

= (sales profit) + (R&D cost included in the manufacturing costs) - {(general administrative expenses) - (R&D cost

included in the general administrative expenses)}

= operating profit + R&D cost
```

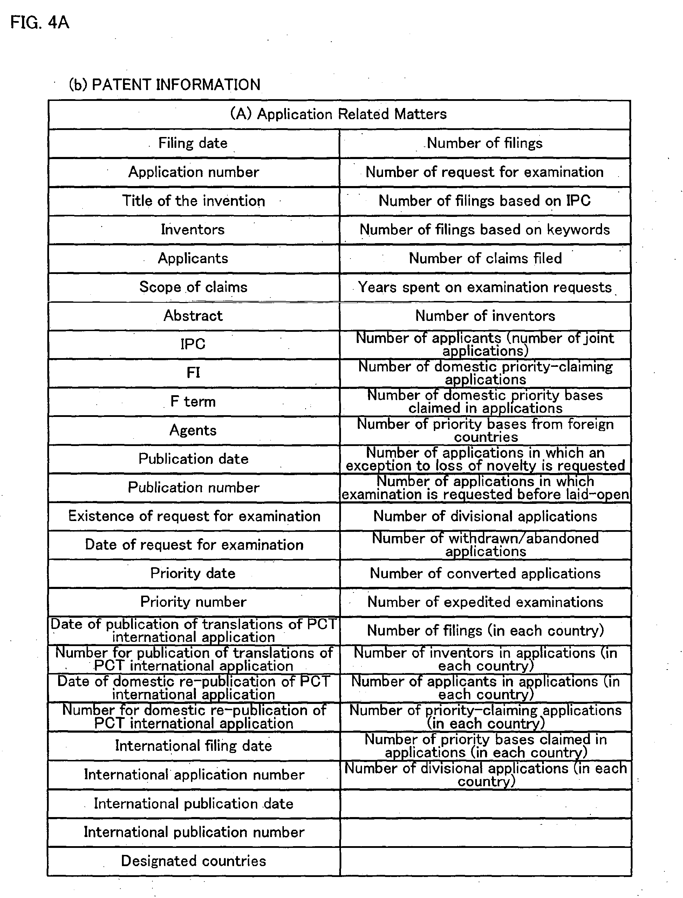

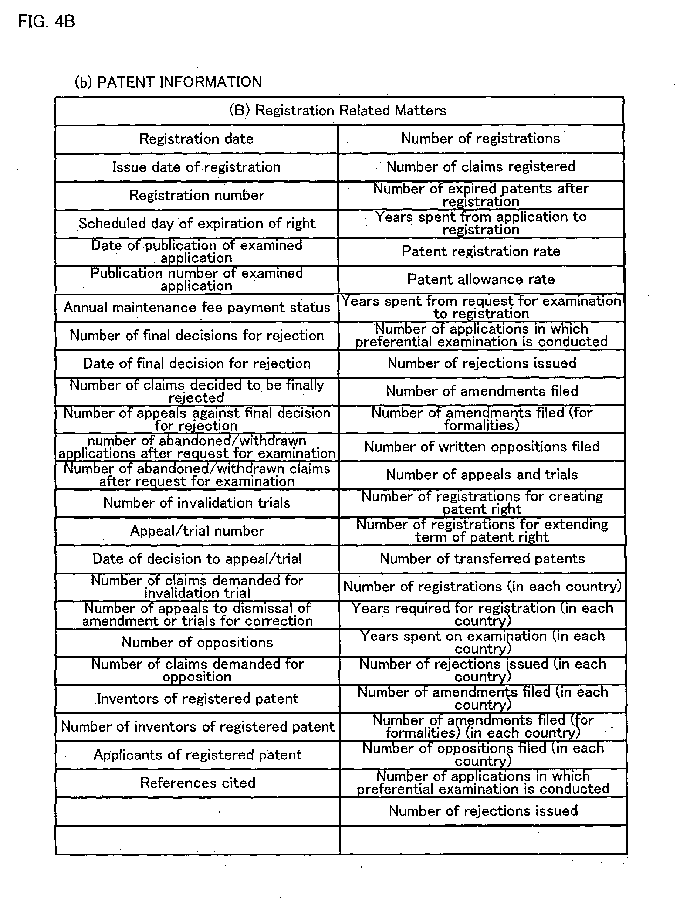

FIGS. 4A and 4B are diagrams showing an example of a technical document recorded in a recording means of the database 20 or the like.

As shown in FIGS. 4A and 4B, technical documents contain patent documents such as filing information and registration information of patents and utility models. As data of technical documents, for instance, the Industrial Property Digital Library database of the Japanese Patent Office, information relating to patents and utility models acquired from CD-ROM gazettes or other technical journals may be used.

Application information of the present invention includes, for instance, per enterprise, the following: the filing date, application number, title of the invention, inventors, applicants, scope of claims, abstract, IPC, FI, F Term, agents, publication date, publication number, existence of request for examination, date of request for examination, priority date, priority number, date of publication of translations of PCT international application, number for publication of translations of PCT international application, date of domestic re-publication of PCT international application, number for domestic re-publication of PCT international application, international filing date, international application number, international publication date, international publication number, designated country, number of filings, number of examinations requested, number of filings based on IPC, number of filings based on keywords, number of claims filed, years spent on examination requests, number of inventors, number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn/abandoned applications, number of converted applications, number of expedited examinations, number of filings in each foreign country, number of inventors in each foreign country, number of applicants in each foreign country, number of priority-claiming applications in each foreign country, and number of priority bases claimed in applications in each foreign country or number of divisional applications in each foreign country.

Further, registration information of the present invention includes, for example, per enterprise, the following: the registration date, issue date of registration, registration number; scheduled day of expiration of right, date of publication of examined application, publication number of examined application, annual maintenance fee payment status, number of final decisions for rejection, date of final decision for rejection, number of claims decided to be finally rejected, number of appeals against final decision for rejection, number of abandoned/withdrawn applications after request for examination, number of abandoned/withdrawn claims after request for examination, number of invalidation trials, appeal/trial number, date of decision to appeal/trial, number of claims demanded for invalidation trial, number of appeals to dismissals of amendment or trials for correction, number of oppositions, number of claims demanded for opposition, inventors of registered patent, number of inventors of registered patent, applicants of registered patent, references cited, number of registrations, number of claims registered, number of expired patents after registration, years spent from application to registration, patent registration rate, patent allowance rate, years spent from request for examination to registration, number of applications in which preferential examination is conducted, number of rejections issued, number of amendments filed, number of amendments filed for formalities, number of registrations for creating patent right, number of registrations for extending term of patent right, number of transferred patents, number of registrations in each country, years required for registration in each country, years spent on examination in each country, number of rejections issued in each country, number of amendments filed in each country, number of amendments filed for formalities in each country, number of oppositions filed in each country, number of applications in which preferential examination is conducted or number of rejections issued.

The respective indexes upon evaluating an enterprise based on the number of inventions are now explained.

Generally, it is possible to judge that an enterprise with a large number of inventions such as the number of patent applications or the number of claims contained in patent applications is allotting their budget to the development of new products, is active in product development toward the future, and is expected to expand its business or improve its profits in the future.

Industrial products in recent years are equipped with numerous functions for increasing the value as the product itself, and the technical fields required for product development are broadening in accordance with the function or performance of the product. Further, when designing the product by improving the function or performance in order to improve the competitive position, development costs thereof will also rise considerably, and a substantial amount of funding and personnel will also become required.

If an enterprise that is creating numerous technical ideas for the development of new products and filing patent applications has sufficient development funds, it is possible to judge that this enterprise is expected to expand its business or improve its profits in the future in light of the exclusive right upon obtaining the patent.

Further, investors and banks wish to invest in enterprises with a promising future, and students and mid-career engineers wish to be employed in an enterprise with ingenious technical strength.

The present invention provides several indexes that will become a criterion for investors, banks, engineers and others to search for enterprises with ingenious technical strength and a promising future among a plurality of enterprises. Incidentally, in the present invention, although explanation is given regarding enterprises that filed patent applications, indexes may also be calculated for patent applications filed by natural persons in addition to enterprises.

Further, there are many cases where a plurality of novel inventions are divided and claimed in a plurality of claims in a single patent application. Therefore, it is also possible to consider the number of claims of a patent application to be the number of inventions. Particularly in recent years, the number of claims included in a single patent application is of an increasing trend. Nevertheless, it has been statistically proven that the number of claims included in a single patent application have differing average values and trends depending on the technical field or business category, or per enterprise. Thus, if the trend analysis of patent applications of the respective enterprises, comparative assessment with other companies and analysis of technical strength are conducted simply with the number of applications, there may be some cases where this may cause a considerable misunderstanding. Due to the foregoing reasons, the patent application trend and technical trend of the respective companies in the embodiments of the present invention are captured from both aspects of the number of patent applications and the number of claims in a patent application.

Incidentally, in the foregoing example, although the number of patent applications and the number of claims in a patent application are used, the present invention is not limited thereto, and, as the number of inventions, the number of patent or utility model registrations, number of claims registered, number of examination requests, number of claims requested for examination, number of final decisions for registration, number of claims decided to be registered, number of final decisions for rejection, number of claims decided to be rejected, number of demands for trial, number of claims demanded for trial and so on may also be used according to the intended purpose.

Moreover, a value combining two or more number of inventions, for instance, (number of registrations/number of examination requests) may also be used according to the intended purpose.

Further, although a case where IPC sub-classes are used as the technical field of the invention was described in the foregoing example, technical information is not limited to IPC sub-classes, and the classifications of IPC sections, classes, sub-classes, main groups, sub groups, F terms, FI, facets, keywords contained in the patent documents may also be used according to the intended purpose.

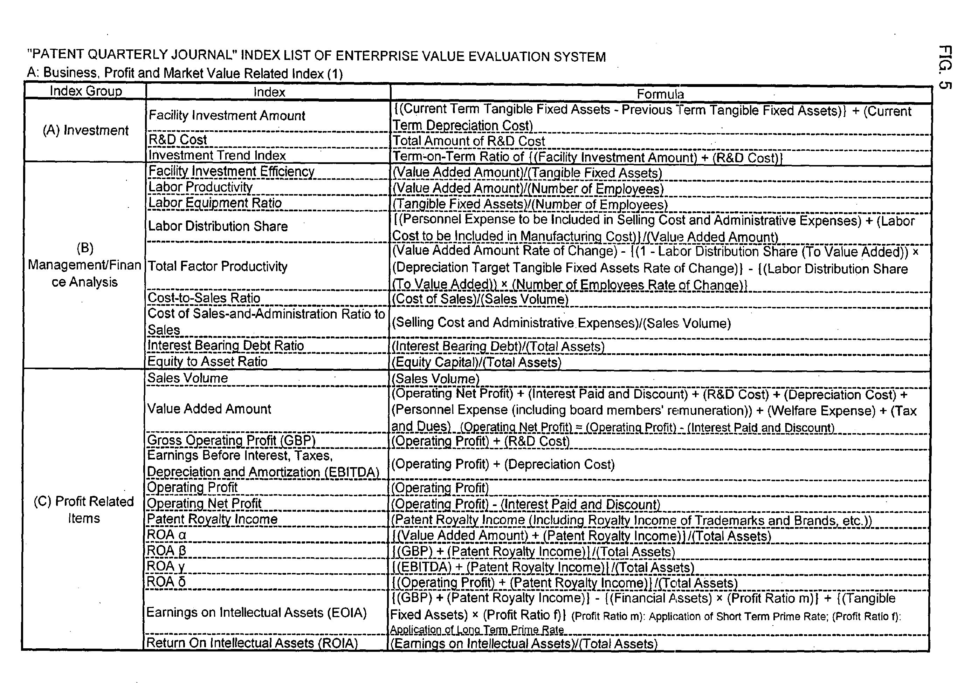

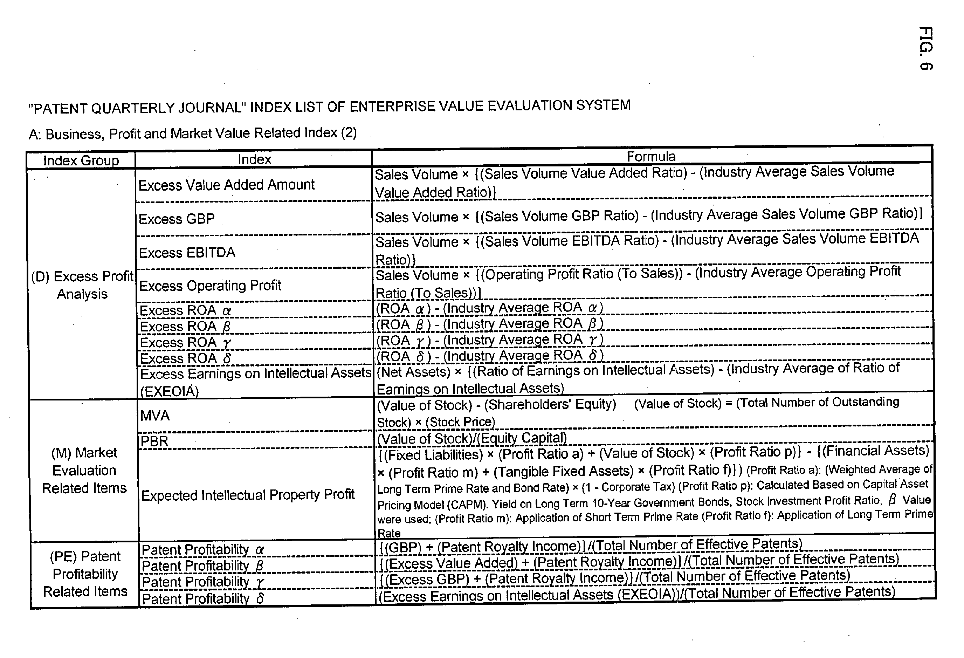

FIG. 5 and FIG. 6 are charts illustrating examples of the respective indexes of "business, profit, market value" calculated by the enterprise evaluation device and the calculating formula thereof.

As shown in FIG. 5 and FIG. 6, as the index groups, "(A) investment", "(B) management-finance analysis", "(C) profit related", "(D) excess profit analysis", "(M) market value related", and "(PE) patent profitability" are provided, and the names and outline of the respective indexes and the calculating formula thereof are indicated in each of these groups.

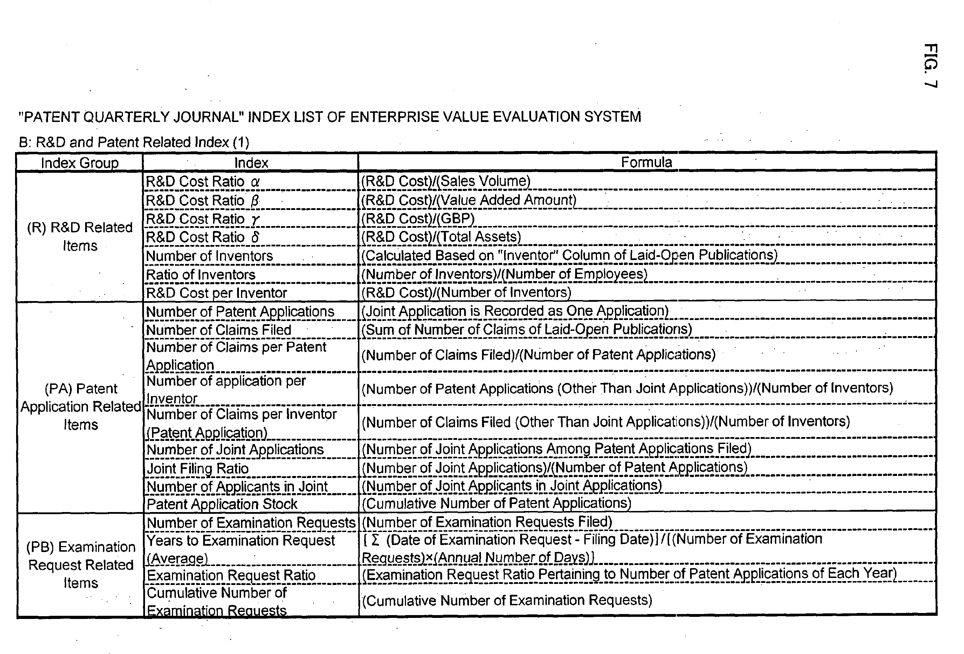

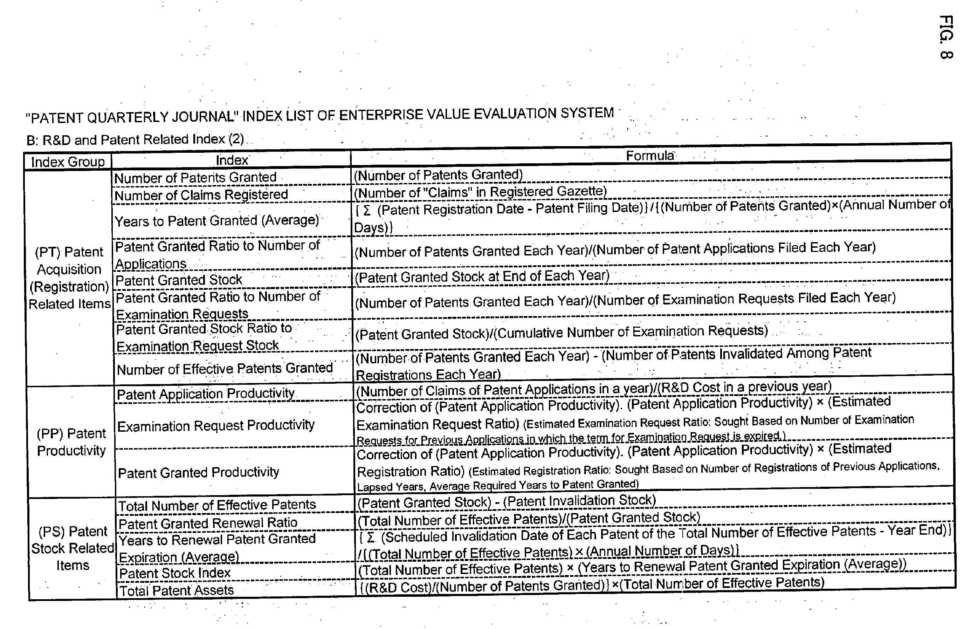

Further, FIG. 7 and FIG. 8 are charts illustrating examples of the index of "R&D, patent" calculated by the enterprise evaluation device.

As shown in FIG. 7 and FIG. 8, as the index groups, "(R) research and development related", "(PA) patent application related", "(PB) examination request related", "(PT) patent acquisition (registration) related", "(PP) patent productivity" and "(PS) patent stock related" are provided, and the names and outline of the respective indexes and the calculating formula thereof are indicated in each of these groups.

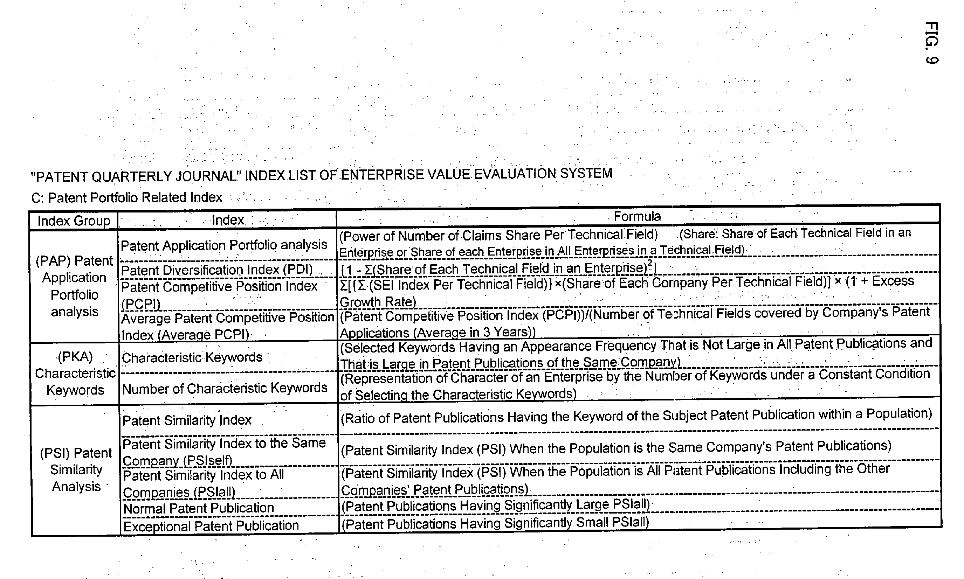

FIG. 9 is a chart illustrating an example of the "patent portfolio" index calculated by the enterprise evaluation device and the calculating formula thereof.

As shown in FIG. 9, as the index groups, "(PAP) patent portfolio analysis", "(PAK) characteristic keywords", and "(PSI) patent similarity ratio analysis" are provided, and the names and outline of the respective indexes and the calculating formula thereof are indicated in each of these groups.

Next, the respective indexes pertaining to the present invention are explained.

In the present invention, among the respective indexes shown in FIG. 8, the two broad classifications below and the respective indexes included in the lower hierarchy are explained. Further, abbreviation of the respective indexes is defined as "patent acquisition (registration) related index (PT)", "patent productivity index (PP)" and so on.

1. Patent acquisition (registration) related index (PT) (1.1) Number of patent registrations (number of patents granted; PTRD)

(1.2) Number of claims registered (PTCL)
(1.3) Average years required for registration (years to patent granted (average); PTMY)
(1.4) Average years before examination request (PBMY)
(1.5) Patent registration ratio (patent granted ratio to number of applications; PTRR)
(1.6) Cumulative number of patent registrations (patent granted stock; PTSP)
(1.7) Cumulative number of patent applications (patent application stock; PTSA)
(1.8) Cumulative patent registration ratio (patent granted stock ratio to application stock; PTSR)
(1.9) Patent allowance ratio (patent granted ratio to number of examination requests; PTER)
(1.10) Cumulative patent allowance ratio (patent granted stock ratio to examination request stock; PTSE)
(1.11) Number of effective patents (PTEF)
(1.12) Effective patent remaining ratio (PTEP)

2. Patent productivity index (PP)

(2.1) Patent application productivity (PPFI)
(2.2) Examination request productivity (PPEX)
(2.3) Estimated examination request ratio (PPAR)
(2.4) Patent acquisition productivity (patent granted productivity; PPPD)
(2.5) Estimated registration ratio (PPPR)

Among the respective indexes listed above, the definition of patent acquisition (registration) related index (PT) is explained below.

1. Patent acquisition (registration) related index (PT)

(1.1) Number of patent registrations (number of patents granted; PTRD) Number of patent registrations (PTRD) is an index representing the number of patents of a specified enterprise subjected to registration within a specified period, and may also be considered to be the number of inventions. The calculating formula thereof is shown below (Formula 1).

```
Number of patent registrations (PTRD)

= number of patents of a specified enterprise subjected to registration within a specified period …(Formula 1)
```

Provided,
"Within a specified period" shall mean within a designated period such as within the fiscal 1999, within the fiscal 2000, within the year 2001 (within 1 year), within a quarter and so on; and
"Number of patents" shall include the number of registered utility models in addition to the patents subjected to registration.

Further, number of patent registrations (PTRD) is obtained by acquiring and accumulating the publications of unexamined patent applications issued by the Patent Office. A joint application may be accumulated as one (1) application. However, it is also possible to accumulate a number obtained through dividing one (1) by the number of joint applicants.

An enterprise having a large value for the number of patent registrations (PTRD) in a specified period can be considered as an enterprise generally focusing on research and development.

Nevertheless, since patent applications may largely differ depending on the business category, an enterprise having a large value for the number of patent registrations (PTRD) within a specified period cannot necessary be judged as having strong development capability.

(1.2) Number of claims registered (PTCL) The number of claims registered (PTCL) is an index showing the total number of claims of patents of a specified enterprise subjected to registration within a specified period. The calculating formula thereof is shown below (Formula 2).

Number of claims registered (PTCL)

= total number of claims of patents of a specified enterprise subjected to registration within a specified period …(Formula 2)

Number of claims registered (PTCL) can be considered as the number of inventions included in the patents subjected to registration. Generally speaking, an enterprise showing a large value for this number of claims registered (PTCL) can be judged as creating numerous inventions, but the number of claims may differ depending on the business category.

Therefore, even though an enterprise has a small value for the number of claims registered (PTCL), it is not necessarily the case that such enterprise has a small number of inventions. Incidentally, although the number of patent applications decreased after the adoption of the multiple claim system, the number of claims is of a gradually increasing trend. From this perspective, instead of evaluating enterprises based on patent applications or number of registrations, there is a higher possibility of being able to grasp the accurate number of inventions by evaluating enterprises based on the number of claims filed or number of claims registered.

(1.3) Average years required for registration (years to patent granted (average); PTMY)

Average years required for registration (PTMY) is an index showing the average number of years from filing to registration for patents that were registered within a specified period in the name of a specified enterprise. The calculating formula thereof is shown below (Formula 3).

Average years required for registration (PTMY)

$= [\Sigma_{n=1}^{N}\{(\text{patent registration date}) - (\text{patent filing date})\}]$

$/\{(\text{number of patent registrations}) \times (\text{average number of days}$

$\text{in a year})\}$ …(Formula 3)

Provided,
n: Respective patents of a specified enterprise subjected to registration within a specified period
N: Total number of patents of a specified enterprise subjected to registration within a specified period
(= number of patent registrations (PTRD))

Patent applications not possessing much inventive step or which cannot expect much profit in terms of product strategy; that is, patent applications which were most likely filed for defensive purposes often request examination after the lapse of a reasonable period of time from the filing thereof in order to assess the trend of products. Meanwhile, strategic filings for obtaining patents ahead of time often request examination at a relatively early stage.

Therefore, the average years required for registration of the respective enterprises from filing to registration can be used to see whether this is reflecting that the patent applications of the respective enterprises are playing an important strategic role, or being filed for defensive purposes. Thus, patents that were acquired at an early stage can be considered as being important inventions of that enterprise.

And, with the present invention, as shown in (Formula 3) above, the official gazette acquisition means acquires from a database the publications of patent registrations subjected to registration among the patent applications filed by a specified enterprise within a specified period. Further, the average period required for registration calculation means calculates a required registration period for individual applications by subtracting the filing date from the registration date indicated in the acquired publications of registrations, calculating an accumulated required registration period by counting the calculated required registration period for all patents subjected to the registration, and calculating an average period required for registration through dividing the accumulated required registration period by the total number of patents subjected to the registration and the average number of days of one year or one month (average years required for registration (PTMY) is calculated here).

Further, upon calculating the average years required for registration (PTMY), in place of performing the calculation based on patent applications filed by a specified enterprise within a specified period, the average years required for registration (PTMY) may be calculated based on patent applications of a predetermined technical field filed by a specified enterprise within a specified period. Further, in place of calculating the average period required for registration through dividing the accumulated required registration period by the total number of patents subjected to the registration and average number of days of one year or one month, the average period required for registration may be calculated through dividing the accumulated required registration period only by the total number of patents subjected to the registration.

The average years required for registration (PTMY) can be calculated and displayed upon classification per technical area such as based on enterprises, based on workplaces, based on inventors, based on IPC and the like, and the user will be able to know which technical field the enterprise to be researched is laying emphasis, or which technical field the enterprise to be researched is defensively positioning the inventions. Incidentally, the index of average years required for registration (PTMY) does not necessarily indicate that an enterprise has superior technical development strength the smaller the value thereof, and, therefore, value of the average years required for registration (PTMY) being small does not have any significant meaning.

Moreover, for inventions that must be patented, it may take a long period of time for a patent to be granted as a result of trial proceedings and the like. Further, among the patents that are granted promptly, there are inventions with unequalled novelty, but these may include inventions that will not be of much use in terms of product strategy, and it is necessary to keep this in mind upon tabulation and judgment.

(1.4) Average years before examination request (PBMY)

Average years before examination request (PBMY) is an index showing the average number of years spent for patent applications of a specified enterprise requesting examination within a specified period from the filing thereof to such examination request. The calculating formula thereof is shown below (Formula 4).

$$\text{Average years before examination request (PBMY)}$$
$$= [\textstyle\sum_{n=1}^{N}\{(\text{examination request date}) - (\text{patent filing date})\}]$$
$$/\{(\text{number of examination requests}) \times (\text{average number of days in a year})\} \ldots(\text{Formula 4})$$

Provided,
m: Respective patent applications of a specified enterprise requesting examination within a specified period
M: Total number of patent applications of a specified enterprise requesting examination within a specified period

Upon calculating the average years before examination request (PBMY) based on products or based on IPC of the respective companies, it is often the case that patent applications of a strategically important technical field to be patented promptly are requested for examination at a relatively early stage.

Thus, with the present invention, as shown in (Formula 4) above, the official gazette acquisition means acquires from a database the unexamined publications requested for examination or publications of patent registrations subjected to registration among the patent applications filed by a specified enterprise within a specified period. And, the average period before examination request calculation means calculates a period before examination request for individual applications by subtracting the filing date from the date of examination request described in the acquired unexamined publications or publications of registrations, calculating an accumulated period before examination request by counting the calculated period before examination request for all patents requested for examination, and calculating an average period before examination request through dividing the accumulated period before examination request by the total number of patents requested for examination and the average number of days of one year or one month (average years before examination request (PBMY) is calculated here).

Further, upon calculating the average years before examination request (PBMY), in place of performing the calculation based on the patent applications filed by a specified enterprise within a specified period, the average years required for registration (PTMY) may be calculated based on the patent applications of a predetermined technical field filed by a specified enterprise within a specified period. Moreover, in place of calculating the average years before examination request through dividing the accumulated period before examination request by the total number of patents requesting examination and average number of days of one year or one month, the average period before examination request may be calculated through dividing the accumulated period before examination request by only the total number of patents requesting examination.

The average period before examination request (PTMY) can be calculated and displayed upon classification per technical area such as based on enterprises, based on workplaces, based on inventors, based on IPC and the like, and the user will be able to know which technical field the enterprise to be researched is laying emphasis, or which technical field the enterprise to be researched is defensively positioning the inventions.

(1.5) Patent registration ratio (patent granted ratio to number of applications; PTRR)

Patent registration ratio (PTRR) is an index showing the ratio of number of patent registrations subjected to registration among the patent applications of a specified enterprise filed within a specified period. The calculating formula thereof is shown below (Formula 5).

```
Patent registration ratio (PTRR)

= (number of patent registrations subjected to registration among the patent applications of a specified enterprise filed within a specified period) / (number of patent applications filed within the specified period) …(Formula 5)
```

According to the patent registration ratio defined in (Formula 5) above, among the number of patent applications filed within the respective specified periods, the number of patents subjected to registration will change with the course of time. Here, the initial registrations are counted, and consideration is not given to the extinguishment of patents based on decision for cancellation due to opposition or invalidation decision due to invalidation trials. Thus, the patent registration ratio will always increase each year, and the patents that have completed the registration will be converged into a fixed value.

However, the patent registration ratio after the lapse of the end of the examination request period and the period required for examination will become a maximum value, and will not increase thereafter. It is possible to judge that enterprises showing a relatively large value for the patent registration ratio are making examination requests at an extremely early stage, and are strategically and actively acquiring patents.

(1.6) Cumulative number of patent registrations (patent granted stock; PTSP)

Cumulative number of patent registrations (PTSP) is an index showing cumulative number of patent registrations subjected to registration by a predetermined time among the patent applications filed by a specified enterprise within a specified period. The calculating formula thereof is shown below (Formula 6).

Cumulative number of patent registrations (PTSP)

= cumulative number of patent registrations subjected to

registration by a predetermined time among the patent applications filed by a specified enterprise within a

specified period ...(Formula 6)

Provided,
"Specified period" shows a period such as from January 1, 1994 to December 31, 1996
"Predetermined time" shows the time such as the date of tabulation, the last day of the year 1999, the last day of the year 2000 or the last day of the year 2001
Generally, cumulative number of patent registrations (PTSP) includes patents that lapsed due to the expiration of its term. However, patent rights may be subtracted based on those that were extinguished as a result of decision for cancellation due to opposition or invalidation decision due to invalidation trials, or patent rights may be subtracted based on those that were extinguished due to abandonment, withdrawal or rejection. Further, the number of patent registrations could be increased when subjected to registration as a patent as a result of filing an appeal against the decision of rejection, but this is omitted here. It will be possible to judge that enterprises having a large value for the number of patent registrations (PTSP) are promptly making examination requests for patent applications and have acquired numerous patents.
In the embodiment of the present invention, upon counting the cumulative number of patent registrations (PTSP), the patent applications filed in 1994 onward up to a predetermined time when publications and registrations are available in the Japanese Patent Office's CD-ROM gazettes were counted regarding the patents subjected to registration. If the data of patent publications and registrations can be obtained, these may be counted from an older year. Further, this is not limited to 1994 onward, and the respective indexes may be calculated by counting the data from a new year such as 2000 onward. When the cumulative number of patent registrations (PTSP) is counted from a recent year as described above, since a predetermined period will be required from the filing of patent applications to the allowance thereof, there are cases where the number of patent registrations (PTRD) may be calculated as a greater value.
(1.7) Cumulative number of patent applications (patent application stock; PTSA)

Cumulative number of patent applications (PTSA) is an index showing the cumulative number of patent applications filed by a specified enterprise within a specified period. The calculating formula thereof is shown below (Formula 7).

Cumulative number of patent applications (PTSA)

= cumulative number of patent applications filed by a specified enterprise within a specified period ...(Formula 7)

(1.8) Cumulative patent registration ratio (patent granted stock ratio to application stock; PTSR)

Cumulative patent registration ratio (PTSR) is an index showing the ratio of the cumulative number of patent applications (PTSA) and cumulative number of patent registrations. The calculating formula thereof is shown below (Formula 8).

```
Cumulative patent registration ratio (PTSR)

= (Cumulative number of patent registrations (PTSP))

 / (Cumulative number of patent applications (PTSA)) ...(Formula

8)
```

In the present embodiment, cumulative patent registration ratio (PTSR) and cumulative number of patent applications (PTSA) are calculated by counting the applications filed in 1994 onward when publications and registrations are available in the Japanese Patent Office's CD-ROM gazettes. If the data of patent publications and registrations can be obtained, these may be counted from an older year. Further, this is not limited to 1994 onward, and the respective indexes may be calculated by counting the data from a new year such as 2000 onward.
(1.9) Patent allowance ratio (patent granted ratio to number of examination requests; PTER)

Patent allowance ratio (PTER) is an index showing the ratio of the number of examination requests made by a specified enterprise within a specified period (regardless of the timing of filing) and the number of patent registrations subjected to registration. The calculating formula thereof is shown below (Formula 9).

```
Patent allowance ratio (PTER)

= (number of patent registrations subjected to registration among the number of examination requests made by a specified enterprise within a specified period) / (number of examination

requests made within a specified period) ...(Formula 9)
```

Since this is a patent allowance ratio of patent applications that requested examination within a specified period (within each fiscal year, for instance), the patent allowance ratio (PTER) within a specified period will generally increase with the course of time. Nevertheless, after the lapse of the period required for examination, the patent allowance ratio (PTER) regarding the applications for that year will be converged and become a maximum value, and will not increase thereafter. Upon calculating the patent allowance ratio, patent rights may be subtracted based those that were extinguished as a result of the decision for cancellation due to opposition or invalidation decision due to invalidation trials from the numerator.
The value of the patent allowance ratio (PTER) will change each fiscal year as described above. The period required for examination will largely differ based on the technical field or subject matter of the invention, examination process and so on of the respective inventions, but the period from examination request to the first action is generally said to be roughly 2 years. Therefore, when assuming that a decision will be rendered within 3 years from the examination request, among the patent allowance ratio relating to the examination request of 4 years from 1999 to 2002 shown in the present embodiment, the patent allowance ratio pertaining to the examination requests made in 1999 are presumed to be near a maximum value. Further, the patent allowance ratio relating to the examination requests made in 2002 is presumed to increase up until 2005 to 2006. Therefore, when 2004 is set as the deadline for acquiring publication data, it is possible to consider that enterprises having a relatively large patent allowance ratio of patent applications requested for examination in 1999 are enterprises having a high probability of obtaining patents on the patent applications that requested examination.

(1.10) Cumulative patent allowance ratio (patent granted stock ratio to examination request stock; PTSE)

Cumulative patent allowance ratio (PTSE) is an index showing the ratio of the cumulative patent registration ratio and cumulative number of examination requests. The calculating formula thereof is shown below (Formula 10).

```
Cumulative patent allowance ratio (PTSE)

= (cumulative number of patent registrations)

  / (cumulative number of examination requests) ...(Formula 10)
```

Cumulative patent allowance ratio (PTSE) is an index showing the ratio of how many patents that requested examination were granted. Therefore, the cumulative patent allowance ratio (PTSE) will increase with the course of time.

The index of cumulative patent allowance ratio (PTSE) is also calculated by counting the patent applications filed in 1994 onward up to a predetermined time when publications and registrations are available in the Japanese Patent Office's CD-ROM gazettes, and the cumulative number of examination requests from 1997 onward having sufficient statistical data are calculated as the cumulative patent allowance ratio (PTSE) for each predetermined time such as at the end of each business year. If the data of patent publications and registrations of older years can be obtained, these may be counted from an older year. Further, this is not limited to 1994 onward, and the respective indexes may be calculated by counting the data from a new year such as 2000 onward.

(1.11) Number of effective patents (PTEF)

Number of effective patents (PTEF) is an index showing the number of effective patents excluding the patents that lapsed within a specified period among the number of patents (number of patent registrations (PTRD)) of a specified enterprise subjected to registration within a specified period. The calculating formula thereof is shown below (Formula 11).

```
Number of effective patents (PTEF)

= (number of patent registrations (PTRD)) - (number of patents that lapsed within a specified period) ...(Formula 11)
```

Number of effective patents (PTEF), for example, is an index showing the ratio of patents existing at the nearest term end among the patents registered in the respective years. Generally speaking, since patent rights will extinguish with the course of time, the number of effective patents (PTEF) tend to decrease within the respective specified periods.

By calculating and comparing the number of effective patents (PTEF) based on each enterprise and each business year, it will be possible to guess the technical strength protected by patents of the respective enterprises. Needless to say, it will be possible to judge that enterprises with many patents have strong technical strength. Nevertheless, since the index of number of effective patents (PTEF) does not give consideration to the subject matter or effectiveness of the patented invention, it is not possible to judge whether the patented invention is an extremely strong patent that will generate enormous profits to the company. Therefore, although an enterprise having a high numerical value for the number of effective patents (PTEF) cannot necessarily be judged as a quality company, this can be sufficiently used as one indication of enterprise evaluation under common conditions.

(1.12) Effective patent remaining ratio (PTEP)

Effective patent remaining ratio (PTEP) is an index showing the ratio of how many effective patents exist among the patents of a specified enterprise subjected to registration within a specified period. The calculating formula thereof is shown below (Formula 12).

$$\text{Effective patent remaining ratio (PTEP)}$$

$$= \text{(number of effective patents (PTEF))}$$

$$/ \text{(number of patent registrations (PTRD))} \dots \text{(Formula 12)}$$

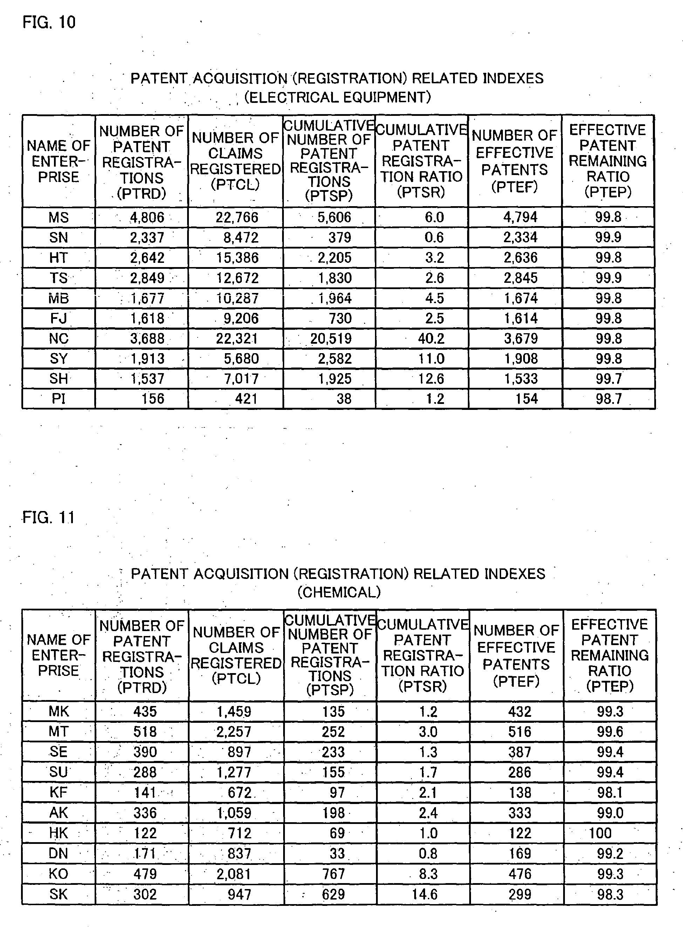

FIG. 10 and FIG. 11 show display examples of the patent acquisition (registration) related index according to the present invention.
FIG. 10 is a chart showing a display example of a patent acquisition (registration) related index in the electrical equipment industry, and FIG. 11 is a chart showing a display example of a patent acquisition (registration) related index in the chemical industry.

As shown in FIG. 10 and FIG. 11, ten companies in the electrical equipment industry and ten companies in the chemical industry were selected, the "number of patent registrations (PTRD)", "number of claims registered (PTCL)", "cumulative number of patent registrations (PTSP)", "cumulative patent registration ratio (PTSR)", "number of effective patents (PTEF)", and "effective patent remaining ratio (PTEP)" within a specified period (a certain year) are indicated in a comparable manner.

In the calculation example shown in FIG. 10 and FIG. 11, the cumulative number of patent registrations (PTSP) is obtained by calculating the cumulative number of patents subjected to registration by the end of each business year regarding patent applications filed in 1994 onward when patent publications and registrations are available in the Japanese Patent Office's CD-ROM publications. Therefore, there may be cases where this is of a smaller value in comparison to the number of patent registrations (PTRD), which is an index showing the number of patents of a specified enterprise filed before 1994 and subjected to registration within that year (within a specified period).

Incidentally, as described above, when the cumulative number of patent registrations (PTSP) is calculated by counting the patent applications filed in 1994 onward, a predetermined period will be required from the filing of patent applications up to the allowance thereof. Thus, it will be possible to judge that an enterprise having a large value for the number of patent registrations (PTRD) promptly makes examination requests for patent applications and has acquired numerous patent rights, and that the number of years required for registration is small.

Cumulative patent registration ratio (PTSR) is a percentage indication obtained through dividing the cumulative number of patents subjected to registration on or before the end of each business year regarding patents filed in 1994 onward by the cumulative number of patent applications (PTSA) filed in 1994 onward.

As shown in FIG. 10 and FIG. 11, the calculated values of the respective indexes of "number of patent registrations (PTRD)", "number of claims registered (PTCL)", "cumulative number of patent registrations (PTSP)", and "number of effective patents (PTEF)" in the electrical equipment industry are represented as values that are roughly one digit greater when compared to the respective indexes calculated with respect to the chemical industry. As a result, it is possible to judge that the electrical equipment industry has a more severe competition of patents in comparison to the chemical industry.

Particularly as shown in FIG. 10, the indexes of "number of patent registrations (PTRD)" and "number of claims registered (PTCL)" of Company MS and Company NC in the electrical equipment industry are significantly larger in comparison to the other companies. Therefore, it is possible to presume that these companies devised numerous inventions, are active in research and development, and have a strong competitive position regarding technology.

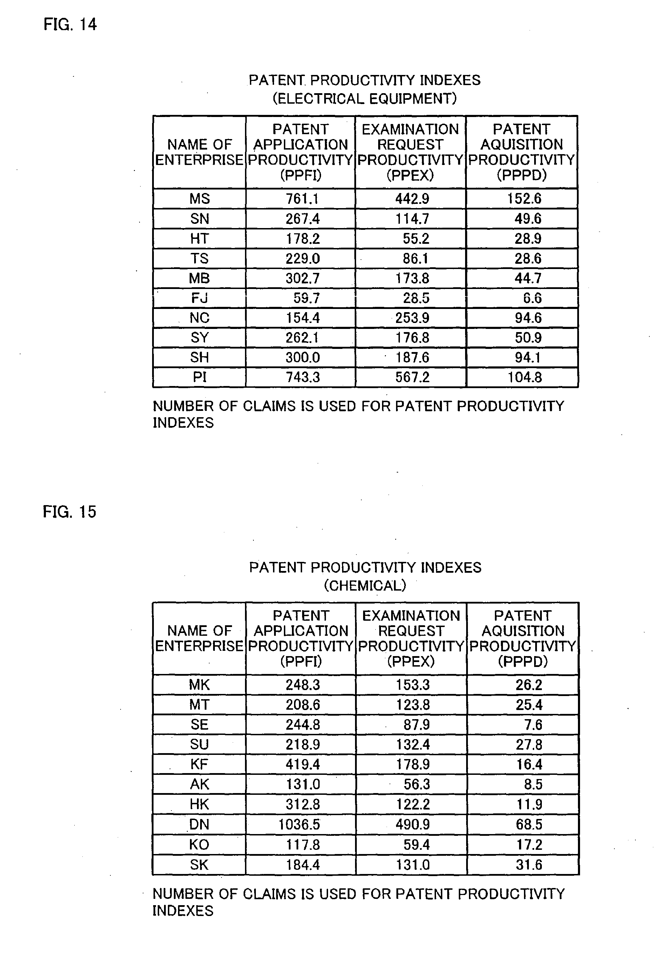

Meanwhile, in the case of Company PI, although the indexes of number of patent registrations (PTRD) and cumulative number of patent registrations (PTSP) show a small value, the indexes of patent application productivity (PPFI) and patent acquisition productivity (PPPD) described later show a high value (refer to FIG. 14). Therefore, just because the number of patent registrations (PTRD) or number of claims registered (PTCL) is small, this does not necessarily mean that the evaluation of patents owned by that company will be inferior, and it is necessary to compare and review several indexes according to the purpose of research, size of the enterprise to be researched, or category of business.

Further, as shown in FIG. 10 and FIG. 11, most enterprises show a value of 99% or greater as the index value of effective patent remaining ratio (PTEP) in both the electrical equipment industry and chemical industry. From this, it is evident that the once acquired patents are hardly abandoned or extinguished in the same business year.

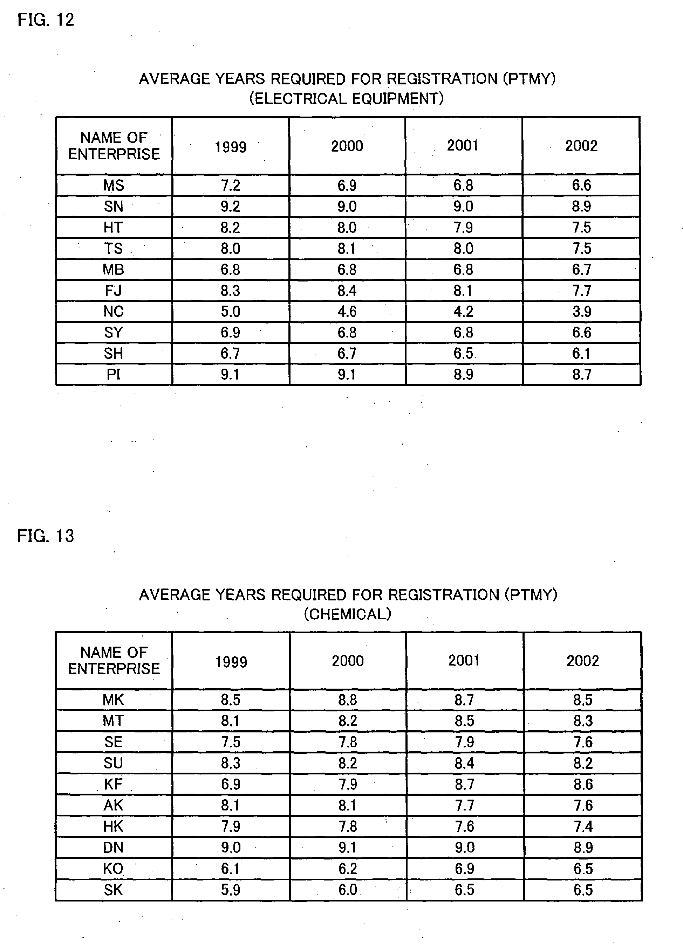

FIG. 12 is a chart denoting the average years required for registration (PTMY) per enterprise in the electrical equipment industry based on the calculation of a four-year period from 1994. Further, FIG. 13 is a chart similarly denoting the average years required for registration (PTMY) per enterprise in the chemical industry.

As shown in FIG. 12, in the electrical equipment industry, Company NC is ranked 1st in terms of the shortest average years required for registration (PTMY) in each year. The average years required for registration (PTMY) of Company NC in 2002 is a short period at 4 years or less, and it is possible to assume that examination requests are made simultaneously with the filing, or expedited examination requests are being made. In the case of Company NC, it is possible to see the enterprise's unique attitude of actively acquiring patents for important inventions filed as patent applications.

Meanwhile, in the case of Company SN and Company PI, the numerical value of the average years required for registration (PTMY) is calculated to be roughly 9 years. From this, it is possible to presume that these companies wait for the technology or product to mature, carefully review the invention and its effectiveness, and then request examination for acquiring a patent. As shown in FIG. 12, in the comparison of the value of the average years required for registration (PTMY) between Company NC and Company SN or Company PI, a difference of 5 years can be seen as the average period from the filing of patent applications to the registration thereof. From this, it is possible to predict that the importance of inventions and expectations in inventions differ greatly depending on the enterprise.

As shown in FIG. 13, although a significant difference cannot be seen in the chemical industry, the value of the average years required for registration (PTMY) is roughly 6 years for smaller values and roughly 9 years at latest for greater values, and it is possible to judge that most companies are roughly doing what the other companies are doing.

By comparing the values of the average years required for registration (PTMY) shown in FIG. 12 and FIG. 13, it is possible to see that a fierce battle in technical development is underway in the electrical equipment industry, but the situation is not as severe in the chemical industry.

Further, by calculating and comparing the values of the average years required for registration (PTMY) in the oil/rubber industry, ceramic industry, steel/non-steel/metal product industry, machinery/shipbuilding industry, automobile/transport equipment industry, precision instrument industry and other manufacturing industries, it will be possible to read the characteristics in each industry, or the characteristics of the respective enterprises in such predetermined industry, and this information can be utilized in judging the characteristics of the industry or enterprise value.

The definition of the patent productivity index (PP) is explained below.

### 2. Patent productivity index (PP)

Patent productivity index (PP) is an index for judging the productivity of patented inventions created based on R&D cost.

Results of patent applications and utility model applications may be considered as a part of the injection of R&D cost. Since the use of R&D cost is diversified, it cannot be said that patent applications and utility model applications fully represent the results of the injected R&D cost. Nevertheless, this information can be used as an index for measuring the efficiency of research and development being conducted by the enterprise.

### (2.1) Patent application productivity (PPFI)

Patent application productivity (PPFI) is an index representing the number of claims filed per unit of R&D cost of a specified enterprise. The calculating formula thereof is shown below (Formula 13).

```
Patent application productivity (PPFI)

= (number of claims in patent applications filed by a specified enterprise within a specified period (PACL) / (R&D cost within a specified previous period (RDE)) ...(Formula 13)
```

In the present invention, as shown in (Formula 13) above, the official gazette acquisition means acquires from a database the unexamined publications or unexamined publications of patent applications filed by a specified enterprise within a first specified period. And, the number-of-inventions acquisition means acquires the number of patent applications or number of inventions such as the number of claims from the acquired unexamined publications or publications of registrations, the management-finance information acquisition means acquires the R&D cost within a second specified period of a specified company from a management-finance database recording management-finance information of the enterprise, and the number of inventions per unit of R&D cost is calculated as the patent application productivity (PPFI) through dividing the acquired number of inventions by the R&D cost. Incidentally, in the embodiment of the present invention, although a case is explained regarding patent applications, the patent application productivity (PPFI) can similarly be calculated for utility model applications.

Further, upon calculating the patent application productivity (PPFI), in place of performing the calculation based on patent applications filed by a specified enterprise within a first specified period, the patent application productivity (PPFI) may be calculated based on patent applications in a predetermined technical field filed by a specified enterprise within a first specified period.

Further, in the present invention, the patent application productivity (PPFI) is calculated by using applications filed within the first specified period as the patent publications to be counted, and the value within the second specified period (before the first specified period) as the R&D cost.

For instance, the patent application productivity (PPFI) of an enterprise with its business year ending in March is calculated as follows.

```
Patent application productivity (PPFI)

= (number of claims filed (PACL) in the year 2000 (Jan. to Dec.

2000)) / (R&D cost in the fiscal year 1999 (April 1999 to

March 2000)) ...(Formula 14)
```

Provided,

- When a patent application is a joint application, a value obtained through dividing the number of claims by the number of joint applicants may be used as the number of claims filed (PACL).
- The number of patent applications may be used as the number of claims filed (PACL).
- As the number of claims filed (PACL), the number of claims filed in an accounting year may be used in addition to the number of claims filed for the relevant year.
- As the R&D cost (RDE), "research and development injection stock" or "total amount of R&D cost" may be used as the retroactive accumulation of the R&D cost for the past several years.

In the foregoing embodiment, the patent application productivity (PPFI) was calculated using the R&D cost (RDE) of the previous year (within a second specified period) of patent applications that were filed by a specified enterprise within a first specified period. This is a result of the present inventors calculating the patent application productivity (PPFI) of the respective enterprises and analyzing such enterprises, where they discovered that the highest coefficient of correlation with changes in the R&D cost (RDE) is the number of claims filed (PACL) in the following year. Nevertheless, depending on the contents of comparison, this may be sought by comparison with the R&D cost (RDE) of the current year, or the ratio in comparison to the previous year.

The larger the value of the patent application productivity (PPFI) calculated above, it could be said that the number of claims filed (PACL) or the productivity of the number of inventions is high in research and development. Further, in order to calculate highly reliable patent application productivity (PPFI), in the case of joint applications, the patent application productivity (PPFI) may be calculated by acquiring the number of inventions per unit of applicants and multiplying this with all acquired publications.

In such a case, foremost, the official gazette acquisition means acquires from a database unexamined publications or publications of registrations based on patent applications or utility model applications filed by a specified enterprise within a first specified period. Then, number-of-inventions-per-applicant acquisition means acquires the number of patent applications or utility model applications or the number of claims from each of the acquired unexamined publications or publications of registrations, acquires the number of applicants indicated in each of the acquired publications, and acquires the number of inventions per unit of applicants through dividing the number of patent applications or utility model applications or the number of claims by the number of applicants. Further, the number-of-inventions acquisition means acquires the total number of inventions by counting the acquired number of inventions per unit of applicants for all of the acquired publications. Moreover, management-finance information acquisition means acquires R&D cost in a specified enterprise within a second specified period from a management-finance database storing management-finance information of enterprises. Then, the patent application productivity calculation means calculates the number of inventions per unit of R&D cost as the patent application productivity through dividing the acquired number of inventions by the R&D cost.

Incidentally, with respect' to the number of claims filed (PACL) per R&D cost (RDE), care must be given in that the R&D cost (RDE) required for the research and development and the number of claims filed (PACL) will differ significantly depending on the technical field. Thus, when comparing and analyzing the patent application productivity (PPFI) among companies in the same industry, or when using this for purposes other than analyzing the differences among industries, this may cause a serious misunderstanding.

In (Formula 13) above, although the number of claims filed (PACL) was used as the numerator upon calculating the patent application productivity (PPFI), the patent application productivity may also be calculated based on the number of patent applications or number of inventions. Further, although a value of the current year is used as the number of claims filed (PACL) or number of inventions, the patent application productivity may be calculated with a value matching the accounting year.

Further, with respect to the R&D cost (RDE) also, ideally, it would be preferable to use a "research and development injection stock" value, which is an accumulation of the research and development going back several years. However, since it was from March 2000 that, as a general rule, the "total amount of R&D cost" needed to be entirely recorded as administrative expenses, and disclosed in the explanatory notes in the income statement, in the present embodiment, from the perspective of fairness and reliability of analyzed data, the "total amount of R&D cost" from 1999 onward is used.

(2.2) Examination request productivity (PPEX)

Examination request productivity (PPEX) is an index for multiplying the patent application productivity (PPFI) with the estimated examination request ratio (PPAR) and correcting the same. The calculating formula thereof is shown below (Formula 15).

```
Examination request productivity (PPEX)

= (patent application productivity (PPFI)) × (estimated

examination request ratio (PPAR)) …(Formula 15)
```

Examination of a patent application is conducted only after an examination request is made for such patent application, and the patent application will be granted a patent when the Examiner cannot discover a reason for refusing the application. Thus, in many cases, an examination request is not made for applications that lost significance or purpose of acquiring a patent after the filing thereof. Therefore, it can be said that the patent productivity (PPFI) based on the number of patent applications and number of claims filed (PACL) is not reflecting the research and development efficiency in its true meaning, and the present inventors therefore considered that it is necessary to calculate the productivity by correcting it with an estimated examination request ratio (PPAR).

(2.3) Estimated examination request ratio (PPAR)

In the present invention, the estimated examination request ratio (PPAR) is calculated as follows:

The publication in which an examination request period has passed acquisition means acquires the unexamined publications or publications of registrations based on patent applications or utility model applications filed by a specified enterprise within a third specified period so that the examination request period pass before tabulation. Next, the estimated examination request ratio acquisition means acquires the number of patent applications and the number of examination requests made in the applications from the unexamined publications or publications of registrations based on patent applications or utility model applications filed within the third specified period, and calculates the estimated examination request ratio (PPAR) through dividing the acquired number of examination requests by the acquired number of patent applications.

In this embodiment of the present invention, upon calculating the estimated examination request ratio (PPAR), the number of examination requests is counted per year using the unexamined publications of patent applications filed by the enterprise to be researched within a total of 3 years (corresponds to the third specified period) of 1994, 1995 and 1996 that are more than 7 years (the examination request period) before the time of tabulation (2003), and the examination request ratio of the 7th year is calculated to be the estimated examination request ratio (PPAR) of such enterprise.

The reason the number of patent applications of 3 years (within a third specified period) after 1994 was used is to reduce the error arising depending on the year, and the third specified period is not limited to 3 years as described above. Further, the examination request ratio for only the current year may be used, or the examination request ratio for only a certain year may also be used.

Incidentally, upon calculating the estimated examination request ratio (PPAR), the reason the cumulative examination request ratio of the 7th year was used is based on the system that requires the applicant to request examination within 7 years (within 3 years from October 1, 2001) from the filing of patent applications.

(2.4) Patent acquisition productivity (patent granted productivity; PPPD)

Patent acquisition productivity (PPPD) is an index for correcting the patent application productivity (PPFI) with the estimated registration ratio (PPPR). The calculating formula thereof is shown below (Formula 16).

```
Patent acquisition productivity (PPPD)

= (patent application productivity (PPFI)) × (estimated

registration ratio (PPPR)) …(Formula 16)
```

Estimated registration ratio (PPPR) is an estimated ratio of the number of patents to be ultimately acquired. The patent acquisition productivity (PPPD) is calculated by correcting the patent application productivity (PPFI) with this estimated registration ratio (PPPR). Upon calculating the estimated registration ratio (PPPR), it would be preferable to use a performance value of past patent applications of the respective enterprises being registered as patents. The patent acquisition productivity (PPPD) calculated like this is considered to show the relationship of research and development and patent applications in the proper sense. When calculating the patent acquisition productivity (PPPD) of the respective enterprises, even if an enterprise is filing the same number of patent applications each year, the values of the calculated patent acquisition productivity (PPPD) may differ considerably. The estimated registration ratio (PPPR) is calculated as follows.

(2.5) Estimated registration ratio (PPPR)

The estimated registration ratio (PPPR) is calculated by seeking the cumulative registration ratio (%) of performance from all patent applications regarding how the subsequent number of patent registrations visually increases in comparison to the number of patent applications, converting this cumulative registration ratio (%) into a natural logarithm and plotting it on a Y axis, and plotting the years elapsed on an X axis. The regression line of this distribution is sought, the value of the average years required for registration of the enterprise is sought in the X axis, the value of the Y axis on the corresponding regression line is read, and the value of this Y axis is returned from a natural logarithm to a normal natural number to obtain the estimated registration ratio. Further, without using a natural logarithm, an estimated value may be calculated with a standard arithmetic average.

Specifically, in order to calculate the estimated registration ratio (PPPR), foremost, the official gazette acquisition means (fifth official gazette acquisition means) acquires from a database unexamined publications or publications of registrations based on patent applications filed by a specified enterprise within a fifth specified period, and the publications of patent registrations subjected to registration by a predetermined time among the patent applications. Then, the cumulative number of patent applications acquisition means acquires, for each predetermined period, the cumulative number of patent applications filed by a specified enterprise within a specified period based on the acquired unexamined publications or publication of registrations.

Next, the cumulative number of patent registrations acquisition means acquires, for each predetermined time, the cumulative number of patent registrations of patents subjected to registration by each predetermined time based on the acquired publications of registrations. Then, the cumulative patent registration ratio calculation means calculates, for each predetermined time, the cumulative patent registration ratio through dividing the acquired cumulative number of patent registrations by the cumulative number of patent applications. Further, the estimated registration ratio calculation means calculates, for each predetermined time, the natural logarithm of the cumulative patent registration ratio and calculating the regression line or regression curve thereof, and calculates the future estimated registration ratio by substituting the calculated average period required for registration for the calculated regression line or regression curve.

A display example of the patent productivity index (PP) is explained below.

FIG. 14 is a chart denoting the calculation of three indexes of patent application productivity (PPFI), examination request productivity (PPEX), and patent acquisition productivity (PPPD) in a specified period (specified year) of ten companies in the electrical equipment industry. Further, FIG. 15 is a chart similarly denoting the calculation of three indexes relating to the patent productivity of ten companies in the chemical industry.

In the example shown in FIG. 14, upon calculating the patent application productivity (PPFI), the number of claims filed (PACL) per JPY1,000,000,000 of unit of R&D cost (RDE) was calculated. Incidentally, the number of inventions per unit of R&D cost is not limited to the number of claims filed (PACL), and the number of patent applications, number of claims of utility model applications, or number of utility model applications may be used as the number of inventions. Further, the number of inventors may be used in place of the unit of R&D cost.

As shown in FIG. 14, Company MS in the electrical equipment industry has a value of 761.1 as its patent application productivity (PPFI), which means that 761 claims or more are being filed per JPY1,000,000,000 of R&D cost.

Further, since the value of examination request productivity (PPEX) is calculated to be 442.9, it can be estimated that roughly 442.9 claims among the foregoing 761.1 claims have requested examination. And, among the 442.9 claims that requested examination, it can be estimated that 152 claims have been actually registered from the calculated value of the patent acquisition productivity (PPPD).

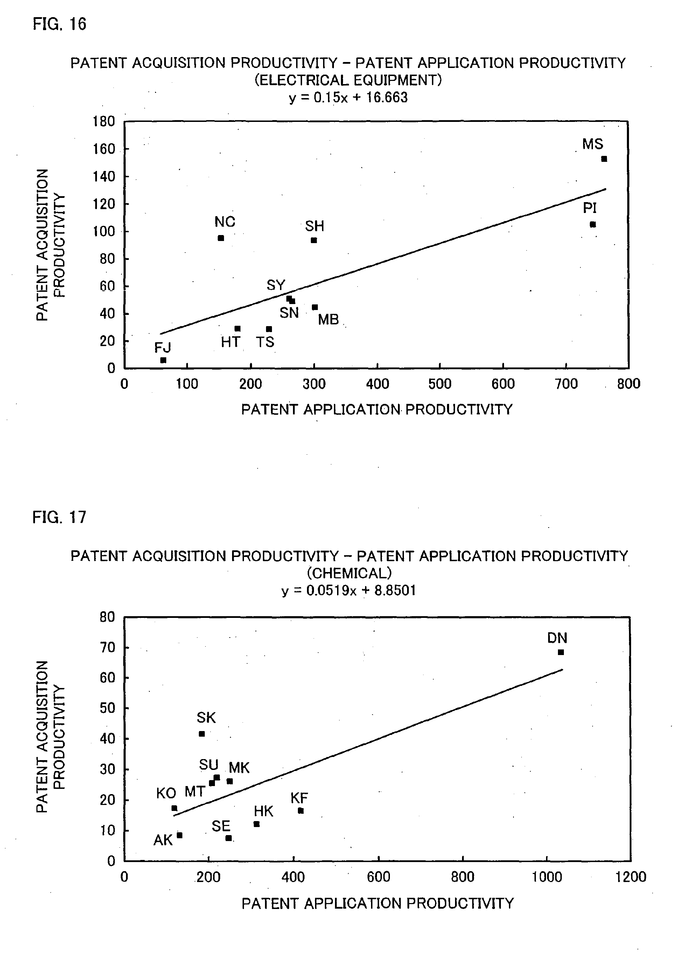

FIG. 16 is a diagram showing the relationship of the patent application productivity (PPFI) and patent acquisition productivity (PPPD) in the electrical equipment industry.

In FIG. 16, the positions of the respective companies are plotted with the horizontal axis (x axis) as the patent application productivity (PPFI), and the vertical axis (y axis) as the patent acquisition productivity (PPPD).

Incidentally, in FIG. 16, MS, PI and other abbreviations are provided in order to identify the plotted companies.

The straight line shown in FIG. 16 is the regression line showing the average value of the positions of the plotted companies, and the linear expression of this regression line is shown above FIG. 16.

As shown in FIG. 16, enterprises with a generally high patent application productivity (PPFI) value also has a large number of patent registrations (PTRD) value, and, as a result, the patent acquisition productivity (PPPD) also tends to be high.

Company MS and Company PI shown in FIG. 16 have high values for both patent application productivity (PPFI) and patent acquisition productivity (PPPD). Meanwhile, Company FJ has a low patent application productivity (PPFI) value, and also has a low patent acquisition productivity (PPPD) value.

Further, as shown in FIG. 16, in the electrical equipment industry, the companies are separated into two groups; namely, Company MS and Company PI having extremely large value for patent application productivity (PPFI) and patent acquisition productivity (PPPD), and the remaining companies.

Although Company MS is investing a decent amount in R&D cost (RDE), since the company is also filing numerous patent applications as can be assumed from FIG. 10, the patent application productivity (PPFI) value is high.

Meanwhile, with Company PI, as shown in FIG. 10, the patent application productivity (PPFI) is high even though the R&D cost (PPFI) are small and not many patent applications are filed. Further, both of these companies are showing high patent acquisition productivity (PPPD). Thus, it can be judged that these companies are spending efficient R&D cost regarding patent applications, and are companies with superior methods of research and development.

Further, Company NC and Company SH are showing extremely high patent acquisition productivity (PPPD) values in comparison to other companies showing similar patent application productivity (PPFI) values. This is based on the presumption that the patent registration ratio per R&D cost will increase since the patent applications of both companies have been granted patents with an extremely high percentage from the past. Therefore, it is possible to assume that this technology will be of a highly monopolistic state in the future.

Meanwhile, Company FJ has low patent application productivity (PPFI), and low patent acquisition productivity (PPPD). From this, it is possible to judge that this is a company facing problems such as being unable to obtain novel technology from its injection of R&D cost (RDE).

FIG. 17 is a diagram showing the relationship of the patent application productivity (PPFI) and patent acquisition productivity (PPPD) in the chemical industry.

As shown in FIG. 17, Company DN has extremely high patent application productivity (PPFI) and also has high patent acquisition productivity (PPPD) in the chemical industry. Therefore, it is possible to deduce that Company DN has an extremely high patent application productivity (PPFI) in comparison to other companies, has high patent acquisition productivity (PPPD), is creating inventions by efficiently investing in R&D cost (RDE), and further has a high patent registration percentage. Therefore, it is possible to judge that Company DN is a company that can be highly evaluated regarding patent strategy.

Further, from FIG. 17, it is also possible to judge that companies other than Company DN in the chemical industry are basically in a single group. Among such companies, Company SK is showing extremely high patent acquisition productivity (PPPD) in comparison to other companies with the same level of patent application productivity (PPFI). This means that patent applications filed by Company SK are being registered as patents at an extremely high percentage from the past.

Meanwhile, Company AK has low patent application productivity (PPFI), and low patent acquisition productivity (PPPD). From this, it can be said that this company has problems in the effective use of R&D cost.

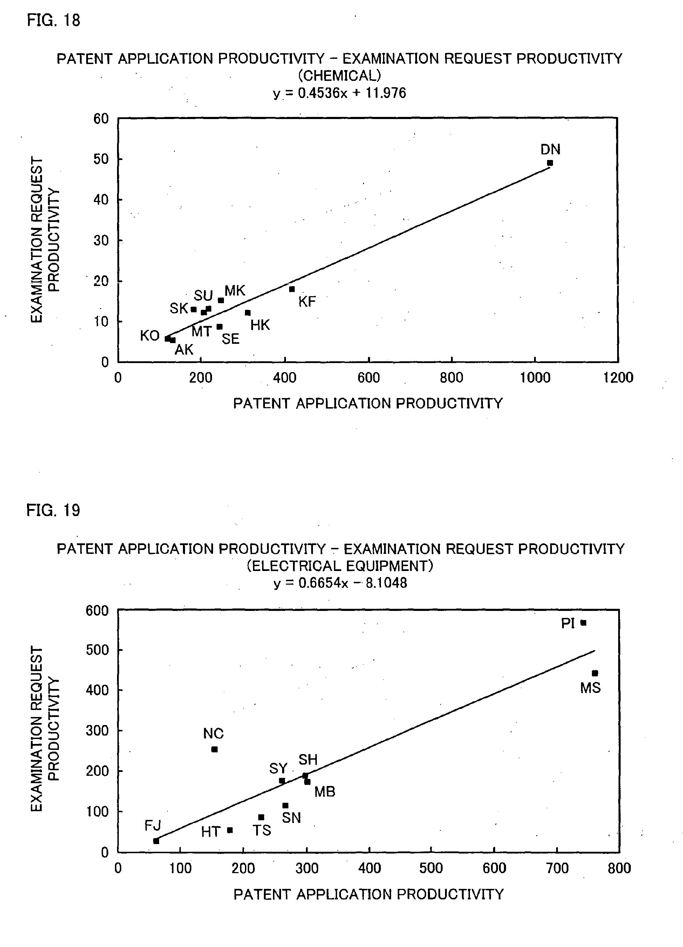

FIG. 18 is a diagram showing the relationship of the patent application productivity (PPFI) and examination request productivity (PPEX) in the chemical industry.

In FIG. 18, the positions of the respective companies are plotted with the horizontal axis (x axis) as the patent application productivity (PPFI), and the vertical axis (y axis) as the examination request productivity (PPEX). Incidentally, in FIG. 18, abbreviations are provided in order to identify the plotted companies.

As shown in FIG. 18, in the chemical industry, most companies are positioned near the regression line. Further, as with FIG. 17, Company DN alone is positioned at a location with high values for both indexes, and the other companies are biased toward the lower left.

Further, according to FIG. 18, Company DN has high patent application productivity (PPFI) and high examination request productivity (PPEX). From this, it is possible to deduce that Company DN is efficiently filing patent applications in relation to its injection of R&D cost, the examination request ratio is high, and the filed inventions are not put to waste.

Meanwhile, Company AK and Company KO have low patent application productivity (PPFI) values, and low examination request productivity (PPEX) values. Thus, it can be judged that these companies are not sufficiently creating inventions in view of the invested amount, and, since the examination request ratio is low, the invested amount in research and development is not being used effectively.

FIG. 19 is a diagram showing the relationship of the patent application productivity (PPFI) and examination request productivity (PPEX) in the electrical equipment industry.

As shown in FIG. 19, in the electrical equipment industry, Company MS and Company PI have high patent application productivity (PPFI) values and high examination, request productivity (PPEX) values. The other companies are positioned at the lower left of the regression line.

According to FIG. 19, it is possible to deduce that both Company MS and Company PI are creating inventions and filing applications efficiently in relation to the invested amount in the R&D cost, have a high examination request ratio, and do not waste the filed inventions.

Meanwhile, Company FJ has low patent application productivity (PPFI), and low examination request productivity (PPEX). Thus, it can be judged that this company is not sufficiently creating inventions in view of the invested amount, and, since the examination request ratio is low, the invested amount in research and development is not being used effectively.

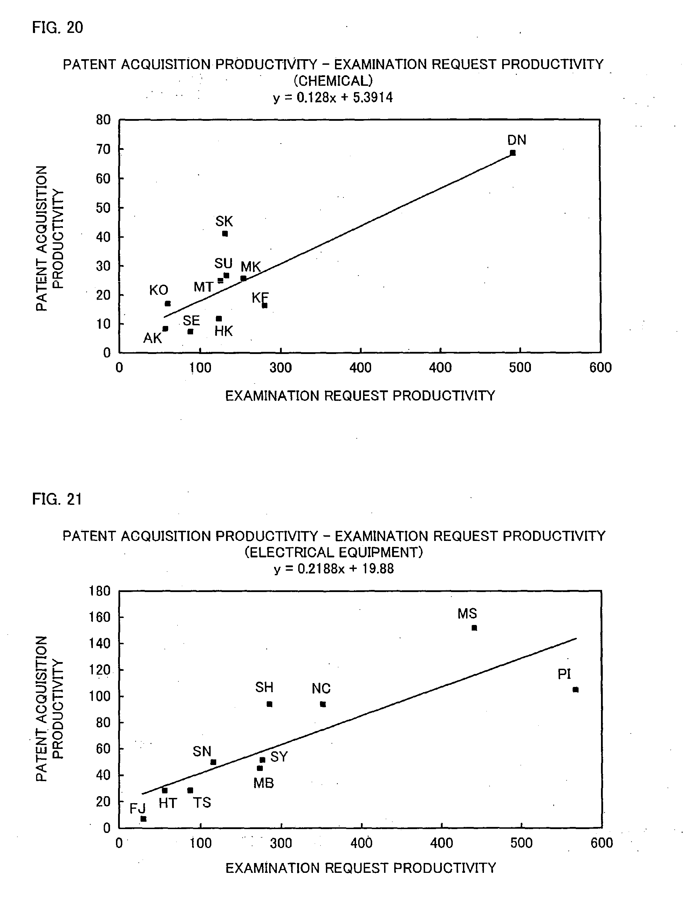

FIG. 20 is a diagram showing the relationship of the patent acquisition productivity (PPPD) and examination request productivity (PPEX) in the chemical industry.

In FIG. 20, the positions of the respective companies are plotted with the horizontal axis (x axis) as the examination request productivity (PPEX), and the vertical axis (y axis) as the patent acquisition productivity (PPPD). Incidentally, in FIG. 20, abbreviations are provided in order to identify the plotted companies.

As shown in FIG. 20, in the chemical industry, Company DN has exponential values as the examination request productivity (PPEX) and patent acquisition productivity (PPPD). The other companies are located at the lower left.

According to FIG. 20, since Company DN has a high examination request productivity (PPEX) value and a high patent acquisition productivity (PPPD) value, it is evident that the filed inventions are requested for examination at a high ratio and granted patents at a high ratio. Like this, since this company is obtaining rights for its inventions and taking care of its patents, it is possible to judge this company can be evaluated highly from the perspective of patents.

In the case of Company SK, although the examination request productivity (PPEX) value is not too high, the patent acquisition productivity (PPPD) is showing a high numerical value. This denotes that Company SK is carefully selecting its inventions filed as patent applications upon requesting examination, and the inventions requested for examination are being patented at a high percentage.

In the case of Company AK, the examination request productivity (PPEX) value is low, and the patent acquisition productivity (PPPD) value is also low. Thus, the number of examination requests is low, and the ratio of patents granted is also low. Therefore, it is evident that this company has numerous patent applications that have gone to waste.

FIG. 21 is a diagram showing the relationship of the patent acquisition productivity (PPPD) and examination request productivity (PPEX) in the electrical equipment industry.

As shown in FIG. 21, in the electrical equipment industry, Company PI and Company MS show high examination request productivity (PPEX) values and high patent acquisition productivity (PPPD) values. The other companies are located at the lower left far apart from these two companies.

According to FIG. 21, Company PI and Company MS have a high ratio of requesting examination for their patent applications, and it is possible to judge that these companies have a statistically high percentage of being granted patents.

Contrarily, in the case of Company FJ, the examination request productivity (PPEX) value is low, and patent acquisition productivity (PPPD) value is also low. Therefore, it is possible to judge that this company has some kind of strategic problem regarding patent applications.

As described above, as a result of representing the respective patent productivity indexes in a graph, it will be possible to grasp the characteristics of the patent productivity in the respective enterprises at a glance, and this will be useful in evaluating enterprises.

In addition to the foregoing two industries, by calculating the indexes and viewing the distribution of the respective enterprises regarding the patent productivity in the oil/rubber industry, ceramic industry, steel/non-steel/metal product industry, machinery/shipbuilding industry, automobile/transport equipment industry, precision instrument industry and other manufacturing industries, it will be easy to read the characteristics in each industry, or the characteristics of the respective enterprises in such predetermined industry, and this information can be utilized in judging the characteristics of the industry or enterprise value.

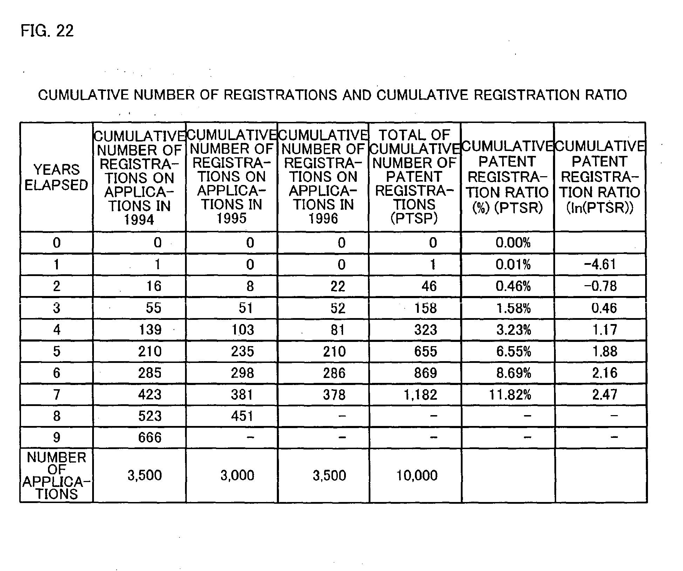

FIG. 22 is a chart showing the results of calculating the logarithm with the cumulative patent registration ratio (PTSR) as the antilogarithm upon calculating the estimated registration ratio.

In the example shown in FIG. 22, the cumulative patent registration ratio (PTSR) is calculated for each year based on the ratio of the number of patent applications (cumulative number of patent applications (PTSA)) filed by an enterprise to be researched within a specified period (for instance, 1994, 1995 and 1996), and the cumulative number of patent registrations (PTSP) patented by a predetermined time (each year) among the patent applications filed during the same period, and the natural logarithm thereof is calculated for each year.

In FIG. 22, an example is shown where a certain company filed 3,500 patent applications in 1994, 3,000 in 1995 and 3,500 in 1996. With respect to the applications of each year, the number of registrations subjected to registration from the following year is accumulated for each elapsed year.

The numbers in the column of elapsed years (years) show the years elapsed from the filing. For instance, in the 0 year of applications filed in 1994 (cumulative), there were 0 registrations among the 3,500 applications, there was 1 registration in the first year, there were 16 registrations in total for the second year, and there were 666 registrations for the ninth year.

Further, in 0 year of applications filed in 1996 (cumulative), there were also 0 registrations among the 3,500 applications, 0 registrations for the first year, 22 registrations for the second year, and 378 registrations in total for the seventh year. In the case of the column of applications filed in 1996, since the filing is two years later than the applications filed in 1994, there are two less rows to be entered in the column.

The row of cumulative number of registrations (PTSP) (cumulative) shows the total number of registrations for three years (within fifth specified period) of patent applications subjected to registration per elapsed year among the patent applications filed between 1994 and 1996. Therefore, the cumulative number of patent registrations (PTSP) of 0 year (each specified period) had 0 registrations, first year had 1 registration, second year had a total of 46 registrations, and the seventh year had a total of 1,182 registrations among the total of 10,000 cumulative number of patent applications (PTSA) filed between 1994 and 1996.

The cumulative registration ratio (PTSR) is a percentage obtained through dividing the cumulative number of registrations (PTSP) (cumulative) by the 10,000 patent applications. Therefore, in the column of cumulative registration ratio (%) (PTSR), 0 year had 0 registrations among the 10,000 applications at 0.00%, first year had 1 registration at 0.01%, second year had 46 registrations at 0.46%, and seventh year had 1,182 registrations at 11.82%.

In the column of cumulative registration ratio (ln(PTSR)), since the natural logarithms are calculated in the following order, first year onward are calculated at -4.61, -0.78, 0.46, 1.17, 1.88, 2.16 and 2.47, respectively.

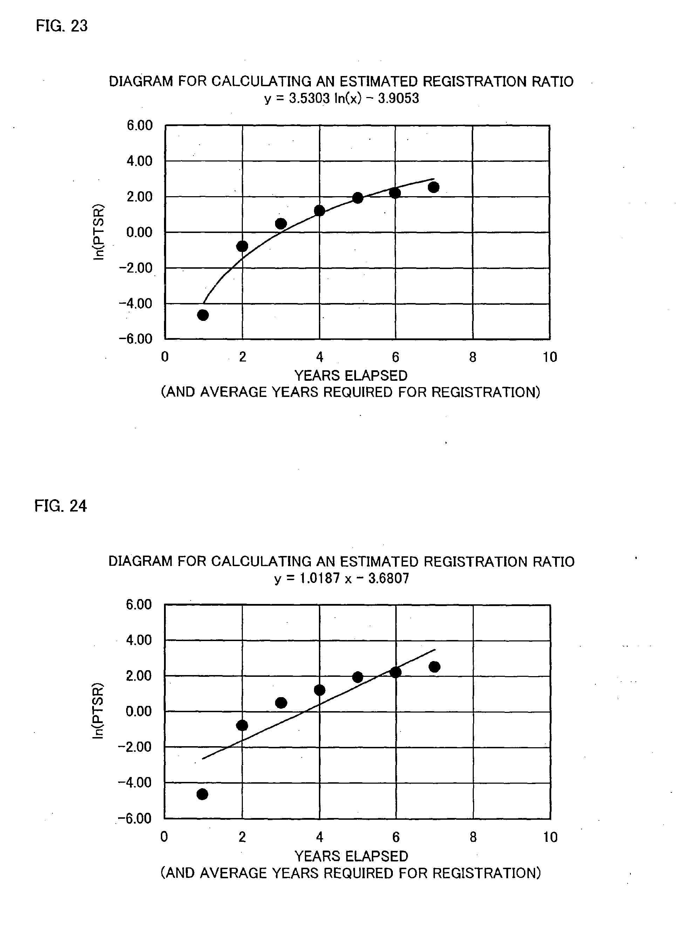

FIG. 23 is a diagram plotting the natural logarithm of the cumulative patent registration ratio (PTSR) for each year elapsed and representing the regression curve thereof.

In FIG. 23, the regression curve is calculated by taking the elapsed years as the explanatory variable in the horizontal axis (x axis), and taking the natural logarithm of the cumulative patent registration ratio (PTSR) calculated each year in the vertical axis (y axis), and based on the respective points thereof.

In the present invention, the estimated registration ratio is calculated as the future registration ratio by substituting the average years required for registration (PTMY) (index showing the performance value of the average number of years required from filing to registration regarding patents filed by a specified enterprise subjected to registration within a specified period).

The regression curve shown in FIG. 23 is calculated, at a logarithm approximate curve, as (y = 3.5303ln(x)- 3.9053).

When assuming that the average years required for registration (PTMY) of this enterprise is 7.3 years, x = 7.3 is substituted in the foregoing formula, and y = 3.112 is sought thereby. When this is set as the value of natural logarithm, antilogarithm will be calculated at ln(3.112) = 22.5. Therefore, the estimated registration ratio (PPPR) of this enterprise is assumed to be 22.5%.

FIG. 24 is a diagram plotting the natural logarithm of the cumulative patent registration ratio (PTSR) for each year elapsed and representing the regression line thereof.

Although the logarithm approximate curve regarding the dispersed points that were plotted was calculated in FIG. 23, the regression curve such as the logarithm approximate curve of the present invention is not limited thereto, and, as shown in FIG. 24, the estimated registration ratio (PPPR) may be calculated by calculating the regression line of the respective dispersed points.

As shown in FIG. 24, when the regression line of the respective dispersed points is calculated, the regression line formula will be (y = 1.0187x-3.6807). As with the case of FIG. 23, if the average years required for registration (PTMY) of this enterprise is 7.3 years, x = 7.3 is substituted in the regression line formula, and y = 3.76 is sought thereby. When this value is used as the natural logarithm to calculate the antilogarithm, ln(3.76) = 42.8. In other words, the estimated registration ratio (PPPR) of this enterprise is estimated to be 42.8%.

Incidentally, when calculating the estimated registration ratio (PPPR) of an enterprise, whether to use the foregoing regression line or whether to use the logarithm approximate curve, the differences in the calculated results of the two may be compared with the recent performance of the enterprise, and the curve to be used may be decided thereby. In the example shown in FIG. 23 and FIG. 24 above, the estimated registration ratio (PPPR) calculated using the logarithm approximate curve was closer to the actual circumstances.

As described above, although whether to use the approximate line or approximate curve was decided according to the accumulated results, when it is not possible to decide on the value of the estimated registration ratio (PPPR) or when an abnormal value is calculated, the performance results of such enterprise in recent years or the performance results of several years of such enterprise may be used.

Further, in the present embodiment, although the estimated value was calculated using a natural logarithm of the cumulative patent registration ratio (PTSR) in order to make the graphs of FIG. 23 and FIG. 24 easy to view, the present invention is not limited to using the natural logarithm, and other curves such as an index function may be used to calculate the estimated value.

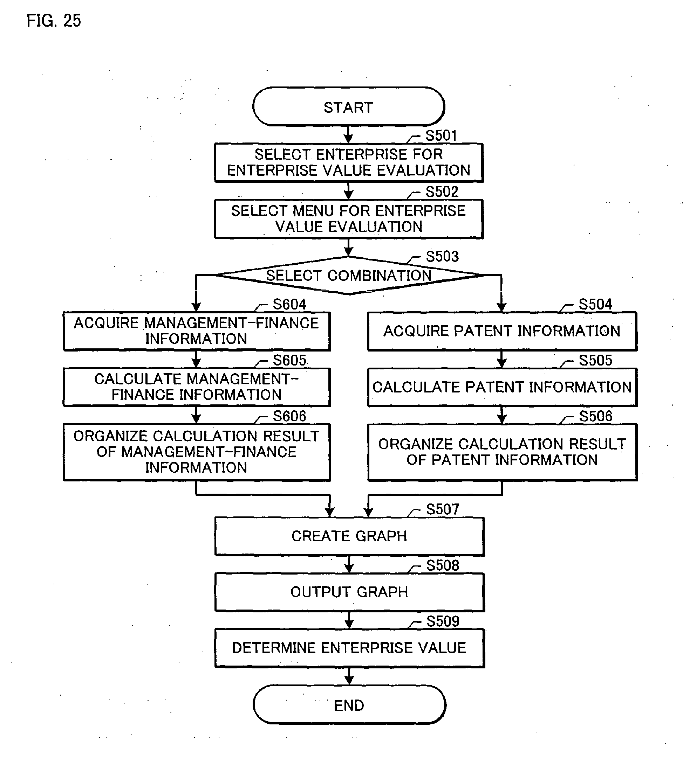

FIG. 25 shows a flowchart of calculating and outputting the respective indexes of average period required for registration, average period before examination request, patent application productivity, examination request productivity or patent acquisition productivity.

At S501 "select enterprise for enterprise value evaluation", the information processing means 380 receives the input of a display command of a screen for selecting an enterprise from a user via the input means 370 such as a keyboard and the bus 399. The information processing means 380 reads the display data upon selecting the enterprise from the recording means 384 based on such command, converts this into a display image signal, and outputs such signal to the display interface 373. The display interface 373 that acquired the display data from the information processing means 380 converts and outputs the display data corresponding to the display means 372. The display means 372 displays a screen based on the display data input from the display interface 373 and notifies the user.

The user, while viewing the company selection screen displayed on the display means 372, inputs the information for specifying one or more enterprises to be researched via the input means 370. Here, the information to be input may be the enterprise name, enterprise code, or an enterprise may be selected from the enterprise selection screen. Information for specifying the enterprise input by the user via the input means 370 is read by the information processing means 380 via the bus 399.

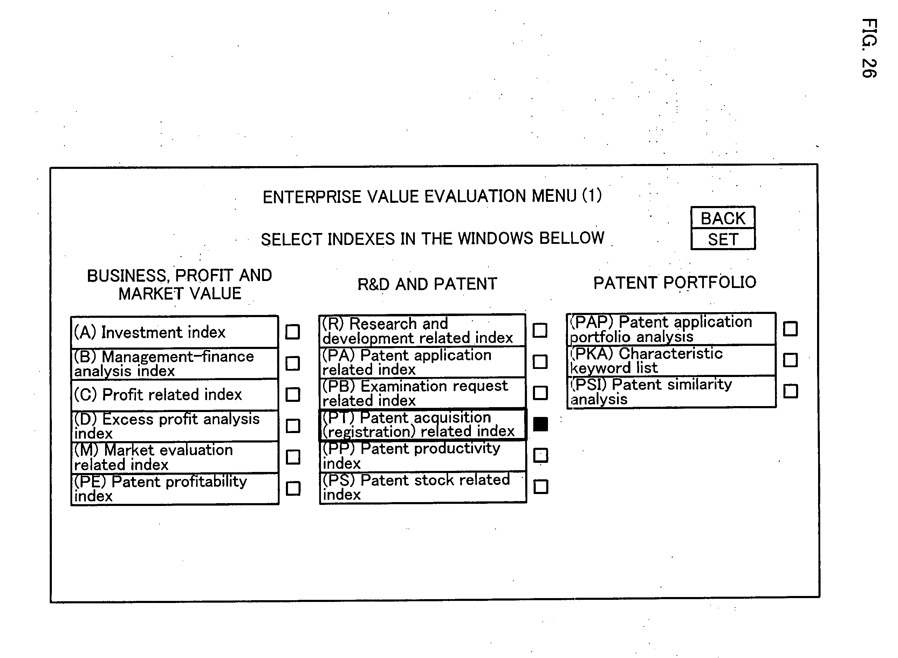

When the information processing means 380 receives the input of appropriate enterprise specifying information, the information processing means 380 reads the display data of.the display menu for selecting the type of index to evaluate the enterprise value from the recording means 384, converts this into a display image signal, outputs such signal to the display interface 373, and, for example, displays the enterprise value evaluation menu shown in FIG. 26 on the display means 372.

Next, at S502 "select menu for enterprise value evaluation", the user, while viewing the enterprise value evaluation menu displayed on the display means 372, selects the desired index for evaluating the enterprise value and inputs such index.

When selecting an index from the enterprise value evaluation menu shown in FIG. 26 upon judging the enterprise value, the user selects a desired index from the selection menu of "business, profit, market value" or "R&D, patent", or "patent portfolio". In the example shown in FIG. 26, the user is selecting the item of "(PT) patent acquisition (registration) related index" belonging to the field of "R&D, patent".

When the user inputs information for selecting the index of "R&D, patent", such input information is conveyed to the information processing means 380, the command for displaying a selection mark at the portion of the index selected by the user is output to the display interface 373, and information for displaying the respective indexes existing at a lower level in the form of a pulldown menu is output to the display interface 373. Incidentally, in the example shown in FIG. 26, the mark of the selected item is changed from a white square to a black square.

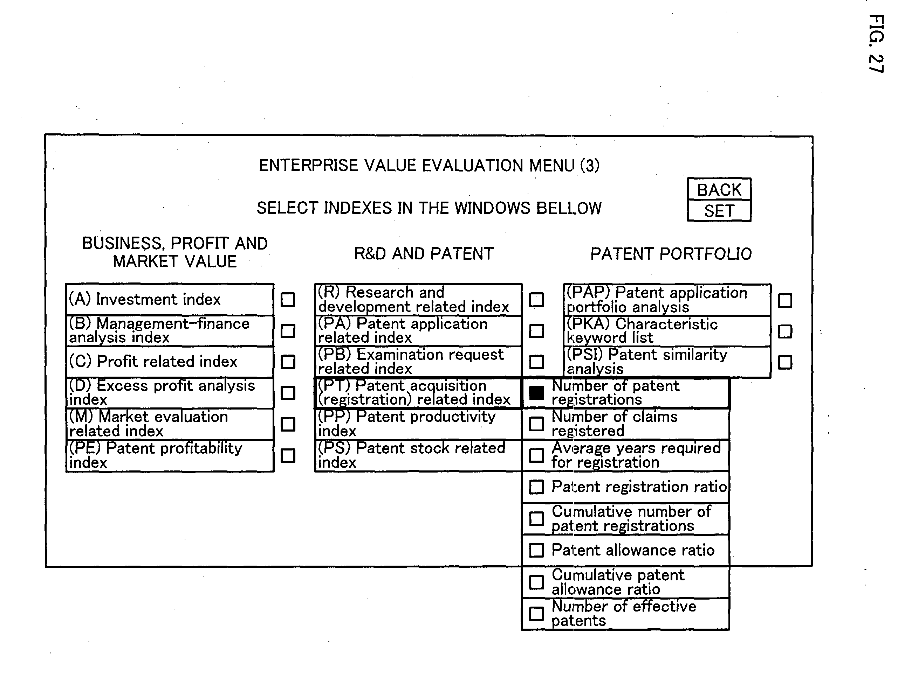

FIG. 27 shows a display example displaying the respective indexes existing in a lower level of "R&D, patent" in the form a pulldown menu.

The user a desired index to be calculated from the respective indexes displayed on the display means 372. With the example illustrated in FIG. 27, the user is selecting the index of "number of patent registrations (PTRD)" representing the number of patents of a specified enterprise subjected to the registration within a specified period.

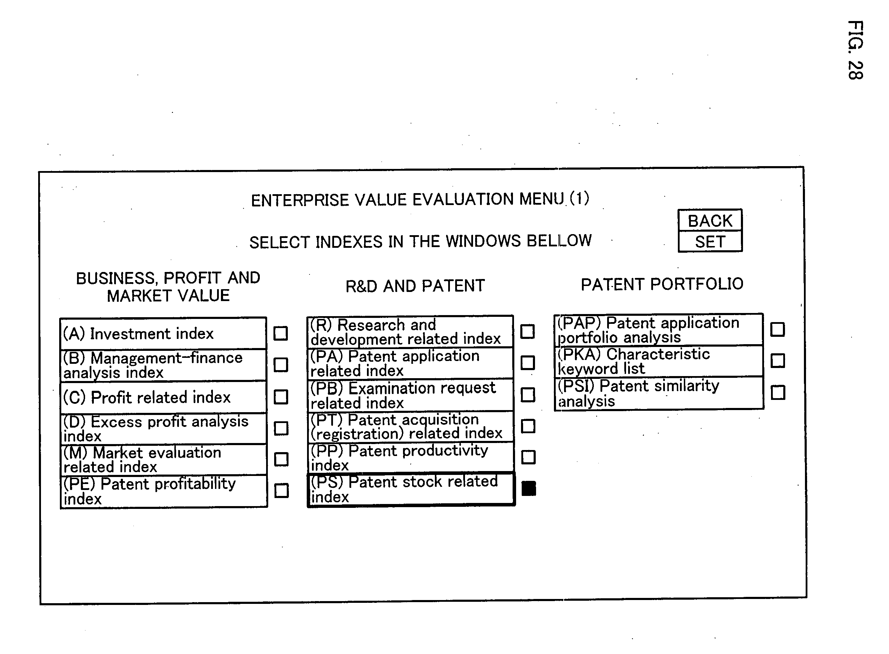

Further, when the user wishes to calculate the "(PS) patent stock related index" falling under the field of "R&D, patent", as shown in FIG. 28, the user will select "(PS) patent stock related index" from the pulldown menu.

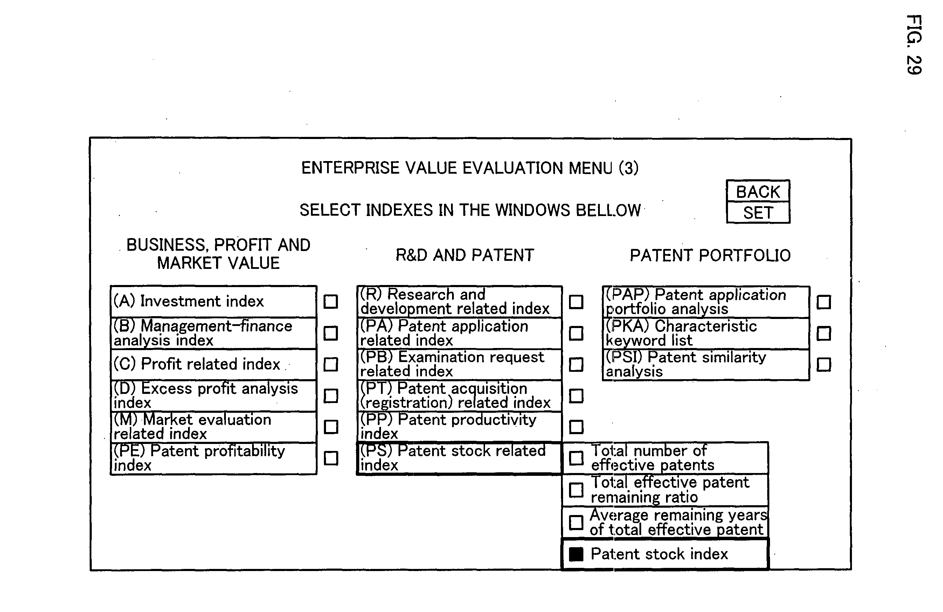

When the user inputs information for selecting the "(PS) patent stock related index", the information processing means 380 that acquired such input information outputs a command for displaying a selection mark at the portion of the index selected by the user to the display interface 373, and, outputs information for displaying the respective indexes belonging to a lower level of the "(PS) patent stock related index" as shown in FIG. 29 to the display interface 373 in the form of a pulldown menu.

The user inputs information for selecting the index of "patent stock index" from the pulldown menu displayed as shown in FIG. 29. Then, this input information is conveyed to the information processing means 380. The information processing means 380 sets a flag for deciding the parameter of the index to be calculated, displays a selection mark at the portion of the index selected by the user, and notifies the user of the set information.

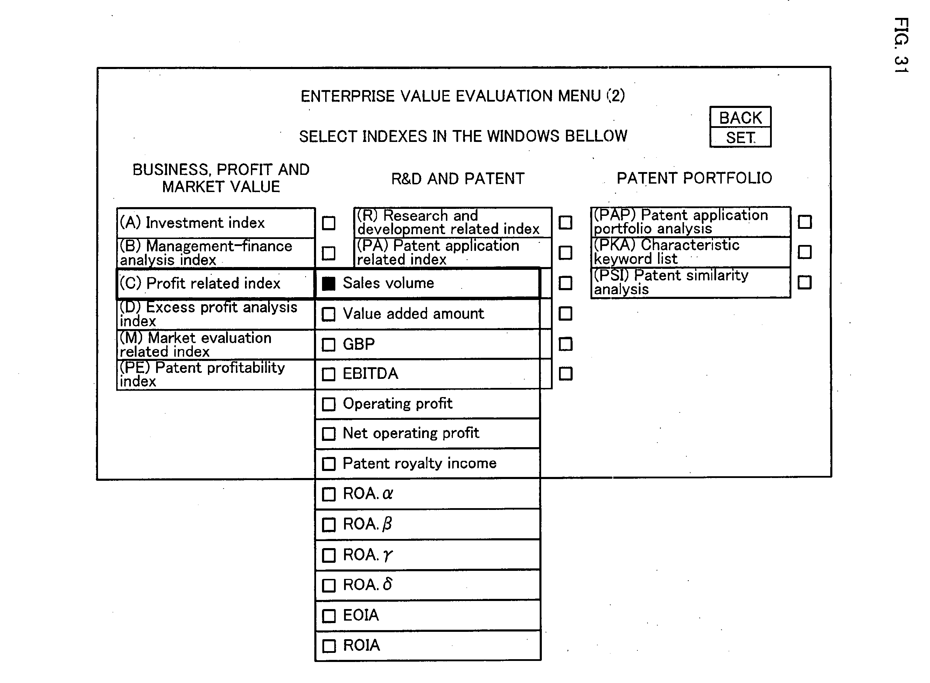

When the user wishes to conduct a research upon mutually associating the indexes of inventions and the business, profit or market value information of a predetermined enterprise, the user selects "(C) profit related index" from the selection menu of "business, profit, market value". Then, the information processing means 380 outputs a command for displaying on the display means 372 the pulldown menu indicating the items relating to the "(C) profit related index" shown in FIG. 31. The user selects a desired profit index from the pulldown menu displayed on the display means 372. In the example shown in FIG. 31, a case where the "sales volume" is selected is shown.

When the user inputs information for selecting the item of "sales volume" related to "(C) profit related index", such input information is conveyed to the information processing means 380. The information processing means 380 sets a flag for deciding the operation formula for calculating the index, displays a selection mark at the portion of the index selected by the user, and notifies the user of the set information.

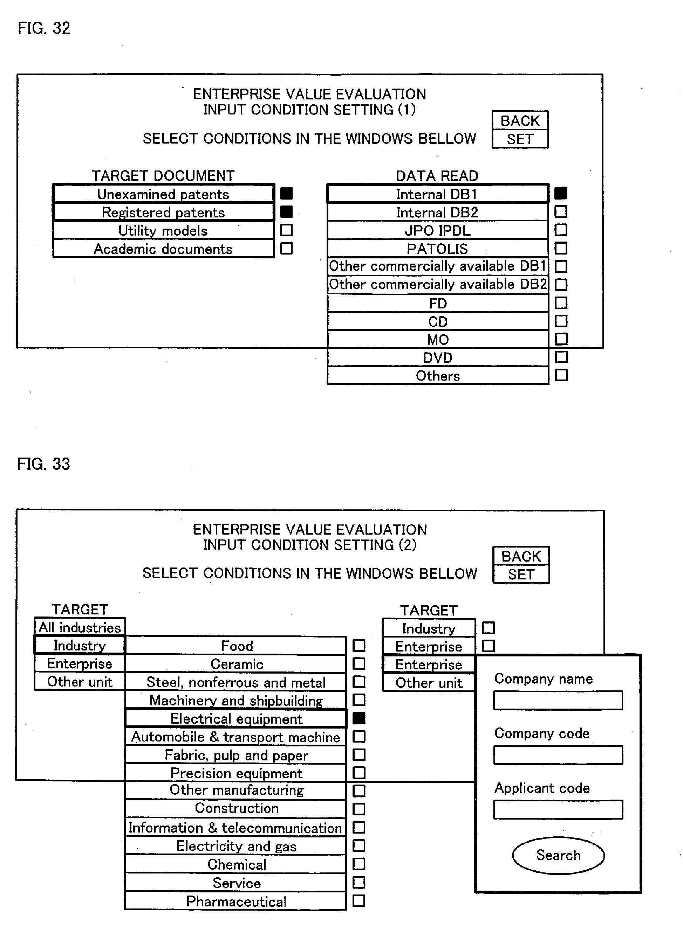

When the user selects the "set" button and the selection processing of the type of index for evaluating the enterprise value is ended, the information processing means 380 reads the display data of the display screen for setting the input conditions upon evaluating the enterprise value from the recording means 384, converts this into a display image signal, and outputs such signal to the display interface 373, and, for example, displays on the display means 372 the enterprise value evaluation input condition setting screen shown in FIG. 32.

The user, while viewing the enterprise value evaluation input condition setting screen displayed on the display means 372, selects and inputs the desired conditions for evaluating the enterprise value.

For example, the user, based on the display of the enterprise value evaluation input condition setting screen shown in FIG. 32, selects the conditions of "target document" and "reading of data" upon calculating the index for judging the enterprise value. In the example shown in FIG. 32, the user is selecting "unexamined patent applications" and "registered patents" as the conditions of the "target document". Moreover, in the example show in FIG. 32, the user is selecting "Internal DB1" as the condition of "reading of data".

When the user inputs the various conditions of "target document" and "reading of data", such input information is conveyed to the information processing means 380. The information processing means 380 sets a flag of the items input by the user regarding the conditions of the "target document" and "reading of data", displays a selection mark at the portion of the index selected by the user, and notifies the user of the set information.

When the user selects the "set" button and the input regarding the conditions of the "target document" and "reading of data" is completed, the information processing means 380 subsequently reads the display data of the enterprise value evaluation input condition setting screen shown in FIG. 33 from the recording means 384, and outputs a command for displaying this on the display means 372 via the display interface 373. The user, while viewing the enterprise value evaluation input condition setting screen displayed on the display means 372, selects a desired enterprise to be evaluated. In the example shown in FIG. 33, the user is selecting "electrical equipment industry" among the "industries" to become the large classification among the target of enterprise evaluation. Further, the user may also select "enterprise" as the detailed classification of individual enterprises among the target of enterprise value evaluation, and designate input conditions such as the "enterprise name", "enterprise code", "applicant code" and so on. When the user, while viewing this screen, selects the "target" on the right side and further selects the enterprise, such user will input the enterprise name or enterprise code and applicant code.

When the user selects the "set" button and ends the input condition setting of the enterprise value evaluation, such input information is conveyed to the information processing means 380. The information processing means 380 sets a flag of the enterprise to become the "target" input by the user, displays a selection mark at the portion of the index selected by the user, displays information such as the set enterprise name, enterprise code and application code on the display means 372, and notifies the user of the set information.

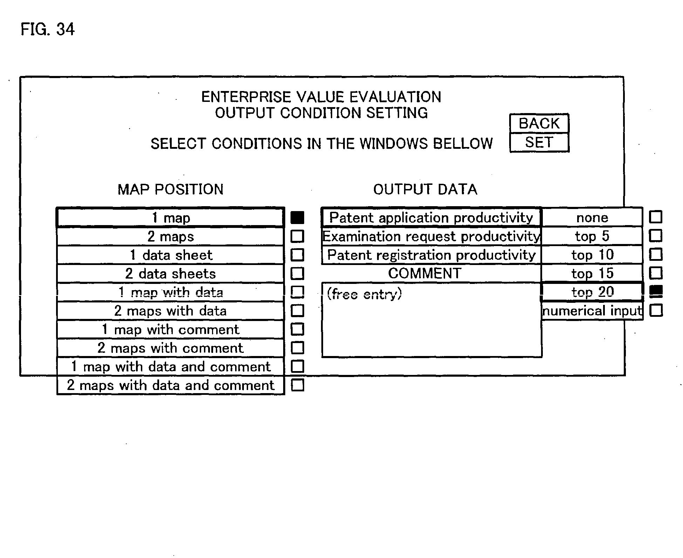

When the user selects the "set" button and the setting of the input conditions of the enterprise value evaluation is ended, the information processing means 380 subsequently reads the display data of the enterprise value evaluation output condition setting screen shown in FIG. 34 from the recording means 384, and outputs a command for displaying this on the display means 372 via the display interface 373. The user, while viewing the enterprise value evaluation output condition setting screen displayed on the display means 372, selects a desired display mode. In the example shown in FIG. 34, "single map" is selected as the information relating to the "map position", the "patent application productivity" is selected as the "output data", and "upper 20" is selected as the volume of information to be output and displayed.

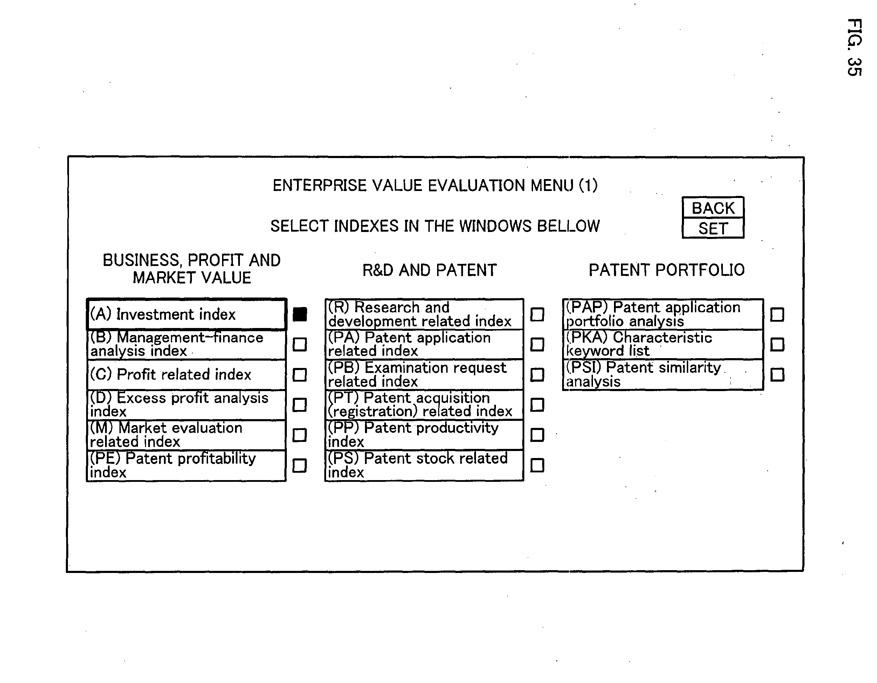

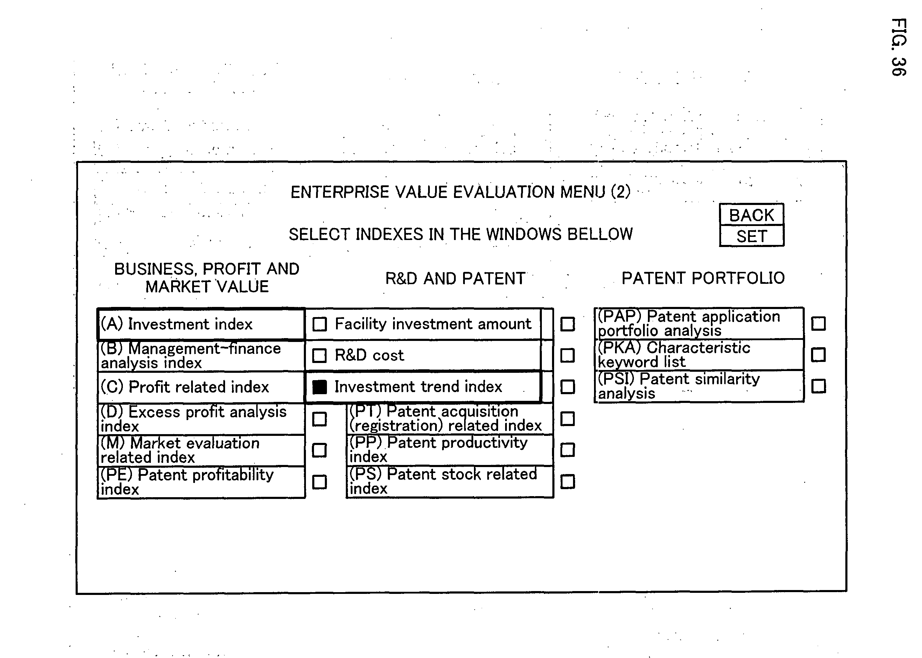

When the user wishes to conduct a research upon mutually associating "business, profit, market value" and "R&D, patent", the user selects "(A) investment index" from the selection menu of "business, profit, market value" shown in FIG. 35. Then, the information processing means 380 outputs a command for displaying on the display means 372 the pulldown menu indicating the items relating to the "(A) investment index" shown in FIG. 36. The user selects a desired profit related index from the pulldown menu displayed on the display means 372. In the example shown in FIG. 36, a case where the "investment trend index" is selected is shown.

When the user inputs information for selecting the item of "investment trend index" related to "(A) investment index", such input information is conveyed to the information processing means 380. The information processing means 380 sets a flag for deciding the operation formula for calculating the index, displays a selection mark at the portion of the index selected by the user, and notifies the user of the set information.

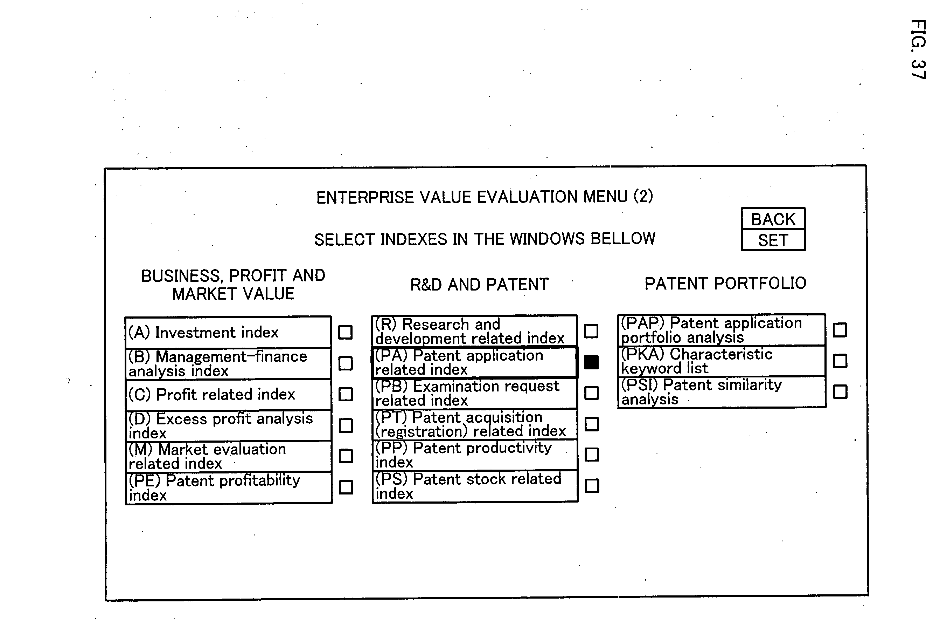

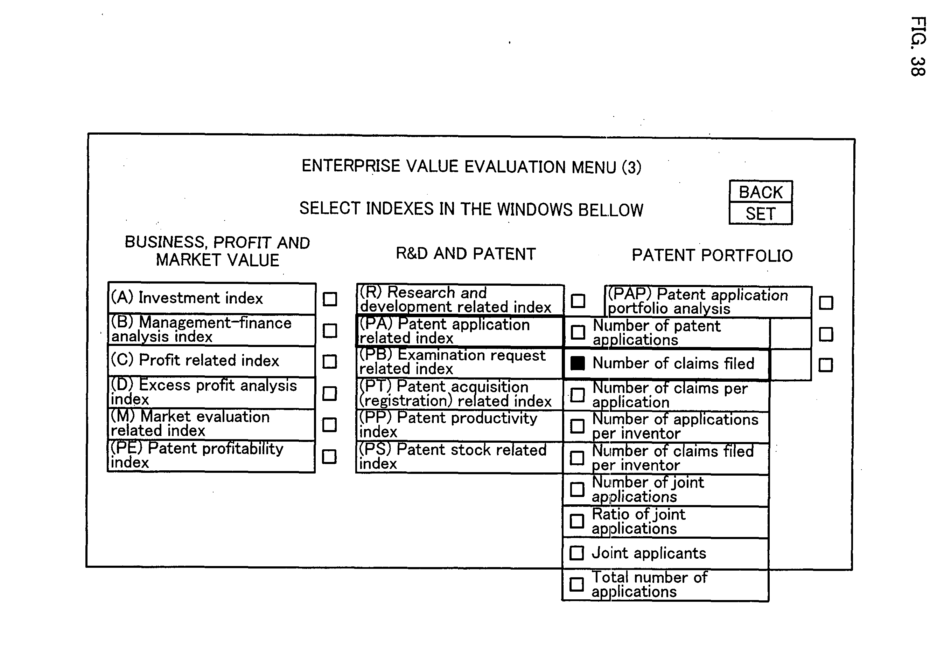

Next, the user, while viewing the screen shown in FIG. 37, selects the item of "(PA) patent application related index" from the selection menu of "R&D, patent". Then, the pulldown menu shown in FIG. 38 is displayed on the display means 372. In the example shown in FIG. 38, "number of claims filed" from the selection menu of "(PA) patent application related index".

When the user selects the "set" button and the setting of the enterprise value evaluation output conditions is ended, processing to the performed by the information processing means 380 proceeds to the processing of S503 "select combination" shown in Fig. 25.

When the user designates the implementation of operation relating to management-finance information such as "business, profit, market value", the processing to be performed by the information processing means 380 proceeds to the processing of S604 "acquisition of management-finance information", and, when the user designates the implementation of operation of "R&D patent" or "patent portfolio", the processing to be performed by the information processing means 380 proceeds to the processing of S504 "acquire patent information".

Incidentally, when the user only designates an independent operation of the "number of patent registrations" or the like, the information processing means 380 does not select the combination processing and implements only the processing of S504 onward.

For example, when the user designates the operation of the "number of patent registrations" from the selection menu of "R&D, patent", at S504, the information processing means 380 acquires the patent publications of the respective enterprises and information relating thereto from the database 20 based on the operation processing of the patent portfolio and information relating to the designated enterprise, and performs processing for extracting the IPC subclasses, number of patent applications, number of claims in a patent application and other information required for the operation. After the acquisition processing of patent information is ended, the processing to be performed by the information processing means 380 proceeds to the processing of subsequent S505 "calculate patent information".

At S505, the information processing means 380 performs processing for calculating the desired index of the user based on the patent information acquired at S504, the operation formula related to "R&D, patent" input by the user, and the calculating formula to which a flag has been set based on the enterprise name or the like.

When the operation processing of the index relation to patents is ended at S505, the processing to be subsequently performed by the information processing means 380 proceeds to the processing of S506 "organize calculation result of patent information".

At S506, the information processing means 380 classifies the specified enterprise into a predetermined category based on the operation result of the index relating to patents, and further performs operation processing for predetermined ranking or discrimination, and then organizes the various operation results.

When the organization of the various operation results is ended at S506, the processing to be performed by the information processing means 380 proceeds to the subsequent processing of S507 "create graph".

Meanwhile, in a case where the user selects "(A) investment index" from the "business, profit, market value" (refer to FIG. 36), and further selects "investment trend index", and desires the combination of the operation of "R&D, patent" and other items such as the "business, profit, market value", the processing to be performed by the information processing means 380 proceeds to S604 "acquire management-finance information".

At S604, the information processing means 380 acquires various types of information from the database 20 such as the information showing the size of the enterprise, finance information of the enterprise, and combined information of the enterprise, and operates the management-finance information at the subsequent S605 "calculate management-finance information".

When the operation processing of management-finance information is ended at S605, the processing to the subsequently performed by the information processing means 380 will proceed to S606 "organize calculation result of management-finance information" in order to perform the operation processing of management-finance information, and then the routine proceeds to the subsequent S507.

At S507, the information processing means 380 creates a chart or graph by applying the operation result of the patent information calculated at S505, various operation results organized at S506, operation result of the management-finance information operated at S605, or operation result of the various types of management-finance information organized at S606 into a display format according to the index or the operation result thereof, and coverts this into display data.

Next, at S508 "output graph", the information processing means 380 outputs the display data of the chart or graph created at S507 to the display interface 373, and displays this on the display means 372.

By the user perusing the chart or graph display at S508, the user will be able to easily and accurately judge, with a unique index, the enterprise value based on the diversification of inventions in the respective enterprises, competitive position relating to inventions, validity of the enterprise value, or the relationship between such unique information concerning inventions and the management-finance information.

Depending on the items of enterprise evaluation designated by the user, there may be cases where the information processing means 380 performs a more detailed ranking in order to judge the enterprise value. In such a case, the information processing means 380 will read the predetermined threshold or the like at S509 "determine enterprise value" to judge the enterprise value, thereafter output the numerical value or graph thereof, and then end the calculation processing of the various indexes.

Industrial Applicability

According to the present invention,

official gazette acquisition means acquire, from a database, publications of patent registrations subjected to registration from among the patent applications filed by a specified enterprise within a specified period;

average period required for registration calculation means calculate a required registration period for individual applications by subtracting the filing date from the registration date indicated in the acquired publications of registrations, calculate an accumulated required registration period by counting the calculated required registration period for all patents subjected to the registration, and calculate an average period required for registration through dividing the accumulated required registration period by the total number of patents subjected to the registration and average number of days of one year or one month.

Therefore, the average years required for registration can be calculated and displayed upon classification per technical area such as based on enterprises, based on workplaces, based on inventors, based on IPC and the like, and the user will be able to know which technical field the enterprise to be researched is laying emphasis, or which technical field the enterprise to be researched is defensively positioning the inventions.

Further, a user will be able to judge that a business department having a short average period required for registration is a department that is advancing development with strategic emphasis, and, contrarily, a user will be able to judge that a technical field having a long average period required for registration is a relatively defensive department. Like this, by perusing the average period required for registration, a user will be able to judge the attitude of an enterprise to patents.

Further, according to the present invention, since the average period required for registration calculation means calculates the average period required for registration through dividing the accumulated required registration period by the total number of patents subjected to registration and average number of days of one year or one month, the results can be displayed to the user in a easy-to-view manner, and the user will be able to instantaneously understand the average period required for registration in units of years or months. For instance, if the average period required for registration per patent application is 365.25 days, this can be notified as 1 year or 12 months.

Moreover, according to the present invention, since the average period required for registration is calculated based on patent applications per predetermined technical field in a specified enterprise, it will be possible to compare the average period required for registration with competitors per technical field, and use this as information for deciding on whether one's company should enter into a new technical field.

Further, the present invention comprises:

official gazette acquisition means for acquiring, from a database, unexamined publications requested for examination and publications of patent registrations subjected to registration from among patent applications filed by a specified enterprise within a specified period;

average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination; and

output means for outputting the calculated average period before examination request to display means, printing means, recording medium, or another telecommunications device via a communication line.

Therefore, it will be possible to judge that patent applications of a certain business department to request for examination at an early stage belong to a strategically important technical field, and it will be possible to judge that technical fields with a long average period before examination request belong to a relatively defensive department. Therefore, based on the calculated average period before examination request, the user will be able to know which technical field the enterprise to be researched is laying emphasis, or which technical field the enterprise to be researched is defensively positioning the inventions, and the user will be able to judge the attitude of an enterprise to patents.

Moreover, according to the present invention, since the average period before examination request calculation means calculates the average period before examination request through dividing the accumulated period before examination request by the total number of examination requests and the average number of days of one year or one month, the results can be displayed to the user in a easy-to-view manner, and the user will be able to instantaneously understand the average period before examination request in units of years or months.

Moreover, according to the present invention, since the average period before examination request is calculated based on patent applications per predetermined technical field in a specified enterprise, it will be possible to total the average years before examination request according to workplaces of enterprises, inventors, IPC and the like. Also it is possible to compare the average period before examination request with competitors per technical field, and use this as information for deciding on whether one's company should enter into a new technical field, enabling to learn, for example, that a sector for which the average period before examination request is short is a sector strategically important.

Further, the present invention uses, as the publications of registrations, publications of patent registrations, publications of examined patent applications, publications of examined utility model applications or publications of utility model registrations, and uses, as the unexamined publications, publications of unexamined patent applications, published Japanese translations of PCT international applications for patents, publications of unexamined utility model applications or published Japanese translations of PCT international applications for utility models. Therefore, enterprise evaluation can be conducted more accurately based on broader technical documents.

Moreover, the present invention comprises:

official gazette acquisition means for acquiring, from a database, unexamined publications or publications of registrations based on patent applications or utility model applications filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost; and

output means for outputting the calculated patent application productivity to display means, printing means, recording medium, or another telecommunications device via a communication line.

Therefore, it will be possible to calculate the number of claims filed per R&D cost, measure the productivity of creating patents as a part of the results of research and development, and estimate the efficiency of the research and development. The larger the calculated value of the patent application productivity, it will be possible to judge that the productivity of the number of patent applications or number of inventions such as the number of claims in the research and development is high, and that the enterprise's consciousness of patents is high. Further, it will be possible to judge whether the enterprise is making efficient research investment.

Further, with respect to patent applications filed by a specific enterprise within a first specified period, by calculating the patent application productivity using the R&D cost of the previous year (during the second specified period) of such patent applications, it will be possible to calculate the patent application productivity of the number of inventions (number of claims filed or the like) of the following year having a high coefficient of correlation with the variation in the R&D cost, and the productivity of the number of inventions of an enterprise can be judged more accurately.

Further, the present invention comprises:

number-of-inventions-per-applicant acquisition means acquire the number of patent applications or utility model applications or the number of claims from each of the acquired unexamined publications or publications of registrations, acquire the number of applicants indicated in each of the acquired publications, and acquire the number of inventions per unit of applicants through dividing the number of patent applications or utility model applications or the number of claims by the number of applicants; and

the number-of-inventions acquisition means acquire the total number of inventions by counting the acquired number of inventions per unit of applicants for all of the acquired publications.

Therefore, the productivity of the number of inventions of an enterprise can be judged more accurately even for enterprises filing numerous joint applications.

According to the present invention, since the patent application productivity is calculated in the predetermined technical field of a specific enterprise, it will be possible to judge the productivity of the number of inventions per technical field or per manufacturing department even for enterprises engaged in numerous fields of technical development.

Further, the present invention comprises:

official gazette acquisition means for acquiring, from a database, unexamined publications or publications of registrations based on patent applications or utility model applications filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

publication in which an examination request period has passed acquisition means for acquiring, from a database, unexamined publications or publications of registrations based on patent applications or utility model applications filed by the specified enterprise within a third specified period so that the examination request period pass before tabulation;

estimated examination request ratio acquisition means for acquiring the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and

output means for outputting the calculated examination request productivity to display means, printing means, recording medium, or another telecommunications device via a communication line.

Therefore, it will be possible to correct the patent application productivity based on the performance of previous examination requests, and the productivity of patent applications can be corrected into an easy-to-use format. By perusing the examination request productivity, the user will be able to predict the productivity or establishment of rights of future patent applications, and it will be possible to judge whether the enterprise has numerous effective applications, numerous defensive applications, or numerous wasteful applications.

Moreover, the present invention comprises:

first official gazette acquisition means for acquiring, from a database, unexamined publications or publications of registrations based on patent applications filed by a specified enterprise within a first specified period;

number-of-inventions acquisition means for acquiring number of inventions including the number of patent applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

fourth official gazette acquisition means for acquiring, from a database, publications of patent registrations subjected to registration from among the patent applications filed by the specified enterprise within a fourth specified period;

average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;

fifth official gazette acquisition means for acquiring, from a database, unexamined publications or publications of registrations based on patent applications filed by the specified enterprise within a fifth specified period, and the publications of patent registrations subjected to registration by the arrival of a predetermined time from among the patent applications;

cumulative number of patent applications acquisition means for acquiring, for each predetermined period, the cumulative number of patent applications filed by the specified enterprise within the specified period based on the acquired unexamined publications or publications of registrations;

cumulative number of patent registrations acquisition means for acquiring, for each predetermined time, the cumulative number of patent registrations of patents subjected to registration by the arrival of each predetermined time based on the acquired publication of registrations;

cumulative patent registration ratio calculation means for calculating, for each predetermined time, the cumulative patent registration ratio through dividing the acquired cumulative number of patent registrations by the cumulative number of patent applications;

estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;

patent acquisition productivity calculation means for calculating the patent acquisition productivity by multiplying the calculated patent application productivity with the estimated registration ratio; and

output means for outputting the calculated patent acquisition productivity to display means, printing means, recording medium, or another telecommunications device via a communication line.

Therefore, it will be possible to correct the patent application productivity based on the estimated registration ratio which is an estimate of the patents to be ultimate acquired, and the proper R&D cost and productivity creating the patents can be provided to the user. Since the important issue for an enterprise is the number of patents that it is able to ultimately acquire, by providing the patent acquisition productivity according to the present invention to the user, the user will be able to judge the strength or weakness of development capability per technical field.

Further, the present invention comprises:

display data generation means for generating display data for associating and displaying the patent application productivity and the examination request productivity in a graph or the like; and

output means for outputting the display data to display means, printing means, recording medium, or another telecommunications device via a communication line.

Therefore, it will be possible to evaluate, per enterprise or per technical field, whether the R&D cost are being effectively injected and whether the inventions in the filed patent applications are being requested for examination.

Moreover, it will be easy to search for enterprises that are efficiently filing patent applications in relation to the amount invested in the R&D cost and have a high examination request ratio, thereby of a posture of not wasting the inventions filed, and to search for enterprises that are not sufficiently creating inventions in relation to the invested amount and have a low examination request ratio, whereby the amount invested in the research and development is not being utilized effectively.

Further, the present invention comprises:

display data generation means for generating display data for associating and displaying the patent application productivity and the patent acquisition productivity in a graph or the like; and

output means for outputting the display data to display means, printing means, recording medium, or another telecommunications device via a communication line.

Therefore, it will be possible to easily research whether the enterprise is effectively injecting R&D cost and effectively acquiring patents.

Moreover, it will be possible to easily research an enterprise showing high patent application productivity even though the number of patent applications is small, or an enterprise have efficiently expended R&D cost in patent applications, or an enterprise superior in methods of research and development.

Further, by searching for enterprises in which patent applications are becoming registered as patents in an extremely high percentage, the patent registration ratio per R&D cost can be estimated to be high, and it will be possible to easily search for an enterprise that is highly likely to enter into a monopolistic state regarding its future technology.

Moreover, the present invention comprises:

display data generation means for generating display data for associating and displaying the examination request productivity and the patent acquisition productivity in a graph or the like; and

output means for outputting the display data to display means, printing means, recording medium, or another telecommunications device via a communication line.

Therefore, it will be possible to judge whether the inventions of a specified enterprise requested for examination as a result of the effective injection of R&D cost are being subject to the effective registration.

Further, it will be possible to easily judge whether an enterprise is making examination requests in a high rate for the inventions that it filed and whether such inventions are patented in a high rate, and whether the enterprise is patenting its inventions and taking care of such patents.

Moreover, when an enterprise has a low examination request productivity value and a low patent acquisition productivity value regarding its filed inventions, the number of examination requests will be low and the percentage of obtaining patents will also be low. Therefore, it will be possible to easily judge whether an enterprise has numerous patent applications going to waste with respect to the allowance of patents, or whether an enterprise may possibly have some strategic problems regarding patent applications.

Further, by operating the indexes relating to patent productivity in a plurality of industries or technical fields and displaying the distribution of the respective enterprises, the user will be able to easily discover the characteristics of the respective industries and the existence of characteristic enterprises in such industries. It will also be possible to utilize this in judging the value or status of the displayed enterprise.

**Claims**

1. An enterprise evaluation device, comprising:

   official gazette acquisition means for acquiring, from a database, publications of patent registrations subjected to registration from among patent applications filed by a specified enterprise within a specified period;
   average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration; and
   output means for outputting the calculated average period required for registration to display means, printing means, recording medium, or another telecommunications device via a communication line.

2. An enterprise evaluation device, comprising:

   official gazette acquisition means for acquiring, from a database, publications of patent registrations subjected to registration from among patent applications filed by a specified enterprise within a specified period;
   average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration and the average number of days of one year or one month; and
   output means for outputting the calculated average period required for registration to display means, printing means, recording medium, or another telecommunications device via a communication line.

3. An enterprise evaluation device, comprising:

   official gazette acquisition means for acquiring, from a database, publications of patent registrations subjected to registration from among patent applications in a predetermined technical field filed by a specified enterprise within a specified period;
   average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration; and
output means for outputting the calculated average period required for registration to display means, printing means, recording medium, or another telecommunications device via a communication line.

4. An enterprise evaluation device, comprising:

official gazette acquisition means for acquiring, from a database, publications of patent registrations subjected to registration from among patent applications in a predetermined technical field filed by a specified enterprise within a specified period;
average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration and the average number of days of one year or one month; and
output means for outputting the calculated average period required for registration to display means, printing means, recording medium, or another telecommunications device via a communication line.

5. The enterprise evaluation device according to any one of claims 1 to 4,
wherein the publications of registrations are publications of patent registrations, publications of examined patent applications, publications of examined utility model applications or publications of utility model registrations; and
wherein, when the publications of registrations are utility model publications, the patent application refers to a utility model application, and the patent subjected to registration refers to a utility model subjected to registration.

6. An enterprise evaluation device, comprising:

official gazette acquisition means for acquiring, from a database, unexamined publications requested for examination and publications of patent registrations subjected to registration from among patent applications filed by a specified enterprise within a specified period;
average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination; and
output means for outputting the calculated average period before examination request to display means, printing means, recording medium, or another telecommunications device via a communication line.

7. An enterprise evaluation device, comprising:

official gazette acquisition means for acquiring, from a database, unexamined publications requested for examination and publications of patent registrations subjected to registration from among patent applications filed by a specified enterprise within a specified period;
average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination and the average number of days of one year or one month; and
output means for outputting the calculated average period before examination request to display means, printing means, recording medium, or another telecommunications device via a communication line.

8. An enterprise evaluation device, comprising:

official gazette acquisition means for acquiring, from a database, unexamined publications requested for examination and publications of patent registrations subjected to registration from among patent applications in a predetermined technical field filed by a specified enterprise within a specified period;

average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination; and
output means for outputting the calculated average period before examination request to display means, printing means, recording medium, or another telecommunications device via a communication line.

9. An enterprise evaluation device, comprising:

official gazette acquisition means for acquiring, from a database, unexamined publications requested for examination and publications of patent registrations subjected to registration from among patent applications in a predetermined technical field filed by a specified enterprise within a specified period;
average period before examination request calculation means for calculating a period before examination request for individual applications by subtracting a filing date from a date of examination request described in the acquired unexamined publications or publications of registrations, calculating an accumulated period before examination request by counting the calculated period before examination request for all patents requested for examination, and calculating the average period before examination request through dividing the accumulated period before examination request by the total number of patents requested for examination and the average number of days of one year or one month; and
output means for outputting the calculated average period before examination request to display means, printing means, recording medium, or another telecommunications device via a communication line.

10. The enterprise evaluation device according to any one of claims 6 to 9,
wherein the publications of registrations are publications of patent registrations, publications of examined patent applications, publications of examined utility model applications or publications of utility model registrations,
wherein the unexamined publications are publications of unexamined patent applications, published Japanese translations of PCT international applications for patents, publications of unexamined utility model applications or published Japanese translations of PCT international applications for utility models; and
wherein, when the publications of registrations are utility model publications, the patent application refers to a utility model application, the patent subjected to registration refers to a utility model subjected to registration, and the patent requested for examination refers to a utility model requested for examination.

11. An enterprise evaluation device, comprising:

official gazette acquisition means for acquiring, from a database, unexamined publications or publications of registrations based on patent applications or utility model applications filed by a specified enterprise within a first specified period;
number-of-inventions acquisition means for acquiring number of inventions including the number of patent applications or utility model applications or the number of claims from the acquired unexamined publications or publications of registrations;
management-finance information acquisition means for acquiring R&D cost in the specified enterprise within a second specified period from a management-finance database storing management-finance information of enterprises;
patent application productivity calculation means for calculating the number of inventions per unit of R&D cost as the patent application productivity through dividing the acquired number of inventions by the R&D cost; and
output means for outputting the calculated patent application productivity to display means, printing means, recording medium, or another telecommunications device via a communication line.

12. An enterprise evaluation device, comprising:

official gazette acquisition means for acquiring, from a database, unexamined publications or publications of registrations based on patent applications or utility model applications filed by a specified enterprise within a first specified period;
number-of-inventions-per-applicant acquisition means for acquiring the number of patent applications or utility model applications or the number of claims from each of the acquired unexamined publications or publications of registrations, acquiring the number of applicants indicated in each of the acquired publications, and acquiring the number of inventions per unit of applicants through dividing the number of patent applications or utility model applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost; and

output means for outputting the calculated patent application productivity to display means, printing means, recording medium, or another telecommunications device via a communication line.

**13.** An enterprise evaluation device, comprising:

official gazette acquisition means for acquiring, from a database, unexamined publications or publications of registrations based on patent applications or utility model applications in a predetermined technical field filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost; and

output means for outputting the calculated patent application productivity to display means, printing means, recording medium, or another telecommunications device via a communication line.

**14.** An enterprise evaluation device, comprising:

official gazette acquisition means for acquiring, from a database, unexamined publications or publications of registrations based on patent applications or utility model applications in a predetermined technical field filed by a specified enterprise within a first specified period;

number-of-inventions-per-applicant acquisition means for acquiring the number of patent applications or utility model applications or the number of claims from each the acquired unexamined publications or publications of registrations, acquiring the number of applicants indicated in each of the acquired publications, and acquiring the number of inventions per unit of applicants through dividing the number of patent applications or utility model applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost; and

output means for outputting the calculated patent application productivity to display means, printing means, recording medium, or another telecommunications device via a communication line.

**15.** An enterprise evaluation device, comprising:

official gazette acquisition means for acquiring, from a database, unexamined publications or publications of registrations based on patent applications or utility model applications filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

publication in which an examination request period has passed acquisition means for acquiring, from a database, unexamined publications or publications of registrations based on patent applications or utility model applications filed by the specified enterprise within a third specified period so that the examination request period pass before tabulation;

estimated examination request ratio acquisition means for acquiring the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and

output means for outputting the calculated examination request productivity to display means, printing means, recording medium, or another telecommunications device via a communication line.

16. An enterprise evaluation device, comprising:

official gazette acquisition means for acquiring, from a database, unexamined publications or publications of registrations based on patent applications or utility model applications filed by a specified enterprise within a first specified period;

number-of-inventions-per-applicant acquisition means for acquiring the number of patent applications or utility model applications or the number of claims from each of the acquired unexamined publications or publications of registrations, acquiring the number of applicants indicated in each of the acquired publications, and acquiring the number of inventions per unit of applicants through dividing the number of patent applications or utility model applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

publication in which an examination request period has passed acquisition means for acquiring, from a database, unexamined publications or publications of registrations based on patent applications or utility model applications filed by the specified enterprise within a third specified period so that the examination request period pass before tabulation;

estimated examination request ratio acquisition means for acquiring the number of patent applications and the number of examination requests made in the applications from the unexamined publications or publications of registrations based on patent applications or utility model applications filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and

output means for outputting the calculated examination request productivity to display means, printing means, recording medium, or another telecommunications device via a communication line.

17. An enterprise evaluation device, comprising:

official gazette acquisition means for acquiring, from a database, unexamined publications or publications of registrations based on patent applications or utility model applications in a predetermined technical field filed by a specified enterprise within a first specified period;

number-of-inventions acquisition means for acquiring number of inventions including the number of patent applications or utility model applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

publication in which an examination request period has passed acquisition means for acquiring, from a database, unexamined publications or publications of registrations based on patent applications or utility model applications in a predetermined technical field filed by the specified enterprise within a third specified period so that the examination request period pass before tabulation;

estimated examination request ratio acquisition means for acquiring the number of patent applications and the number of examination requests made in the applications from the unexamined publications or publications of registrations based on patent applications or utility model applications in a predetermined technical field filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and

output means for outputting the calculated examination request productivity to display means, printing means, recording medium, or another telecommunications device via a communication line.

**18.** An enterprise evaluation device, comprising:

official gazette acquisition means for acquiring, from a database, unexamined publications or publications of registrations based on patent applications or utility model applications in a predetermined technical field filed by a specified enterprise within a first specified period;

number-of-inventions-per-applicant acquisition means for acquiring the number of patent applications or utility model applications or the number of claims from each of the acquired unexamined publications or publications of registrations, acquiring the number of applicants indicated in each of the acquired publications, and acquiring the number of inventions per unit of applicants through dividing the number of patent applications or utility model applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

publication in which an examination request period has passed acquisition means for acquiring, from a database, unexamined publications or publications of registrations based on patent applications or utility model applications in a predetermined technical field filed by the specified enterprise within a third specified period so that the examination request period pass before tabulation;

estimated examination request ratio acquisition means for acquiring the number of patent applications and the number of examination requests made in the applications from the unexamined publications or publications of registrations based on patent applications or utility model applications in a predetermined technical field filed within the third specified period, and calculating the estimated examination request ratio through dividing the acquired number of examination requests by the acquired number of patent applications;

examination request productivity calculation means for calculating the examination request productivity by multiplying the calculated patent application productivity with the estimated examination request ratio; and

output means for outputting the calculated examination request productivity to display means, printing means, recording medium, or another telecommunications device via a communication line.

**19.** An enterprise evaluation device, comprising:

first official gazette acquisition means for acquiring, from a database, unexamined publications or publications of registrations based on patent applications filed by a specified enterprise within a first specified period;

number-of-inventions acquisition means for acquiring number of inventions including the number of patent applications or the number of claims from the acquired unexamined publications or publications of registrations;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

fourth official gazette acquisition means for acquiring, from a database, publications of patent registrations subjected to registration from among the patent applications filed by the specified enterprise within a fourth specified period;

average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;

fifth official gazette acquisition means for acquiring, from a database, unexamined publications or publications of registrations based on patent applications filed by the specified enterprise within a fifth specified period, and the publications of patent registrations subjected to registration by the arrival of a predetermined time from among the patent applications;

cumulative number of patent applications acquisition means for acquiring, for each predetermined period, the cumulative number of patent applications filed by the specified enterprise within the specified period based on the acquired unexamined publications or publications of registrations;

cumulative number of patent registrations acquisition means for acquiring, for each predetermined time, the cumulative number of patent registrations of patents subjected to registration by the arrival of each predetermined time based on the acquired publication of registrations;

cumulative patent registration ratio calculation means for calculating, for each predetermined time, the cumulative patent registration ratio through dividing the acquired cumulative number of patent registrations by the cumulative number of patent applications;

estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;

patent acquisition productivity calculation means for calculating the patent acquisition productivity by multiplying the calculated patent application productivity with the estimated registration ratio; and

output means for outputting the calculated patent acquisition productivity to display means, printing means, recording medium, or another telecommunications device via a communication line.

**20.** An enterprise evaluation device, comprising:

first official gazette acquisition means for acquiring, from a database, unexamined publications or publications of registrations based on patent applications filed by a specified enterprise within a first specified period;

number-of-inventions-per-applicant acquisition means for acquiring the number of patent applications or the number of claims from each of the acquired unexamined publications or publications of registrations, acquiring the number of applicants indicated in each of the acquired publications, and acquiring the number of inventions per unit of applicants through dividing the number of patent applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

fourth official gazette acquisition means for acquiring, from a database, publications of patent registrations subjected to registration from among the patent applications filed by the specified enterprise within a fourth specified period;

average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;

fifth official gazette acquisition means for acquiring, from a database, unexamined publications or publications of registrations based on patent applications filed by the specified enterprise within a fifth specified period, and the publications of patent registrations subjected to registration by the arrival of a predetermined time from among the patent applications;

cumulative number of patent applications acquisition means for acquiring, for each predetermined period, the cumulative number of patent applications filed by the specified enterprise within the specified period based on the acquired unexamined publications or publications of registrations;

cumulative number of patent registrations acquisition means for acquiring, for each predetermined time, the cumulative number of patent registrations of patents subjected to registration by the arrival of each predetermined time based on the acquired publication of registrations;

cumulative patent registration ratio calculation means for calculating, for each predetermined time, the cumulative patent registration ratio through dividing the acquired cumulative number of patent registrations by the cumulative number of patent applications;

estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;

patent acquisition productivity calculation means for calculating the patent acquisition productivity by multiplying the calculated patent application productivity with the estimated registration ratio; and

output means for outputting the calculated patent acquisition productivity to display means, printing means, recording medium, or another telecommunications device via a communication line.

21. An enterprise evaluation device, comprising:

first official gazette acquisition means for acquiring, from a database, unexamined publications or publications of registrations based on patent applications in a predetermined technical field filed by a specified enterprise within a first specified period;

number-of-inventions-per-applicant acquisition means for acquiring the number of patent applications or the number of claims from each of the acquired unexamined publications or publications of registrations, acquiring the number of applicants indicated in each of the acquired publications, and acquiring the number of inventions per unit of applicants through dividing the number of patent applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

fourth official gazette acquisition means for acquiring, from a database, publications of patent registrations subjected to registration from among the patent applications in a predetermined technical field filed by the specified enterprise within a fourth specified period;

average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;

fifth official gazette acquisition means for acquiring, from a database, unexamined publications or publications of registrations based on patent applications in a predetermined technical field filed by the specified enterprise within a fifth specified period, and the publications of patent registrations subjected to registration by the arrival of a predetermined time from among the patent applications;

cumulative number of patent applications acquisition means for acquiring, for each predetermined period, the cumulative number of patent applications filed by the specified enterprise within the specified period based on the acquired unexamined publications or publications of registrations;

cumulative number of patent registrations acquisition means for acquiring, for each predetermined time, the cumulative number of patent registrations of patents subjected to registration by the arrival of each predetermined time based on the acquired publication of registrations;

cumulative patent registration ratio calculation means for calculating, for each predetermined time, the cumulative patent registration ratio through dividing the acquired cumulative number of patent registrations by the cumulative number of patent applications;

estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;

patent acquisition productivity calculation means for calculating the patent acquisition productivity by multiplying the calculated patent application productivity with the estimated registration ratio; and

output means for outputting the calculated patent acquisition productivity to display means, printing means, recording medium, or another telecommunications device via a communication line.

22. An enterprise evaluation device, comprising:

first official gazette acquisition means for acquiring, from a database, unexamined publications or publications of registrations based on patent applications in a predetermined technical field filed by a specified enterprise within a first specified period;

number-of-inventions-per-applicant acquisition means for acquiring the number of patent applications or the number of claims from each of the acquired unexamined publications or publications of registrations, acquiring the number of applicants indicated in each of the acquired publications, and acquiring the number of inventions per unit of applicants through dividing the number of patent applications or the number of claims by the number of applicants;

number-of-inventions acquisition means for acquiring the total number of inventions by counting the acquired number of inventions per unit of applicants for all of the acquired publications;

management-finance information acquisition means for acquiring R&D cost in the specified enterprise within a second specified period from a management-finance database storing management-finance information of enterprises;

patent application productivity calculation means for calculating the number of inventions per unit of R&D cost as the patent application productivity through dividing the acquired number of inventions by the R&D cost;

fourth official gazette acquisition means for acquiring, from a database, publications of patent registrations subjected to registration from among the patent applications in a predetermined technical field filed by the specified enterprise within a fourth specified period;

average period required for registration calculation means for calculating a required registration period for individual applications by subtracting a filing date from a registration date indicated in the acquired publications of registrations, calculating an accumulated required registration period by counting the calculated required registration period for all patents subjected to the registration, and calculating the average period required for registration through dividing the accumulated required registration period by the total number of patents subjected to the registration;

fifth official gazette acquisition means for acquiring, from a database, unexamined publications or publications of registrations based on patent applications in a predetermined technical field filed by the specified enterprise within a fifth specified period, and the publications of patent registrations subjected to registration by the arrival of a predetermined time from among the patent applications;

cumulative number of patent applications acquisition means for acquiring, for each predetermined period, the cumulative number of patent applications filed by the specified enterprise within the specified period based on the acquired unexamined publications or publications of registrations;

cumulative number of patent registrations acquisition means for acquiring, for each predetermined time, the cumulative number of patent registrations of patents subjected to registration by the arrival of each predetermined time based on the acquired publication of registrations;

cumulative patent registration ratio calculation means for calculating, for each predetermined time, the cumulative patent registration ratio through dividing the acquired cumulative number of patent registrations by the cumulative number of patent applications;

estimated registration ratio calculation means for calculating, for each predetermined time, the natural logarithm of the cumulative patent registration ratio and calculating the regression line or regression curve thereof, and calculating a future estimated registration ratio by substituting the calculated average period required for registration for the calculated regression line or regression curve;

patent acquisition productivity calculation means for calculating the patent acquisition productivity by multiplying the calculated patent application productivity with the estimated registration ratio; and

output means for outputting the calculated patent acquisition productivity to display means, printing means, recording medium, or another telecommunications device via a communication line.

23. The enterprise evaluation device according to any one of claims 19 to 22,
wherein the publications of registrations are publications of patent registrations, publications of examined patent applications, publications of examined utility model applications or publications of utility model registrations,
wherein the unexamined publications are publications of unexamined patent applications, published Japanese translations of PCT international applications for patents, publications of unexamined utility model applications or published Japanese translations of PCT international applications for utility models; and
wherein, when the publications of registrations are utility model publications, the patent application refers to a utility model application, the patent subjected to registration refers to a utility model subjected to registration.

24. The enterprise evaluation device according to claims 3, 4, 8, 9, 13, 14, 17, 18, 21 or 22, wherein the predetermined technical field is a technical field classified by IPC sub-classes, keywords or inventors.

25. An enterprise evaluation device, comprising:

display data generation means for generating display data for associating and displaying the patent application productivity according to any one of claims 11 to 14 and the examination request productivity according to any one of claims 15 to 18; and
output means for outputting the display data to display means, printing means, recording medium, or another telecommunications device via a communication line.

26. An enterprise evaluation device, comprising:

display data generation means for generating display data for associating and displaying the patent application productivity according to any one of claims 11 to 14 and the patent acquisition productivity according to any one of claims 19 to 22; and
output means for outputting the display data to display means, printing means, recording medium, or another telecommunications device via a communication line.

27. An enterprise evaluation device, comprising:

display data generation means for generating display data for associating and displaying the examination request productivity according to any one of claims 15 to 18 and the patent acquisition productivity according to any one of claims 19 to 22; and
output means for outputting the display data to display means, printing means, recording medium, or another telecommunications device via a communication line.

28. An enterprise evaluation program executed by information processing means of an enterprise evaluation device comprising:

official gazette acquisition means for acquiring publications of registrations from a database,
average period required for registration calculation means for calculating the average period required for registration,
output means for outputting the average period required for registration to display means or the like, and
information processing means capable of controlling the official gazette acquisition means, average period required for registration calculation means and output means,
wherein the information processing means realizes:
a function for making the official gazette acquisition means acquire, from a database, publications of patent registrations subjected to registration from among the patent applications filed by a specified enterprise within a specified period;
a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration; and
a function for making the output means output the calculated average period required for registration to display means, printing means, recording medium, or another telecommunications device via a communication line.

**29.** An enterprise evaluation program executed by information processing means of an enterprise evaluation device, comprising:

official gazette acquisition means for acquiring publications of registrations from a database,
average period required for registration calculation means for calculating the average period required for registration,
output means for outputting the average period required for registration to display means or the like, and
information processing means capable of controlling the official gazette acquisition means, average period required for registration calculation means and output means,
wherein the information processing means realizes:
a function for making the official gazette acquisition means acquire, from a database, publications of patent registrations subjected to registration from among patent applications filed by a specified enterprise within a specified period;
a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration and the average number of days of one year or one month; and
a function for making the output means output the calculated average period required for registration to display means, printing means, recording medium, or another telecommunications device via a communication line.

**30.** An enterprise evaluation program executed by information processing means of an enterprise evaluation device, comprising:

official gazette acquisition means for acquiring publications of registrations from a database,
average period required for registration calculation means for calculating the average period required for registration,
output means for outputting the average period required for registration to display means or the like, and
information processing means capable of controlling the official gazette acquisition means, average period required for registration calculation means and output means,
wherein the information processing means realizes:
a function for making the official gazette acquisition means acquire, from a database, publications of patent registrations subjected to registration from among patent applications in a predetermined technical field filed by a specified enterprise within a specified period;
a function for making the average period required for period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration; and
a function for making the output means output the calculated average period required for registration to display means, printing means, recording medium, or another telecommunications device via a communication line.

**31.** An enterprise evaluation program executed by information processing means of an enterprise evaluation device, comprising:

official gazette acquisition means for acquiring publications of registrations from a database,
average period required for registration calculation means for calculating the average period required for registration,
output means for outputting the average period required for registration to display means or the like, and
information processing means capable of controlling the official gazette acquisition means, average period required for registration calculation means and output means,
wherein the information processing means realizes:
a function for making the official gazette acquisition means acquire, from a database, publications of patent registrations subjected to registration from among patent applications in a predetermined technical field filed by a specified enterprise within a specified period;
a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration and the average number of days of one year or one month; and
a function for making the output means output the calculated average period required for registration to display means, printing means, recording medium, or another telecommunications device via a communication line.

32. The enterprise evaluation program according to any one of claims 28 to 31,
wherein the publications of registrations are publications of patent registrations, publications of examined patent applications; publications of examined utility model publications or publications of utility model registrations; and
wherein, when the publications of registrations are utility model publications, the patent application refers to a utility model application, and the patent subjected to registration refers to a utility model subjected to registration.

33. An enterprise evaluation program executed by information processing means of an enterprise evaluation device, comprising:

official gazette acquisition means for acquiring publications of registrations from a database,
average period before examination request calculation means for calculating the average period before examination request,
output means for outputting the average period before examination request to display means or the like, and
information processing means capable of controlling the official gazette acquisition means, average period before examination request calculation means and output means,
wherein the information processing means realizes:
a function for making the official gazette acquisition means acquire, from a database, unexamined publications requested for examination and publications of patent registrations subjected to registration from among patent applications filed by a specified enterprise within a specified period;
a function for making the average period before examination request calculation means calculate a period before examination request for individual applications by subtracting a filing date from a date of examination request described in the acquired unexamined publications or publications of registrations, calculate an accumulated period before examination request by counting the calculated period before examination request for all patents requested for examination, and calculate the average period before examination request through dividing the accumulated period before examination request by the total number of patents requested for examination; and
a function for making the output means output the calculated average period before examination request to display means, printing means, recording medium, or another telecommunications device via a communication line.

34. An enterprise evaluation program executed by information processing means of an enterprise evaluation device, comprising:

official gazette acquisition means for acquiring publications of registrations from a database,
average period before examination request calculation means for calculating the average period before examination request,
output means for outputting the average period before examination request to display means or the like, and
information processing means capable of controlling the official gazette acquisition means, average period before examination request calculation means and output means,
wherein the information processing means realizes:
a function for making the official gazette acquisition means acquire, from a database, unexamined publications requested for examination and publications of patent registrations subjected to registration from among patent applications filed by a specified enterprise within a specified period;
a function for making the average period before examination request calculation means calculate a period before examination request for individual applications by subtracting a filing date from a date of examination request described in the acquired unexamined publications or publications of registrations, calculate an accumulated period before examination request by counting the calculated period before examination request for all patents requested for examination, and calculate the average period before examination request through dividing the accumulated period before examination request by the total number of patents requested for examination and the average number of days of one year or one month; and
a function for making the output means output the calculated average period before examination request to display means, printing means, recording medium, or another telecommunications device via a communication line.

**35.** An enterprise evaluation program executed by information processing means of an enterprise evaluation device, comprising:

official gazette acquisition means for acquiring publications of registrations from a database,
average period before examination request calculation means for calculating the average period before examination request,
output means for outputting the average period before examination request to display means or the like, and information processing means capable of controlling the official gazette acquisition means, average period before examination request calculation means and output means,
wherein the information processing means realizes:
a function for making the official gazette acquisition means acquire, from a database, unexamined publications requested for examination and publications of patent registrations subjected to registration from among patent applications in a predetermined technical field filed by a specified enterprise within a specified period;
a function for making the average period before examination request calculation means calculate a period before examination request for individual applications by subtracting a filing date from a date of examination request described in the acquired unexamined publications or publications of registrations, calculate an accumulated period before examination request by counting the calculated period before examination request for all patents requested for examination, and calculate the average period before examination request through dividing the accumulated period before examination request by the total number of patents requested for examination; and
a function for making the output means output the calculated average period before examination request to display means, printing means, recording medium, or another telecommunications device via a communication line.

**36.** An enterprise evaluation program executed by information processing means of an enterprise evaluation device, comprising:

official gazette acquisition means for acquiring publications of registrations from a database,
average period before examination request calculation means for calculating the average period before examination request,
output means for outputting the average period before examination request to display means or the like, and information processing means capable of controlling the official gazette acquisition means, average period before examination request calculation means and output means,
wherein the information processing means realizes:
a function for making the official gazette acquisition means acquire, from a database, unexamined publications requested for examination and publications of patent registrations subjected to registration from among patent applications in a predetermined technical field filed.by a specified enterprise within a specified period;
a function for making the average period before examination request calculation means calculate a period before examination request for individual applications by subtracting a filing date from a date of examination request described in the acquired unexamined publications or publications of registrations, calculate an accumulated period before examination request by counting the calculated period before examination request for all patents requested for examination, and calculate the average period before examination request through dividing the accumulated period before examination request by the total number of patents requested for examination and the average number of days of one year or one month; and
a function for making the output means output the calculated average period before examination request to display means, printing means, recording medium, or another telecommunications device via a communication line.

**37.** The enterprise evaluation program according to any one of claims 33 to 36,
wherein the publications of registrations are publications of patent registrations, publications of examined patent applications, publications of examined utility model applications or publications of utility model registrations,
wherein the unexamined publications are publications of unexamined patent applications, published Japanese translations of PCT international applications for patents, publications of unexamined utility model applications or published Japanese translations of PCT international applications for utility models; and
wherein, when the publications of registrations are utility model publications, the patent application refers to a utility model application, the patent subjected to registration refers to a utility model subjected to registration, and the patent requested for examination refers to a utility model requested for examination.

**38.** An enterprise evaluation program executed by information processing means of an enterprise evaluation device, comprising:

official gazette acquisition means for acquiring unexamined publications or publications of registrations from a database,
number-of-inventions acquisition means for acquiring number of inventions,
management-finance information acquisition means for acquiring R&D cost from a management-finance database,
patent application productivity calculation means for calculating the number of inventions per unit of R&D cost as the patent application productivity,
output means for outputting the calculated patent application productivity to display means or the like, and
information processing means capable of controlling the official gazette acquisition means, number-of-inventions acquisition means, management-finance information acquisition means, patent application productivity calculation means and output means,
wherein the information processing means realizes:
a function for making the official gazette acquisition means acquire, from a database, unexamined publications or publications of registrations based on patent applications or utility model applications filed by a specified enterprise within a first specified period;
a function for making the number-of-inventions acquisition means acquire number of inventions including the number of patent applications or utility model applications or the number of claims from the acquired unexamined publications or publications of registrations;
a function for making the management-finance information acquisition means acquire R&D cost in the specified enterprise within a second specified period from a management-finance database storing management-finance information of enterprises;
a function for making the patent application productivity calculation means calculate the number of inventions per unit of R&D cost as the patent application productivity through dividing the acquired number of inventions by the R&D cost; and
a function for making the output means output the calculated patent application productivity to display means, printing means, recording medium, or another telecommunications device via a communication line.

**39.** An enterprise evaluation program executed by information processing means of an enterprise evaluation device, comprising:

official gazette acquisition means for acquiring unexamined publications or publications of registrations from a database,
number-of-inventions-per-applicant acquisition means for acquiring number of inventions per unit of applicants,
number-of-inventions acquisition means for acquiring the total number of inventions,
management-finance information acquisition means for acquiring R&D cost from a management-finance database,
patent application productivity calculation means for calculating the number of inventions per unit of R&D cost as the patent application productivity,
output means for outputting the calculated patent application productivity to display means or the like, and
information processing means capable of controlling the official gazette acquisition means, number-of-inventions-per-applicant acquisition means, number-of-inventions acquisition means, management-finance information acquisition means, patent application productivity calculation means and output means,
wherein the information processing means realizes:
a function for making the official gazette acquisition means acquire, from a database, unexamined publications or publications of registrations based on patent applications or utility model applications filed by a specified enterprise within a first specified period;
a function for making the number-of-inventions-per-applicant acquisition means acquire the number of patent applications or utility model applications or the number of claims from each of the acquired unexamined publications or publications of registrations, acquire the number of applicants indicated in each of the acquired publications, and acquire the number of inventions per unit of applicants through dividing the number of patent applications or utility model applications or the number of claims by the number of applicants;
a function for making the number-of-inventions acquisition means acquire the total number of inventions by counting the acquired number of inventions per unit of applicants for all of the acquired publications;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost; and

a function for making the output means output the calculated patent application productivity to display means, printing means, recording medium, or another telecommunications device via a communication line.

**40.** An enterprise evaluation program executed by information processing means of an enterprise evaluation device, comprising:

official gazette acquisition means for acquiring unexamined publications or publications of registrations from a database,

number-of-inventions acquisition means for acquiring number of inventions,

management-finance information acquisition means for acquiring R&D cost from a management-finance database,

patent application productivity calculation means for calculating the number of inventions per unit of R&D cost as the patent application productivity,

output means for outputting the calculated patent application productivity to display means or the like, and information processing means capable of controlling the official gazette acquisition means, number-of-inventions acquisition means, management-finance information acquisition means, patent application productivity calculation means and output means,

wherein the information processing means realizes:

a function for making the official gazette acquisition means acquire, from a database, unexamined publications or publications of registrations based on patent applications or utility model applications in a predetermined technical field filed by a specified enterprise within a first specified period;

a function for making the number-of-inventions acquisition means acquire number of inventions including the number of patent applications or utility model applications or the number of claims from the acquired unexamined publications or publications of registrations;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost; and

a function for making the output means output the calculated patent application productivity to display means, printing means, recording medium, or another telecommunications device via a communication line.

**41.** An enterprise evaluation program executed by information processing means of an enterprise evaluation device, comprising:

official gazette acquisition means for acquiring unexamined publications or publications of registrations from a database,

number-of-inventions-per-applicant acquisition means for acquiring number of inventions per unit of applicants,

number-of-inventions acquisition means for acquiring the total number of inventions,

management-finance information acquisition means for acquiring R&D cost from a management-finance database,

patent application productivity calculation means for calculating the number of inventions per unit of R&D cost as the patent application productivity,

output means for outputting the calculated patent application productivity to display means or the like, and information processing means capable of controlling the official gazette acquisition means, number-of-inventions-per-applicant acquisition means, number-of-inventions acquisition means, management-finance information acquisition means, patent application productivity calculation means and output means,

wherein the information processing means realizes:

a function for making the official gazette acquisition means acquire, from a database, unexamined publications or publications of registrations based on patent applications or utility model applications in a predetermined technical field filed by a specified enterprise within a first specified period;

a function for making the number-of-inventions-per-applicant acquisition means acquire the number of patent applications or utility model applications or the number of claims from each the acquired unexamined publications or publications of registrations, acquire the number of applicants indicated in each of the acquired publications, and acquire the number of inventions per unit of applicants through dividing the number of patent applications or utility model applications or the number of claims by the number of applicants;

a function for making the number-of-inventions acquisition means acquire the total number of inventions by counting the acquired number of inventions per unit of applicants for all of the acquired publications;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost; and

a function for making the output means output the calculated patent application productivity to display means, printing means, recording medium, or another telecommunications device via a communication line.

42. An enterprise evaluation program executed by information processing means of an enterprise evaluation device, comprising:

official gazette acquisition means for acquiring unexamined publications or publications of registrations from a database,

number-of-inventions acquisition means for acquiring number of inventions,

management-finance information acquisition means for acquiring R&D cost from a management-finance database,

patent application productivity calculation means for calculating the number of inventions per unit of R&D cost as the patent application productivity,

publication in which an examination request period has passed acquisition means for acquiring unexamined publications or publications of registrations from a database,

estimated examination request ratio acquisition means for acquiring the estimated examination request ratio,

examination request productivity calculation means for calculating the examination request productivity,

output means for outputting the calculated examination request productivity to display means or the like, and

information processing means capable of controlling the official gazette acquisition means, number-of-inventions acquisition means, management-finance information acquisition means, patent application productivity calculation means, publication in which an examination request period has passed acquisition means, estimated examination request ratio acquisition means, examination request productivity calculation means and output means,

wherein the information processing means realizes:

a function for making the official gazette acquisition means acquire, from a database, unexamined publications or publications of registrations based on patent applications or utility model applications filed by a specified enterprise within a first specified period;

a function for making the number-of-inventions acquisition means acquire number of inventions including the number of patent applications or utility model applications or the number of claims from the acquired unexamined publications or publications of registrations;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the publication in which an examination request period has passed acquisition means acquire, from a database, unexamined publications or publications of registrations based on patent applications or utility model applications filed by the specified enterprise within a third specified period so that the examination request period pass before tabulation;

a function for making the estimated examination request ratio acquisition means acquire the number of patent applications and the number of examination requests made in the applications from the unexamined publications or publications of registrations based on patent applications or utility model applications-filed within the third specified period, and calculate the estimated examination request ratio through dividing the acquired number of examination requests by the acquired number of patent applications;

a function for making the examination request productivity calculation means calculate the examination request productivity by multiplying the calculated patent application productivity with the estimated examination request ratio; and

a function for making the output means output the calculated examination request productivity to display means, printing means, recording medium, or another telecommunications device via a communication line.

43. An enterprise evaluation program executed by information processing means of an enterprise evaluation device, comprising:

official gazette acquisition means for acquiring unexamined publications or publications of registrations from a database,

number-of-inventions-per-applicant acquisition means for acquiring number of inventions per unit of applicants,

number-of-inventions acquisition means for acquiring the total number of inventions,

management-finance information acquisition means for acquiring R&D cost from a management-finance database,

patent application productivity calculation means for calculating the number of inventions per unit of R&D cost as the patent application productivity,

publication in which an examination request period has passed acquisition means for acquiring unexamined publications or publications of registrations from a database,

estimated examination request ratio acquisition means for acquiring the estimated examination request ratio,

examination request productivity calculation means for calculating the examination request productivity,

output means for outputting the calculated examination request productivity to display means or the like, and

information processing means capable of controlling the official gazette acquisition means, number-of-inventions-per-applicant acquisition means, number-of-inventions acquisition means, management-finance information acquisition means, patent application productivity calculation means, publication in which an examination request period has passed acquisition means, estimated examination request ratio acquisition means, examination request productivity calculation means and output means,

wherein the information processing means realizes:

a function for making the official gazette acquisition means acquire, from a database, unexamined publications or publications of registrations based on patent applications or utility model applications filed by a specified enterprise within a first specified period;

a function for making the number-of-inventions-per-applicant acquisition means acquire the number of patent applications or utility model applications or the number of claims from each of the acquired unexamined publications or publications of registrations, acquire the number of applicants indicated in each of the acquired publications, and acquire the number of inventions per unit of applicants through dividing the number of patent applications or utility model applications or the number of claims by the number of applicants;

a function for making the number-of-inventions acquisition means acquire the total number of inventions by counting the acquired number of inventions per unit of applicants for all of the acquired publications;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the publication in which an examination request period has passed acquisition means acquire, from a database, unexamined publications or publications of registrations based on patent applications or utility model applications filed by the specified enterprise within a third specified period so that the examination request period pass before tabulation;

a function for making the estimated examination request ratio acquisition means acquire the number of patent applications and the number of examination requests made in the applications from the unexamined publications or publications of registrations based on patent applications or utility model applications filed within the third specified period, and calculate the estimated examination request ratio through dividing the acquired number of examination requests by the acquired number of patent applications;

a function for making the examination request productivity calculation means calculate the examination request productivity by multiplying the calculated patent application productivity with the estimated examination request ratio; and

a function for making the output means output the calculated examination request productivity to display means, printing means, recording medium, or another telecommunications device via a communication line.

**44.** An enterprise evaluation program executed by information processing means of an enterprise evaluation device, comprising:

official gazette acquisition means for acquiring unexamined publications or publications of registrations from a database,

number-of-inventions acquisition means for acquiring number of inventions,

management-finance information acquisition means for acquiring R&D cost from a management-finance database,

patent application productivity calculation means for calculating the number of inventions per unit of R&D cost as the patent application productivity,

publication in which an examination request period has passed acquisition means for acquiring unexamined publications or publications of registrations from a database,

estimated examination request ratio acquisition means for acquiring the estimated examination request ratio,

examination request productivity calculation means for calculating the examination request productivity,

output means for outputting the calculated examination request productivity to display means or the like, and

information processing means capable of controlling the official gazette acquisition means, number-of-inventions acquisition means, management-finance information acquisition means, patent application productivity calculation means, publication in which an examination request period has.passed acquisition means, estimated examination request ratio acquisition means, examination request productivity calculation means and output means;

wherein the information processing means realizes:

a function for making the official gazette acquisition means acquire, from a database, unexamined publications or publications of registrations based on patent applications or utility model applications in a predetermined technical field filed by a specified enterprise within a first specified period;

a function for making the number-of-inventions acquisition means acquire number of inventions including the number of patent applications or utility model applications or the number of claims from the acquired unexamined publications or publications of registrations;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired.number of inventions by the R&D cost;

a function for making the publication in which an examination request period has passed acquisition means acquire, from a database, unexamined publications or publications of registrations based on patent applications or utility model applications in a predetermined technical field filed by the specified enterprise within a third specified period so that the examination request period pass before tabulation;

a function for making the estimated examination request ratio acquisition means acquire the number of patent applications and the number of examination requests made in the applications from the unexamined publications or publications of registrations based on patent applications or utility model applications in a predetermined technical field filed within the third specified period, and calculate the estimated examination request ratio through dividing the acquired number of examination requests by the acquired number of patent applications;

a function for making the examination request productivity calculation means calculate the examination request productivity by multiplying the calculated patent application productivity with the estimated examination request ratio; and

a function for making the output means output the calculated examination request productivity to display means, printing means, recording medium, or another telecommunications device via a communication line.

**45.** An enterprise evaluation program executed by information processing means of an enterprise evaluation device, comprising:

official gazette acquisition means for acquiring unexamined publications or publications of registrations from a database,

number-of-inventions-per-applicant acquisition means for acquiring number of inventions per unit of applicants,

number-of-inventions acquisition means for acquiring the total number of inventions,

management-finance information acquisition means for acquiring R&D cost from a management-finance database,

patent application productivity calculation means for calculating the number of inventions per unit of R&D cost as the patent application productivity,

publication in which an examination request period has passed acquisition means for acquiring unexamined publications or publications of registrations from a database,

estimated examination request ratio acquisition means for acquiring the estimated examination request ratio,

examination request productivity calculation means for calculating the examination request productivity,

output means for outputting the calculated examination request productivity to display means or the like, and

information processing means capable of controlling the official gazette acquisition means, number-of-inventions-per-applicant acquisition means, number-of-inventions acquisition means, management-finance information acquisition means, patent application productivity calculation means, publication in which an examination request period has passed acquisition means, estimated examination request ratio acquisition means, examination request productivity calculation means and output means,

wherein the information processing means realizes:

a function for making the official gazette acquisition means acquire, from a database, unexamined publications or publications of registrations based on patent applications or utility model applications in a predetermined technical field filed by a specified enterprise within a first specified period;

a function for making the number-of-inventions-per-applicant acquisition means acquire the number of patent applications or utility model applications or the number of claims from each of the acquired unexamined publications or publications of registrations, acquire the number of applicants indicated in each of the acquired publications, and acquire the number of inventions per unit of applicants through dividing the number of patent applications or utility model applications or the number of claims by the number of applicants;

a function for making the number-of-inventions acquisition means acquire the total number of inventions by counting the acquired number of inventions per unit of applicants for all of the acquired publications;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the publication in which an examination request period has passed acquisition means acquire, from a database, unexamined publications or publications of registrations based on patent applications or utility model applications in a predetermined technical field filed by the specified enterprise within a third specified period so that the examination request period pass before tabulation;

a function for making the estimated examination request ratio acquisition means acquire the number of patent applications and the number of examination requests made in the applications from the unexamined publications or publications of registrations based on patent applications or utility model applications in a predetermined technical field filed within the third specified period, and calculate the estimated examination request ratio through dividing the acquired number of examination requests by the acquired number of patent applications;

a function for making the examination request productivity calculation means calculate the examination request productivity by multiplying the calculated patent application productivity with the estimated examination request ratio; and

a function for making the output means output the calculated examination request productivity to display means, printing means, recording medium, or another telecommunications device via a communication line.

**46.** An enterprise evaluation program executed by information processing means of an enterprise evaluation device, comprising:

first official gazette acquisition means for acquiring unexamined publications or publications of registrations from a database,

number-of-inventions acquisition means for acquiring number of inventions,

management-finance information acquisition means for acquiring R&D cost from a management-finance database,

patent application productivity calculation means for calculating the number of inventions per unit of R&D cost as the patent application productivity,

fourth official gazette acquisition means for acquiring publications of registrations from a database,

average period required for registration calculation means for calculating the average period required for registration,

fifth official gazette acquisition means for acquiring publications of registrations from a database,

cumulative number of patent applications acquisition means for acquiring the cumulative number of patent applications for each predetermined period,

cumulative number of patent registrations acquisition means for acquiring the cumulative number of patent registrations for each predetermined time,

cumulative patent registration ratio calculation means for calculating the cumulative patent registration ratio for each predetermined time,

estimated registration ratio calculation means for calculating a future estimated registration ratio,

patent acquisition productivity calculation means for calculating the patent acquisition productivity,

output means for outputting the calculated patent acquisition productivity to display means or the like, and

information processing means capable of controlling the first official gazette acquisition means, number-of-inventions acquisition means, management-finance information acquisition means, patent application productivity calculation means, fourth official gazette acquisition means, average period required for registration calculation means, fifth official gazette acquisition means, cumulative number of patent applications acquisition means, cumulative number of patent registrations acquisition means, cumulative patent registration ratio calculation means, estimated registration ratio calculation means, patent acquisition productivity calculation means and output means,

wherein the information processing means realizes:

a function for making the first official gazette acquisition means acquire, from a database, unexamined publications or publications of registrations based on patent applications filed by a specified enterprise within a first specified period;

a function for making the number-of-inventions acquisition means acquire number of inventions including the number of patent applications or the number of claims from the acquired unexamined publications or publications of registrations;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the fourth official gazette acquisition means acquire, from a database, publications of patent registrations subjected to registration from among the patent applications filed by the specified enterprise within a fourth specified period;

a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration;

a function for making the fifth official gazette acquisition means acquire, from a database, unexamined publications or publications of registrations based on patent applications filed by the specified enterprise within a fifth specified period, and the publications of patent registrations subjected to registration by the arrival of a predetermined time from among the patent applications;

a function for making the cumulative number of patent applications acquisition means acquire, for each predetermined period, the cumulative number of patent applications filed by the specified enterprise within the specified period based on the acquired unexamined publications or publications of registrations;

a function for making the cumulative number of patent registrations acquisition means acquire, for each predetermined time, the cumulative number of patent registrations of patents subjected to registration by the arrival of each predetermined time based on the acquired publication of registrations;

a function for making the cumulative patent registration ratio calculation means calculate, for each predetermined time, the cumulative patent registration ratio through dividing the acquired cumulative number of patent registrations by the cumulative number of patent applications;

a function for making the estimated registration ratio calculation means calculate, for each predetermined time, the natural logarithm of the cumulative patent registration ratio and calculate the regression line or regression curve thereof, and calculate a future estimated registration ratio by substituting the calculated average period required for registration for the calculated regression line or regression curve;

a function for making the patent acquisition productivity calculation means calculate-the patent acquisition productivity by multiplying the calculated patent application productivity with the estimated registration ratio; and

a function for making the output means output the calculated patent acquisition productivity to display means, printing means, recording medium, or another telecommunications device via a communication line.

47. An enterprise evaluation program executed by information processing means of an enterprise evaluation device, comprising:

first official gazette acquisition means for acquiring unexamined publications or publications of registrations from a database,

number-of-inventions-per-applicant acquisition means for acquiring number of inventions per unit of applicants,

number-of-inventions acquisition means for acquiring the total number of inventions,

management-finance information acquisition means for acquiring R&D cost from a management-finance database,

patent application productivity calculation means for calculating the number of inventions per unit of R&D cost as the patent application productivity,

fourth official gazette acquisition means for acquiring publications of registrations from a database,

average period required for registration calculation means for calculating the average period required for registration,

fifth official gazette acquisition means for acquiring publications of registrations from a database,

cumulative number of patent applications acquisition means for acquiring the cumulative number of patent applications for each predetermined period,

cumulative number of patent registrations acquisition means for acquiring the cumulative number of patent registrations for each predetermined time,

cumulative patent registration ratio calculation means for calculating the cumulative patent registration ratio for each predetermined time,

estimated registration ratio calculation means for calculating a future estimated registration ratio,

patent acquisition productivity calculation means for calculating the patent acquisition productivity,

output means for outputting the calculated patent acquisition productivity to display means or the like, and

information processing means capable of controlling the first official gazette acquisition means, number-of-inventions-per-applicant acquisition means, number-of-inventions acquisition means, management-finance information acquisition means, patent application productivity calculation means, fourth official gazette acquisition means, average period required for registration calculation means, fifth official gazette acquisition means, cumulative number of patent applications acquisition means, cumulative number of patent registrations acquisition means, cumulative patent registration ratio calculation means, estimated registration ratio calculation means, patent acquisition productivity calculation means and output means,

wherein the information processing means realizes:

a function for making the first official gazette acquisition means acquire, from a database, unexamined publications or publications of registrations based on patent applications filed by a specified enterprise within a first specified period;

a function for making the number-of-inventions-per-applicant acquisition means acquire the number of patent applications or the number of claims from each of the acquired unexamined publications or publications of registrations, acquire the number of applicants indicated in each of the acquired publications, and acquire the number of inventions per unit of applicants through dividing the number of patent applications or the number of claims by the number of applicants;

a function for making the number-of-inventions acquisition means acquire the total number of inventions by counting the acquired number of inventions per unit of applicants for all of the acquired publications;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the fourth official gazette acquisition means acquire, from a database, publications of patent registrations subjected to registration from among the patent applications filed by the specified enterprise within a fourth specified period;

a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration;

a function for making the fifth official gazette acquisition means acquire, from a database, unexamined publications or publications of registrations based on patent applications filed by the specified enterprise within a fifth specified period, and the publications of patent registrations subjected to registration by the arrival of a predetermined time from among the patent applications;

a function for making the cumulative number of patent applications acquisition means acquire, for each predetermined period, the cumulative number of patent applications filed by the specified enterprise within the specified period based on the acquired unexamined publications or publications of registrations;

a function for making the cumulative number of patent registrations acquisition means acquire, for each predetermined time, the cumulative number of patent registrations of patents subjected to registration by the arrival of each predetermined time based on the acquired publication of registrations;

a function for making the cumulative patent registration ratio calculation means calculate, for each predetermined time, the cumulative patent registration ratio through dividing the acquired cumulative number of patent registrations by the cumulative number of patent applications;

a function for making the estimated registration ratio calculation means calculate, for each predetermined time, the natural logarithm of the cumulative patent registration ratio and calculate the regression line or regression curve thereof, and calculate a future estimated registration ratio by substituting the calculated average period required for registration for the calculated regression line or regression curve;

a function for making the patent acquisition productivity calculation means calculate the patent acquisition productivity by multiplying the calculated patent application productivity with the estimated registration ratio; and

a function for making the output means output the calculated patent acquisition productivity to display means, printing means, recording medium, or another telecommunications device via a communication line.

48. An enterprise evaluation program executed by information processing means of an enterprise evaluation device, comprising:

first official gazette acquisition means for acquiring unexamined publications or publications of registrations from a database,

number-of-inventions acquisition means for acquiring number of inventions,

management-finance information acquisition means for acquiring R&D cost from a management-finance database,

patent application productivity calculation means for calculating the number of inventions per unit of R&D cost as the patent application productivity,

fourth official gazette acquisition means for acquiring publications of registrations from a database,

average period required for registration calculation means for calculating the average period required for registration,

fifth official gazette acquisition means for acquiring publications of registrations from a database,

cumulative number of patent applications acquisition means for acquiring the cumulative number of patent applications for each predetermined period,

cumulative number of patent registrations acquisition means for acquiring the cumulative number of patent registrations for each predetermined time,

cumulative patent registration ratio calculation means for calculating the cumulative patent registration ratio for each predetermined time,

estimated registration ratio calculation means for calculating a future estimated registration ratio,

patent acquisition productivity calculation means for calculating the patent acquisition productivity,

output means for outputting the calculated patent acquisition productivity to display means or the like, and

information processing means capable of controlling the first official gazette acquisition means, number-of-inventions acquisition means, management-finance information acquisition means, patent application productivity calculation means, fourth official gazette acquisition means, average period required for registration calculation means, fifth official gazette acquisition means, cumulative number of patent applications acquisition means, cumulative number of patent registrations acquisition means, cumulative patent registration ratio calculation means, estimated registration ratio calculation means, patent acquisition productivity calculation means and output means,

wherein the information processing means realizes:

a function for making the first official gazette acquisition means acquire, from a database, unexamined publications or publications of registrations based on patent applications in a predetermined technical field filed by a specified enterprise within a first specified period;

a function for making the number-of-inventions acquisition means acquire number of inventions including the number of patent applications or the number of claims from the acquired unexamined publications or publications of registrations;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the fourth official gazette acquisition means acquire, from a database, publications of patent registrations subjected to registration from among the patent'applications in a predetermined technical field filed by the specified enterprise within a fourth specified period;

a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration;

a function for making the fifth official gazette acquisition means acquire, from a database, unexamined publications or publications of registrations based on patent applications in a predetermined technical field filed by the specified enterprise within a fifth specified period, and the publications of patent registrations subjected to registration by the arrival of a predetermined time from among the patent applications;

a function for making the cumulative number of patent applications acquisition means acquire, for each predetermined period, the cumulative number of patent applications filed by the specified enterprise within the specified period based on the acquired unexamined publications or publications of registrations;

a function for making the cumulative number of patent registrations acquisition means acquire, for each predetermined time, the cumulative number of patent registrations of patents subjected to registration by the arrival of each predetermined time based on the acquired publication of registrations;

a function for making the cumulative patent registration ratio calculation means calculate, for each predetermined time, the cumulative patent registration ratio through dividing the acquired cumulative number of patent registrations by the cumulative number of patent applications;

a function for making the estimated registration ratio calculation means calculate, for each predetermined time, the natural logarithm of the cumulative patent registration ratio and calculate the regression line or regression curve thereof, and calculate a future estimated registration ratio by substituting the calculated average period required for registration for the calculated regression line or regression curve;

a function for making the patent acquisition productivity calculation means calculate the patent acquisition productivity by multiplying the calculated patent application productivity with the estimated registration ratio; and

a function for making the output means output the calculated patent acquisition productivity to display means, printing means, recording medium, or another telecommunications device via a communication line.

49. An enterprise evaluation program executed by information processing means of an enterprise evaluation device, comprising:

first official gazette acquisition means for acquiring unexamined publications or publications of registrations from a database,

number-of-inventions-per-applicant acquisition means for acquiring number of inventions per unit of applicants,

number-of-inventions acquisition means for acquiring the total number of inventions,

management-finance information acquisition means for acquiring R&D cost from a management-finance database,

patent application productivity calculation means for calculating the number of inventions per unit of R&D cost as the patent application productivity,

fourth official gazette acquisition means for acquiring publications of registrations from a database,

average period required for registration calculation means for calculating the average period required for registration,

fifth official gazette acquisition means for acquiring publications of registrations from a database,

cumulative number of patent applications acquisition means for acquiring the cumulative number of patent applications for each predetermined period,

cumulative number of patent registrations acquisition means for acquiring the cumulative number of patent registrations for each predetermined time,

cumulative patent registration ratio calculation means for calculating the cumulative patent registration ratio for each predetermined time,

estimated registration ratio calculation means for calculating a future estimated registration ratio,

patent acquisition productivity calculation means for calculating the patent acquisition productivity,

output means for outputting the calculated patent acquisition productivity to display means or the like, and

information processing means capable of controlling the first official gazette acquisition means, number-of-inventions-per-applicant acquisition means, number-of-inventions acquisition means, management-finance information acquisition means, patent application productivity calculation means, fourth official gazette acquisition means, average period required for registration calculation means, fifth official gazette acquisition means, cumulative number of patent applications acquisition means, cumulative number of patent registrations acquisition means, cumulative patent registration ratio calculation means, estimated registration ratio calculation means, patent acquisition productivity calculation means and output means,

wherein the information processing means realizes:

a function for making the first official gazette acquisition means acquire, from a database, unexamined publications or publications of registrations based on patent applications in a predetermined technical field filed by a specified enterprise within a first specified period;

a function for making the number-of-inventions-per-applicant acquisition means acquire the number of patent applications or the number of claims from each of the acquired unexamined publications or publications of registrations, acquire the number of applicants indicated in each of the acquired publications, and acquire the number of inventions per unit of applicants through dividing the number of patent applications or the number of claims by the number of applicants;

a function for making the number-of-inventions acquisition means acquire the total number of inventions by counting the acquired number of inventions per unit of applicants for all of the acquired publications;

a function for making the management-finance information acquisition means acquire R&D cost in the specified enterprise within a second specified period from a management-finance database storing management-finance information of enterprises;

a function for making the patent application productivity calculation means calculate the number of inventions per unit of R&D cost as the patent application productivity through dividing the acquired number of inventions by the R&D cost;

a function for making the fourth official gazette acquisition means acquire, from a database, publications of patent registrations subjected to registration from among the patent applications in a predetermined technical field filed by the specified enterprise within a fourth specified period;

a function for making the average period required for registration calculation means calculate a required registration period for individual applications by subtracting a filing date from a registration date indicated in the acquired publications of registrations, calculate an accumulated required registration period by counting the calculated required registration period for all patents subjected to the registration, and calculate the average period required for registration through dividing the accumulated required registration period by the total number of patents subjected to the registration;

a function for making the fifth official gazette acquisition means acquire, from a database, unexamined publications or publications of registrations based on patent applications in a predetermined technical field filed by the specified enterprise within a fifth specified period, and the publications of patent registrations subjected to registration by the arrival of a predetermined time from among the patent applications;

a function for making the cumulative number of patent applications acquisition means acquire, for each predetermined period, the cumulative number of patent applications filed by the specified enterprise within the specified period based on the acquired unexamined publications or publications of registrations;

a function for making the cumulative number of patent registrations acquisition means acquire, for each predetermined time, the cumulative number of patent registrations of patents subjected to registration by the arrival of each predetermined time based on the acquired publication of registrations;

a function for making the cumulative patent registration ratio calculation means calculate, for each predetermined time, the cumulative patent registration ratio through dividing the acquired cumulative number of patent registrations by the cumulative number of patent applications;

a function for making the estimated registration ratio calculation means calculate, for each predetermined time, the natural logarithm of the cumulative patent registration ratio and calculate the regression line or regression curve thereof, and calculate a future estimated registration ratio by substituting the calculated average period required for registration for the calculated regression line or regression curve;

a function for making the patent acquisition productivity calculation means calculate the patent acquisition productivity by multiplying the calculated patent application productivity with the estimated registration ratio; and

a function for making the output means output the calculated patent acquisition productivity to display means, printing means, recording medium, or another telecommunications device via a communication line.

50. The enterprise evaluation device according to any one of claims 46 to 49,
wherein the publications of registrations are publications of patent registrations, publications of examined patent applications, publications of examined utility model applications or publications of utility model registrations,
wherein the unexamined publications are publications of unexamined patent applications, published Japanese translations of PCT international applications for patents, publications of unexamined utility model applications or published Japanese translations of PCT international applications for utility models; and
wherein, when the publications of registrations are utility model publications, the patent application refers to a utility model application, and the patent subjected to registration refers to a utility model subjected to registration.

51. The enterprise evaluation device according to claims 30, 31, 35, 36, 40, 41, 44, 45, 48 or 49, wherein the predetermined technical field is a technical field classified by IPC sub-classes, keywords or inventors.

52. An enterprise evaluation program executed by information processing means of an enterprise evaluation device, comprising:

display data generation means for generating display data,
output means for outputting the display data to display means or the like, and
information processing means capable of acquiring patent application productivity and examination request productivity, and controlling the display data generation means and output means,
wherein the information processing means realizes:
a function for acquiring the patent application productivity according to any one of claims 38 to 41 and the examination request productivity according to any one of claims 42 to 45;
a function for making the display data generation means generate display data for associating and displaying the acquired patent application productivity and examination request productivity; and
a function for making the output means output the display data to display means, printing means, recording medium, or another telecommunications device via a communication line.

53. An enterprise evaluation program executed by information processing means of an enterprise evaluation device, comprising:

display data generation means for generating display data,
output means for outputting the display data to display means or the like, and
information processing means capable of acquiring patent application productivity and patent acquisition productivity, and controlling the display data generation means and output means,
wherein the information processing means realizes:
a function for acquiring the patent application productivity according to any one of claims 38 to 41 and the patent acquisition productivity according to any one of claims 46 to 49;
a function for making the display data generation means generate display data for associating and displaying the patent application productivity and the patent acquisition productivity; and
a function for making the output means output the display data to display means, printing means, recording medium, or another telecommunications device via a communication line.

54. An enterprise evaluation program executed by information processing means of an enterprise evaluation device, comprising:

display data generation means for generating display data,
output means for outputting the display data to display means or the like, and
information processing means capable of acquiring examination request productivity and patent acquisition productivity, and controlling the display data generation means and output means,
wherein the information processing means realizes:
a function for acquiring the examination request productivity according to any one of claims 42 to 45 and the patent acquisition productivity according to any one of claims 46 to 49;
a function for making the display data generation means generate display data for associating and displaying the examination request productivity and the patent acquisition productivity; and
a function for makirig the output means output the display data to display means, printing means, recording medium, or another telecommunications device via a communication line.

**FIG. 1**

**FIG. 2**

## FIG. 3

(a) MANAGEMENT-FINANCE INFORMATION

| (A) information on Size of Company | (B) Financial Information of Company | | (C) Combined Information of Company |
|---|---|---|---|
| Number of employees | Sales volume | Total assets | Sales volume per employee |
| Number of officers | Sales profit | Tangible fixed assets | R&D cost per employee |
| Capital | Operating profit | Amount of capital investment | Sales profit per employee |
| Number of plants/offices | Gross operating profit | Depreciation costs | Operating profit per employee |
| Ground floor area | Sales profit ratio | Patent royalty income | Gross operating profit per employee |
| Total floor area | Operating profit ratio | Financial assets (liquid assets and liquid liabilities) | |
| Ownership ratio of premises | Gross operating profit ratio | Interests paid/discounts | |
| Ownership ratio of building | Total market value to total assets ratio | Long-term prime rate (long-term borrowing rate) | |
| Number of employees (consolidated basis) | Total market value to stockholders' equity ratio | Short-term prime rate | |
| Number of officers (consolidated basis) | Total market value to sales volume ratio | Interest on bonds | |
| Capital (consolidated basis) | Total market value to gross operating profit ratio | 10-year government bond yield ratio | |
| Number of plants/offices (consolidated basis) | Total market value to operating profit ratio | Personnel costs, (including officers' compensation and labor costs) | |
| Ground floor area (consolidated basis) | Gross operating profit to total assets ratio | Welfare expenses | |
| Total floor area (consolidated basis) | Gross operating profit to stockholders' equity ratio | Capital stock | |
| Ownership ratio of premises (consolidated basis) | Operating profit to total assets ratio | Total number of outstanding shares | |
| Ownership ratio of building (consolidated basis) | Operating profit to Stockholders' equity ratio | Stock price (Nikkei Stock Average) | |
| | Stockholders' equity ratio | Taxes and public charges | |
| | Balance of total market value and stockholders' equity | | |
| | R&D cost | | |
| | R&D cost to sales volume ratio | | |
| | R&D cost to operating profit ratio | | |
| | R&D cost to gross operating profit ratio | | |

FIG. 4A

(b) PATENT INFORMATION

| (A) Application Related Matters | |
|---|---|
| Filing date | Number of filings |
| Application number | Number of request for examination |
| Title of the invention | Number of filings based on IPC |
| Inventors | Number of filings based on keywords |
| Applicants | Number of claims filed |
| Scope of claims | Years spent on examination requests |
| Abstract | Number of inventors |
| IPC | Number of applicants (number of joint applications) |
| FI | Number of domestic priority-claiming applications |
| F term | Number of domestic priority bases claimed in applications |
| Agents | Number of priority bases from foreign countries |
| Publication date | Number of applications in which an exception to loss of novelty is requested |
| Publication number | Number of applications in which examination is requested before laid-open |
| Existence of request for examination | Number of divisional applications |
| Date of request for examination | Number of withdrawn/abandoned applications |
| Priority date | Number of converted applications |
| Priority number | Number of expedited examinations |
| Date of publication of translations of PCT international application | Number of filings (in each country) |
| Number for publication of translations of PCT international application | Number of inventors in applications (in each country) |
| Date of domestic re-publication of PCT international application | Number of applicants in applications (in each country) |
| Number for domestic re-publication of PCT international application | Number of priority-claiming applications (in each country) |
| International filing date | Number of priority bases claimed in applications (in each country) |
| International application number | Number of divisional applications (in each country) |
| International publication date | |
| International publication number | |
| Designated countries | |

FIG. 4B

(b) PATENT INFORMATION

| (B) Registration Related Matters | |
|---|---|
| Registration date | Number of registrations |
| Issue date of registration | Number of claims registered |
| Registration number | Number of expired patents after registration |
| Scheduled day of expiration of right | Years spent from application to registration |
| Date of publication of examined application | Patent registration rate |
| Publication number of examined application | Patent allowance rate |
| Annual maintenance fee payment status | Years spent from request for examination to registration |
| Number of final decisions for rejection | Number of applications in which preferential examination is conducted |
| Date of final decision for rejection | Number of rejections issued |
| Number of claims decided to be finally rejected | Number of amendments filed |
| Number of appeals against final decision for rejection | Number of amendments filed (for formalities) |
| number of abandoned/withdrawn applications after request for examination | Number of written oppositions filed |
| Number of abandoned/withdrawn claims after request for examination | Number of appeals and trials |
| Number of invalidation trials | Number of registrations for creating patent right |
| Appeal/trial number | Number of registrations for extending term of patent right |
| Date of decision to appeal/trial | Number of transferred patents |
| Number of claims demanded for invalidation trial | Number of registrations (in each country) |
| Number of appeals to dismissal of amendment or trials for correction | Years required for registration (in each country) |
| Number of oppositions | Years spent on examination (in each country) |
| Number of claims demanded for opposition | Number of rejections issued (in each country) |
| Inventors of registered patent | Number of amendments filed (in each country) |
| Number of inventors of registered patent | Number of amendments filed (for formalities) (in each country) |
| Applicants of registered patent | Number of oppositions filed (in each country) |
| References cited | Number of applications in which preferential examination is conducted |
| | Number of rejections issued |
| | |

"PATENT QUARTERLY JOURNAL" INDEX LIST OF ENTERPRISE VALUE EVALUATION SYSTEM

A: Business, Profit and Market Value Related Index (1)

| Index Group | Index | Formula |
|---|---|---|
| (A) Investment | Facility Investment Amount | {(Current Term Tangible Fixed Assets - Previous Term Tangible Fixed Assets)} + (Current Term Depreciation Cost) |
| | R&D Cost | Total Amount of R&D Cost |
| | Investment Trend Index | Term-on-Term Ratio of {(Facility Investment Amount) + (R&D Cost)} |
| (B) Management/Finance Analysis | Facility Investment Efficiency | (Value Added Amount)/(Tangible Fixed Assets) |
| | Labor Productivity | (Value Added Amount)/(Number of Employees) |
| | Labor Equipment Ratio | (Tangible Fixed Assets)/(Number of Employees) |
| | Labor Distribution Share | {(Personnel Expense to be Included in Selling Cost and Administrative Expenses) + (Labor Cost to be Included in Manufacturing Cost)}/(Value Added Amount) |
| | Total Factor Productivity | (Value Added Amount Rate of Change) - {(1 - Labor Distribution Share (To Value Added)) × (Depreciation Target Tangible Fixed Assets Rate of Change)} - {(Labor Distribution Share (To Value Added)) × (Number of Employees Rate of Change)} |
| | Cost-to-Sales Ratio | (Cost of Sales)/(Sales Volume) |
| | Cost of Sales-and-Administration Ratio to Sales | (Selling Cost and Administrative Expenses)/(Sales Volume) |
| | Interest Bearing Debt Ratio | (Interest Bearing Debt)/(Total Assets) |
| | Equity to Asset Ratio | (Equity Capital)/(Total Assets) |
| (C) Profit Related Items | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues) (Operating Net Profit) = (Operating Profit) - (Interest Paid and Discount) |
| | Gross Operating Profit (GBP) | (Operating Profit) + (R&D Cost) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA α | {(Value Added Amount) + (Patent Royalty Income)}/(Total Assets) |
| | ROA β | {(GBP) + (Patent Royalty Income)}/(Total Assets) |
| | ROA γ | {(EBITDA) + (Patent Royalty Income)}/(Total Assets) |
| | ROA δ | {(Operating Profit) + (Patent Royalty Income)}/(Total Assets) |
| | Earnings on Intellectual Assets (EOIA) | {(GBP) + (Patent Royalty Income)} - {(Financial Assets) × (Profit Ratio m)} + {(Tangible Fixed Assets) × (Profit Ratio f)} (Profit Ratio m): Application of Short Term Prime Rate; (Profit Ratio f): Application of Long Term Prime Rate |
| | Return On Intellectual Assets (ROIA) | (Earnings on Intellectual Assets)/(Total Assets) |

FIG. 5

EP 1 686 516 A1

FIG. 6

EP 1 686 516 A1

"PATENT QUARTERLY JOURNAL" INDEX LIST OF ENTERPRISE VALUE EVALUATION SYSTEM

A: Business, Profit and Market Value Related Index (2)

| Index Group | Index | Formula |
|---|---|---|
| (D) Excess Profit Analysis | Excess Value Added Amount | Sales Volume × {(Sales Volume Value Added Ratio) - (Industry Average Sales Volume Value Added Ratio)} |
| | Excess GBP | Sales Volume × {(Sales Volume GBP Ratio) - (Industry Average Sales Volume GBP Ratio)} |
| | Excess EBITDA | Sales Volume × {(Sales Volume EBITDA Ratio) - (Industry Average Sales Volume EBITDA Ratio)} |
| | Excess Operating Profit | Sales Volume × {(Operating Profit Ratio (To Sales)) - (Industry Average Operating Profit Ratio (To Sales))} |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA $\delta$) - (Industry Average ROA $\delta$) |
| | Excess Earnings on Intellectual Assets (EXEOIA) | (Net Assets) × {(Ratio of Earnings on Intellectual Assets) - (Industry Average of Ratio of Earnings on Intellectual Assets) |
| (M) Market Evaluation Related Items | MVA | (Value of Stock) - (Shareholders' Equity)    (Value of Stock) = (Total Number of Outstanding Stock) × (Stock Price) |
| | PBR | (Value of Stock)/(Equity Capital) |
| | Expected Intellectual Property Profit | {(Fixed Liabilities) × (Profit Ratio a) + (Value of Stock) × (Profit Ratio p)} - {(Financial Assets) × (Profit Ratio m) + (Tangible Fixed Assets) × (Profit Ratio f)} (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |
| (PE) Patent Profitability Related Items | Patent Profitability $\alpha$ | {(GBP) + (Patent Royalty Income)}/(Total Number of Effective Patents) |
| | Patent Profitability $\beta$ | {(Excess Value Added) + (Patent Royalty Income)}/(Total Number of Effective Patents) |
| | Patent Profitability $\gamma$ | {(Excess GBP) + (Patent Royalty Income)}/(Total Number of Effective Patents) |
| | Patent Profitability $\delta$ | (Excess Earnings on Intellectual Assets (EXEOIA))/(Total Number of Effective Patents) |

FIG. 7

EP 1 686 516 A1

"PATENT QUARTERLY JOURNAL" INDEX LIST OF ENTERPRISE VALUE EVALUATION SYSTEM

B: R&D and Patent Related Index (1)

| Index Group | Index | Formula |
|---|---|---|
| (R) R&D Related Items | R&D Cost Ratio $\alpha$ | (R&D Cost)/(Sales Volume) |
| | R&D Cost Ratio $\beta$ | (R&D Cost)/(Value Added Amount) |
| | R&D Cost Ratio $\gamma$ | (R&D Cost)/(GBP) |
| | R&D Cost Ratio $\delta$ | (R&D Cost)/(Total Assets) |
| | Number of Inventors | (Calculated Based on "Inventor" Column of Laid-Open Publications) |
| | Ratio of Inventors | (Number of Inventors)/(Number of Employees) |
| | R&D Cost per Inventor | (R&D Cost)/(Number of Inventors) |
| (PA) Patent Application Related Items | Number of Patent Applications | (Joint Application is Recorded as One Application) |
| | Number of Claims Filed | (Sum of Number of Claims of Laid-Open Publications) |
| | Number of Claims per Patent Application | (Number of Claims Filed)/(Number of Patent Applications) |
| | Number of application per Inventor | (Number of Patent Applications (Other Than Joint Applications))/(Number of Inventors) |
| | Number of Claims per Inventor (Patent Application) | (Number of Claims Filed (Other Than Joint Applications))/(Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint | (Number of Joint Applicants in Joint Applications) |
| | Patent Application Stock | (Cumulative Number of Patent Applications) |
| (PB) Examination Request Related Items | Number of Examination Requests | (Number of Examination Requests Filed) |
| | Years to Examination Request (Average) | [ $\Sigma$ (Date of Examination Request - Filing Date)]/[(Number of Examination Requests)×(Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |

FIG. 8

EP 1 686 516 A1

"PATENT QUARTERLY JOURNAL" INDEX LIST OF ENTERPRISE VALUE EVALUATION SYSTEM

B: R&D and Patent Related Index (2)

| Index Group | Index | Formula |
|---|---|---|
| (PT) Patent Acquisition (Registration) Related Items | Number of Patents Granted | (Number of Patents Granted) |
| | Number of Claims Registered | (Number of "Claims" in Registered Gazette) |
| | Years to Patent Granted (Average) | { Σ (Patent Registration Date - Patent Filing Date)} / {(Number of Patents Granted)×(Annual Number of Days)} |
| | Patent Granted Ratio to Number of Applications | (Number of Patents Granted Each Year)/(Number of Patent Applications Filed Each Year) |
| | Patent Granted Stock | (Patent Granted Stock at End of Each Year) |
| | Patent Granted Ratio to Number of Examination Requests | (Number of Patents Granted Each Year)/(Number of Examination Requests Filed Each Year) |
| | Patent Granted Stock Ratio to Examination Request Stock | (Patent Granted Stock)/(Cumulative Number of Examination Requests) |
| | Number of Effective Patents Granted | (Number of Patents Granted Each Year) - (Number of Patents Invalidated Among Patent Registrations Each Year) |
| (PP) Patent Productivity | Patent Application Productivity | (Number of Claims of Patent Applications in a year)/(R&D Cost in a previous year) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Required Years to Patent Granted) |
| (PS) Patent Stock Related Items | Total Number of Effective Patents | (Patent Granted Stock) - (Patent Invalidation Stock) |
| | Patent Granted Renewal Ratio | (Total Number of Effective Patents)/(Patent Granted Stock) |
| | Years to Renewal Patent Granted Expiration (Average) | { Σ (Scheduled Invalidation Date of Each Patent of the Total Number of Effective Patents - Year End)} / {(Total Number of Effective Patents) × (Annual Number of Days)} |
| | Patent Stock Index | (Total Number of Effective Patents) × (Years to Renewal Patent Granted Expiration (Average)) |
| | Total Patent Assets | {(R&D Cost)/(Number of Patents Granted)} ×(Total Number of Effective Patents) |

FIG. 9

EP 1 686 516 A1

"PATENT QUARTERLY JOURNAL" INDEX LIST OF ENTERPRISE VALUE EVALUATION SYSTEM

C: Patent Portfolio Related Index

| Index Group | Index | Formula |
|---|---|---|
| (PAP) Patent Application Portfolio analysis | Patent Application Portfolio analysis | (Power of Number of Claims Share Per Technical Field)   (Share: Share of Each Technical Field in an Enterprise or Share of each Enterprise in All Enterprises in a Technical Field) |
| | Patent Diversification Index (PDI) | $[1 - \Sigma(\text{Share of Each Technical Field in an Enterprise})^2]$ |
| | Patent Competitive Position Index (PCPI) | $\Sigma[\{\Sigma \text{ (SEI Index Per Technical Field)}\} \times (\text{Share of Each Company Per Technical Field})] \times (1 + \text{Excess Growth Rate})$ |
| | Average Patent Competitive Position Index (Average PCPI) | (Patent Competitive Position Index (PCPI))/(Number of Technical Fields covered by Company's Patent Applications (Average in 3 Years)) |
| (PKA) Characteristic Keywords | Characteristic Keywords | (Selected Keywords Having an Appearance Frequency That is Not Large in All Patent Publications and That is Large in Patent Publications of the Same Company) |
| | Number of Characteristic Keywords | (Representation of Character of an Enterprise by the Number of Keywords under a Constant Condition of Selecting the Characteristic Keywords) |
| (PSI) Patent Similarity Analysis | Patent Similarity Index | (Ratio of Patent Publications Having the Keyword of the Subject Patent Publication within a Population) |
| | Patent Similarity Index to the Same Company (PSIself) | (Patent Similarity Index (PSI) When the Population is the Same Company's Patent Publications) |
| | Patent Similarity Index to All Companies (PSIall) | (Patent Similarity Index (PSI) When the Population is All Patent Publications Including the Other Companies' Patent Publications) |
| | Normal Patent Publication | (Patent Publications Having Significantly Large PSIall) |
| | Exceptional Patent Publication | (Patent Publications Having Significantly Small PSIall) |

FIG. 10

PATENT ACQUISITION (REGISTRATION) RELATED INDEXES
(ELECTRICAL EQUIPMENT)

| NAME OF ENTER-PRISE | NUMBER OF PATENT REGISTRA-TIONS (PTRD) | NUMBER OF CLAIMS REGISTERED (PTCL) | CUMULATIVE NUMBER OF PATENT REGISTRA-TIONS (PTSP) | CUMULATIVE PATENT REGISTRA-TION RATIO (PTSR) | NUMBER OF EFFECTIVE PATENTS (PTEF) | EFFECTIVE PATENT REMAINING RATIO (PTEP) |
|---|---|---|---|---|---|---|
| MS | 4,806 | 22,766 | 5,606 | 6.0 | 4,794 | 99.8 |
| SN | 2,337 | 8,472 | 379 | 0.6 | 2,334 | 99.9 |
| HT | 2,642 | 15,386 | 2,205 | 3.2 | 2,636 | 99.8 |
| TS | 2,849 | 12,672 | 1,830 | 2.6 | 2,845 | 99.9 |
| MB | 1,677 | 10,287 | 1,964 | 4.5 | 1,674 | 99.8 |
| FJ | 1,618 | 9,206 | 730 | 2.5 | 1,614 | 99.8 |
| NC | 3,688 | 22,321 | 20,519 | 40.2 | 3,679 | 99.8 |
| SY | 1,913 | 5,680 | 2,582 | 11.0 | 1,908 | 99.8 |
| SH | 1,537 | 7,017 | 1,925 | 12.6 | 1,533 | 99.7 |
| PI | 156 | 421 | 38 | 1.2 | 154 | 98.7 |

FIG. 11

PATENT ACQUISITION (REGISTRATION) RELATED INDEXES
(CHEMICAL)

| NAME OF ENTER-PRISE | NUMBER OF PATENT REGISTRA-TIONS (PTRD) | NUMBER OF CLAIMS REGISTERED (PTCL) | CUMULATIVE NUMBER OF PATENT REGISTRA-TIONS (PTSP) | CUMULATIVE PATENT REGISTRA-TION RATIO (PTSR) | NUMBER OF EFFECTIVE PATENTS (PTEF) | EFFECTIVE PATENT REMAINING RATIO (PTEP) |
|---|---|---|---|---|---|---|
| MK | 435 | 1,459 | 135 | 1.2 | 432 | 99.3 |
| MT | 518 | 2,257 | 252 | 3.0 | 516 | 99.6 |
| SE | 390 | 897 | 233 | 1.3 | 387 | 99.4 |
| SU | 288 | 1,277 | 155 | 1.7 | 286 | 99.4 |
| KF | 141 | 672 | 97 | 2.1 | 138 | 98.1 |
| AK | 336 | 1,059 | 198 | 2.4 | 333 | 99.0 |
| HK | 122 | 712 | 69 | 1.0 | 122 | 100 |
| DN | 171 | 837 | 33 | 0.8 | 169 | 99.2 |
| KO | 479 | 2,081 | 767 | 8.3 | 476 | 99.3 |
| SK | 302 | 947 | 629 | 14.6 | 299 | 98.3 |

FIG. 12

AVERAGE YEARS REQUIRED FOR REGISTRATION (PTMY)
(ELECTRICAL EQUIPMENT)

| NAME OF ENTERPRISE | 1999 | 2000 | 2001 | 2002 |
|---|---|---|---|---|
| MS | 7.2 | 6.9 | 6.8 | 6.6 |
| SN | 9.2 | 9.0 | 9.0 | 8.9 |
| HT | 8.2 | 8.0 | 7.9 | 7.5 |
| TS | 8.0 | 8.1 | 8.0 | 7.5 |
| MB | 6.8 | 6.8 | 6.8 | 6.7 |
| FJ | 8.3 | 8.4 | 8.1 | 7.7 |
| NC | 5.0 | 4.6 | 4.2 | 3.9 |
| SY | 6.9 | 6.8 | 6.8 | 6.6 |
| SH | 6.7 | 6.7 | 6.5 | 6.1 |
| PI | 9.1 | 9.1 | 8.9 | 8.7 |

FIG. 13

AVERAGE YEARS REQUIRED FOR REGISTRATION (PTMY)
(CHEMICAL)

| NAME OF ENTERPRISE | 1999 | 2000 | 2001 | 2002 |
|---|---|---|---|---|
| MK | 8.5 | 8.8 | 8.7 | 8.5 |
| MT | 8.1 | 8.2 | 8.5 | 8.3 |
| SE | 7.5 | 7.8 | 7.9 | 7.6 |
| SU | 8.3 | 8.2 | 8.4 | 8.2 |
| KF | 6.9 | 7.9 | 8.7 | 8.6 |
| AK | 8.1 | 8.1 | 7.7 | 7.6 |
| HK | 7.9 | 7.8 | 7.6 | 7.4 |
| DN | 9.0 | 9.1 | 9.0 | 8.9 |
| KO | 6.1 | 6.2 | 6.9 | 6.5 |
| SK | 5.9 | 6.0 | 6.5 | 6.5 |

FIG. 14

PATENT PRODUCTIVITY INDEXES
(ELECTRICAL EQUIPMENT)

| NAME OF ENTERPRISE | PATENT APPLICATION PRODUCTIVITY (PPFI) | EXAMINATION REQUEST PRODUCTIVITY (PPEX) | PATENT AQUISITION PRODUCTIVITY (PPPD) |
|---|---|---|---|
| MS | 761.1 | 442.9 | 152.6 |
| SN | 267.4 | 114.7 | 49.6 |
| HT | 178.2 | 55.2 | 28.9 |
| TS | 229.0 | 86.1 | 28.6 |
| MB | 302.7 | 173.8 | 44.7 |
| FJ | 59.7 | 28.5 | 6.6 |
| NC | 154.4 | 253.9 | 94.6 |
| SY | 262.1 | 176.8 | 50.9 |
| SH | 300.0 | 187.6 | 94.1 |
| PI | 743.3 | 567.2 | 104.8 |

NUMBER OF CLAIMS IS USED FOR PATENT PRODUCTIVITY INDEXES

FIG. 15

PATENT PRODUCTIVITY INDEXES
(CHEMICAL)

| NAME OF ENTERPRISE | PATENT APPLICATION PRODUCTIVITY (PPFI) | EXAMINATION REQUEST PRODUCTIVITY (PPEX) | PATENT AQUISITION PRODUCTIVITY (PPPD) |
|---|---|---|---|
| MK | 248.3 | 153.3 | 26.2 |
| MT | 208.6 | 123.8 | 25.4 |
| SE | 244.8 | 87.9 | 7.6 |
| SU | 218.9 | 132.4 | 27.8 |
| KF | 419.4 | 178.9 | 16.4 |
| AK | 131.0 | 56.3 | 8.5 |
| HK | 312.8 | 122.2 | 11.9 |
| DN | 1036.5 | 490.9 | 68.5 |
| KO | 117.8 | 59.4 | 17.2 |
| SK | 184.4 | 131.0 | 31.6 |

NUMBER OF CLAIMS IS USED FOR PATENT PRODUCTIVITY INDEXES

FIG. 16

PATENT ACQUISITION PRODUCTIVITY – PATENT APPLICATION PRODUCTIVITY
(ELECTRICAL EQUIPMENT)
$y = 0.15x + 16.663$

FIG. 17

PATENT ACQUISITION PRODUCTIVITY – PATENT APPLICATION PRODUCTIVITY
(CHEMICAL)
$y = 0.0519x + 8.8501$

FIG. 18

PATENT APPLICATION PRODUCTIVITY – EXAMINATION REQUEST PRODUCTIVITY
(CHEMICAL)
$y = 0.4536x + 11.976$

FIG. 19

PATENT APPLICATION PRODUCTIVITY – EXAMINATION REQUEST PRODUCTIVITY
(ELECTRICAL EQUIPMENT)
$y = 0.6654x - 8.1048$

FIG. 20

PATENT ACQUISITION PRODUCTIVITY – EXAMINATION REQUEST PRODUCTIVITY
(CHEMICAL)
$y = 0.128x + 5.3914$

FIG. 21

PATENT ACQUISITION PRODUCTIVITY – EXAMINATION REQUEST PRODUCTIVITY
(ELECTRICAL EQUIPMENT)
$y = 0.2188x + 19.88$

FIG. 22

CUMULATIVE NUMBER OF REGISTRATIONS AND CUMULATIVE REGISTRATION RATIO

| YEARS ELAPSED | CUMULATIVE NUMBER OF REGISTRA- TIONS ON APPLICA- TIONS IN 1994 | CUMULATIVE NUMBER OF REGISTRA- TIONS ON APPLICA- TIONS IN 1995 | CUMULATIVE NUMBER OF REGISTRA- TIONS ON APPLICA- TIONS IN 1996 | TOTAL OF CUMULATIVE NUMBER OF PATENT REGISTRA- TIONS (PTSP) | CUMULATIVE PATENT REGISTRA- TION RATIO (%) (PTSR) | CUMULATIVE PATENT REGISTRA- TION RATIO (ln(PTSR)) |
|---|---|---|---|---|---|---|
| 0 | 0 | 0 | 0 | 0 | 0.00% | |
| 1 | 1 | 0 | 0 | 1 | 0.01% | −4.61 |
| 2 | 16 | 8 | 22 | 46 | 0.46% | −0.78 |
| 3 | 55 | 51 | 52 | 158 | 1.58% | 0.46 |
| 4 | 139 | 103 | 81 | 323 | 3.23% | 1.17 |
| 5 | 210 | 235 | 210 | 655 | 6.55% | 1.88 |
| 6 | 285 | 298 | 286 | 869 | 8.69% | 2.16 |
| 7 | 423 | 381 | 378 | 1,182 | 11.82% | 2.47 |
| 8 | 523 | 451 | − | − | − | − |
| 9 | 666 | − | − | − | − | − |
| NUMBER OF APPLICA- TIONS | 3,500 | 3,000 | 3,500 | 10,000 | | |

FIG. 23

DIAGRAM FOR CALCULATING AN ESTIMATED REGISTRATION RATIO
y = 3.5303 ln(x) − 3.9053

YEARS ELAPSED
(AND AVERAGE YEARS REQUIRED FOR REGISTRATION)

FIG. 24

DIAGRAM FOR CALCULATING AN ESTIMATED REGISTRATION RATIO
y = 1.0187 x − 3.6807

YEARS ELAPSED
(AND AVERAGE YEARS REQUIRED FOR REGISTRATION)

FIG. 25

```
                        ┌─────────────────────┐
                        │        START        │
                        └─────────────────────┘
                                  │
                                  │        ⌐ S501
                        ┌─────────────────────┐
                        │  SELECT ENTERPRISE FOR │
                        │ ENTERPRISE VALUE EVALUATION │
                        └─────────────────────┘
                                  │
                                  │        ⌐ S502
                        ┌─────────────────────┐
                        │ SELECT MENU FOR ENTERPRISE │
                        │   VALUE EVALUATION  │
                        └─────────────────────┘
                                  │
                                  │             ⌐ S503
                        ╱─────────────────────╲
                        ╲   SELECT COMBINATION ╱
                          ╲─────────────────╱
                   │                              │
          ⌐ S604   │                              │   ⌐ S504
┌───────────────────────────┐      ┌───────────────────────────┐
│ ACQUIRE MANAGEMENT-FINANCE │      │  ACQUIRE PATENT INFORMATION │
│        INFORMATION         │      └───────────────────────────┘
└───────────────────────────┘                    │
          │         ⌐ S605                        │   ⌐ S505
┌───────────────────────────┐      ┌───────────────────────────┐
│   CALCULATE MANAGEMENT-    │      │ CALCULATE PATENT INFORMATION │
│    FINANCE INFORMATION     │      └───────────────────────────┘
└───────────────────────────┘                    │
          │         ⌐ S606                        │   ⌐ S506
┌───────────────────────────┐      ┌───────────────────────────┐
│  ORGANIZE CALCULATION RESULT │    │  ORGANIZE CALCULATION RESULT │
│   OF MANAGEMENT-FINANCE    │      │     OF PATENT INFORMATION   │
│        INFORMATION         │      └───────────────────────────┘
└───────────────────────────┘                    │
                   │                              │
                   └──────────┬───────────────────┘
                              │        ⌐ S507
                    ┌─────────────────────┐
                    │     CREATE GRAPH    │
                    └─────────────────────┘
                              │        ⌐ S508
                    ┌─────────────────────┐
                    │     OUTPUT GRAPH    │
                    └─────────────────────┘
                              │        ⌐ S509
                    ┌─────────────────────┐
                    │ DETERMINE ENTERPRISE VALUE │
                    └─────────────────────┘
                              │
                    ┌─────────────────────┐
                    │         END         │
                    └─────────────────────┘
```

# FIG. 26

**ENTERPRISE VALUE EVALUATION MENU (1)**

| BACK |
|------|
| SET |

SELECT INDEXES IN THE WINDOWS BELLOW

**BUSINESS, PROFIT AND MARKET VALUE**

- ☐ (A) Investment index
- ☐ (B) Management-finance analysis index
- ☐ (C) Profit related index
- ☐ (D) Excess profit analysis index
- ☐ (M) Market evaluation related index
- ☐ (PE) Patent profitability index

**R&D AND PATENT**

- ☐ (R) Research and development related index
- ☐ (PA) Patent application related index
- ☐ (PB) Examination request related index
- ■ (PI) Patent acquisition (registration) related index
- ☐ (PP) Patent productivity index
- ☐ (PS) Patent stock related index

**PATENT PORTFOLIO**

- ☐ (PAP) Patent application portfolio analysis
- ☐ (PKA) Characteristic keyword list
- ☐ (PSI) Patent similarity analysis

FIG. 27

EP 1 686 516 A1

## ENTERPRISE VALUE EVALUATION MENU (3)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management–finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ■ | Number of patent registrations | |
| (M) Market evaluation related index | ☐ | (PP) Patent productivity index | ☐ | Number of claims registered | |
| (PE) Patent profitability index | ☐ | (PS) Patent stock related index | ☐ | Average years required for registration | |
| | | | | ☐ Patent registration ratio | |
| | | | | ☐ Cumulative number of patent registrations | |
| | | | | ☐ Patent allowance ratio | |
| | | | | ☐ Cumulative patent allowance ratio | |
| | | | | ☐ Number of effective patents | |

FIG. 28

EP 1 686 516 A1

ENTERPRISE VALUE EVALUATION MENU (1)

SELECT INDEXES IN THE WINDOWS BELLOW

| BACK |
| SET |

**BUSINESS, PROFIT AND MARKET VALUE**

| (A) Investment index | ☐ |
| (B) Management–finance analysis index | ☐ |
| (C) Profit related index | ☐ |
| (D) Excess profit analysis index | ☐ |
| (M) Market evaluation related index | ☐ |
| (PE) Patent profitability index | ☐ |

**R&D AND PATENT**

| (R) Research and development related index | ☐ |
| (PA) Patent application related index | ☐ |
| (PB) Examination request related index | ☐ |
| (PT) Patent acquisition (registration) related index | ☐ |
| (PP) Patent productivity index | ☐ |
| (PS) Patent stock related index | ■ |

**PATENT PORTFOLIO**

| (PAP) Patent application portfolio analysis | ☐ |
| (PKA) Characteristic keyword list | ☐ |
| (PSI) Patent similarity analysis | ☐ |

FIG. 29

EP 1 686 516 A1

ENTERPRISE VALUE EVALUATION MENU (3)

SELECT INDEXES IN THE WINDOWS BELLOW

| BACK |
|------|
| SET |

| BUSINESS, PROFIT AND MARKET VALUE | R&D AND PATENT | PATENT PORTFOLIO |
|---|---|---|
| (A) Investment index ☐ | (R) Research and development related index ☐ | (PAP) Patent application portfolio analysis ☐ |
| (B) Management-finance analysis index ☐ | (PA) Patent application related index ☐ | (PKA) Characteristic keyword list ☐ |
| (C) Profit related index ☐ | (PB) Examination request related index ☐ | (PSI) Patent similarity analysis ☐ |
| (D) Excess profit analysis index ☐ | (PT) Patent acquisition (registration) related index ☐ | |
| (M) Market evaluation related index ☐ | (PP) Patent productivity index ☐ | |
| (PE) Patent profitability index ☐ | (PS) Patent stock related index ☐ | Total number of effective patents ☐ |
| | | Total effective patent remaining ratio ☐ |
| | | Average remaining years of total effective patent ☐ |
| | | ■ Patent stock index |

FIG. 30

EP 1 686 516 A1

ENTERPRISE VALUE EVALUATION MENU (1)

SELECT INDEXES IN THE WINDOWS BELLOW

| BACK |
|------|
| SET  |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ■ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 31

EP 1 686 516 A1

## ENTERPRISE VALUE EVALUATION MENU (2)

SELECT INDEXES IN THE WINDOWS BELLOW

| BACK |
|------|
| SET |

**BUSINESS, PROFIT AND MARKET VALUE**

| (A) Investment index | ☐ |
| (B) Management–finance analysis index | ☐ |
| (C) Profit related index | ■ |
| (D) Excess profit analysis index | |
| (M) Market evaluation related index | |
| (PE) Patent profitability index | |

**R&D AND PATENT**

| (R) Research and development related index | ☐ |
| (PA) Patent application related index | ☐ |
| Sales volume | ☐ |
| ☐ Value added amount | ☐ |
| ☐ GBP | ☐ |
| ☐ EBITDA | ☐ |
| ☐ Operating profit | |
| ☐ Net operating profit | |
| ☐ Patent royalty income | |
| ☐ ROA. $\alpha$ | |
| ☐ ROA. $\beta$ | |
| ☐ ROA. $\gamma$ | |
| ☐ ROA. $\delta$ | |
| ☐ EOIA | |
| ☐ ROIA | |

**PATENT PORTFOLIO**

| (PAP) Patent application portfolio analysis | ☐ |
| (PKA) Characteristic keyword list | ☐ |
| (PSI) Patent similarity analysis | ☐ |

FIG. 32

ENTERPRISE VALUE EVALUATION
INPUT CONDITION SETTING (1)

| BACK |
|---|
| SET |

SELECT CONDITIONS IN THE WINDOWS BELLOW

| TARGET DOCUMENT | | DATA READ | |
|---|---|---|---|
| Unexamined patents | ■ | Internal DB1 | ■ |
| Registered patents | ■ | Internal DB2 | ☐ |
| Utility models | ☐ | JPO IPDL | ☐ |
| Academic documents | ☐ | PATOLIS | ☐ |
| | | Other commercially available DB1 | ☐ |
| | | Other commercially available DB2 | ☐ |
| | | FD | ☐ |
| | | CD | ☐ |
| | | MO | ☐ |
| | | DVD | ☐ |
| | | Others | ☐ |

FIG. 33

ENTERPRISE VALUE EVALUATION
INPUT CONDITION SETTING (2)

| BACK |
|---|
| SET |

SELECT CONDITIONS IN THE WINDOWS BELLOW

TARGET

| All industries | | |
|---|---|---|
| Industry | Food | ☐ |
| Enterprise | Ceramic | ☐ |
| Other unit | Steel, nonferrous and metal | ☐ |
| | Machinery and shipbuilding | ☐ |
| | Electrical equipment | ■ |
| | Automobile & transport machine | ☐ |
| | Fabric, pulp and paper | ☐ |
| | Precision equipment | ☐ |
| | Other manufacturing | ☐ |
| | Construction | ☐ |
| | Information & telecommunication | ☐ |
| | Electricity and gas | ☐ |
| | Chemical | ☐ |
| | Service | ☐ |
| | Pharmaceutical | ☐ |

TARGET

| Industry | ☐ |
|---|---|
| Enterprise | ☐ |
| Enterprise | |
| Other unit | |

Company name

[ ]

Company code

[ ]

Applicant code

[ ]

( Search )

FIG. 34

ENTERPRISE VALUE EVALUATION
OUTPUT CONDITION SETTING

SELECT CONDITIONS IN THE WINDOWS BELLOW

| BACK |
|------|
| SET  |

MAP POSITION                                    OUTPUT DATA

| MAP POSITION | | OUTPUT DATA | | |
|---|---|---|---|---|
| 1 map | ■ | Patent application productivity | none | ☐ |
| 2 maps | ☐ | Examination request productivity | top 5 | ☐ |
| 1 data sheet | ☐ | Patent registration productivity | top 10 | ☐ |
| 2 data sheets | ☐ | COMMENT | top 15 | ☐ |
| 1 map with data | ☐ | (free entry) | top 20 | ■ |
| 2 maps with data | ☐ | | numerical input | ☐ |
| 1 map with comment | ☐ | | | |
| 2 maps with comment | ☐ | | | |
| 1 map with data and comment | ☐ | | | |
| 2 maps with data and comment | ☐ | | | |

FIG. 35

EP 1 686 516 A1

ENTERPRISE VALUE EVALUATION MENU (1)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ■ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 36

EP 1 686 516 A1

## ENTERPRISE VALUE EVALUATION MENU (2)

### SELECT INDEXES IN THE WINDOWS BELLOW

| BACK |
| SET |

| BUSINESS, PROFIT AND MARKET VALUE | R&D AND PATENT | PATENT PORTFOLIO |
|---|---|---|
| (A) Investment index | ☐ Facility investment amount ☐ | (PAP) Patent application portfolio analysis ☐ |
| (B) Management-finance analysis index | ☐ R&D cost ☐ | (PKA) Characteristic keyword list ☐ |
| (C) Profit related index | ■ Investment trend index ☐ | (PSI) Patent similarity analysis ☐ |
| (D) Excess profit analysis index ☐ | (PT) Patent acquisition (registration) related index ☐ | |
| (M) Market evaluation related index ☐ | (PP) Patent productivity index ☐ | |
| (PE) Patent profitability index ☐ | (PS) Patent stock related index ☐ | |

FIG. 37

ENTERPRISE VALUE EVALUATION MENU (2)

SELECT INDEXES IN THE WINDOWS BELLOW

BACK
SET

BUSINESS, PROFIT AND MARKET VALUE

| (A) Investment index | ☐ |
| (B) Management-finance analysis index | ☐ |
| (C) Profit related index | ☐ |
| (D) Excess profit analysis index | ☐ |
| (M) Market evaluation related index | ☐ |
| (PE) Patent profitability index | ☐ |

R&D AND PATENT

| (R) Research and development related index | ☐ |
| (PA) Patent application related index | ■ |
| (PB) Examination request related index | ☐ |
| (PT) Patent acquisition (registration) related index | ☐ |
| (PP) Patent productivity index | ☐ |
| (PS) Patent stock related index | ☐ |

PATENT PORTFOLIO

| (PAP) Patent application portfolio analysis | ☐ |
| (PKA) Characteristic keyword list | ☐ |
| (PSI) Patent similarity analysis | ☐ |

FIG. 38

EP 1 686 516 A1

## ENTERPRISE VALUE EVALUATION MENU (3)

SELECT INDEXES IN THE WINDOWS BELLOW

BACK
SET

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | Number of patent applications | ☐ |
| (C) Profit related index | ☐ | (PB) Examination request related index | | ■ Number of claims filed | ☐ |
| (D) Excess profit analysis index | ☐ | (PT) Patent acquisition (registration) related index | ☐ | Number of claims per application | |
| (M) Market evaluation related index | ☐ | (PP) Patent productivity index | ☐ | Number of applications per inventor | |
| (PE) Patent profitability index | ☐ | (PS) Patent stock related index | ☐ | Number of claims filed per inventor | |
| | | | | Number of joint applications | |
| | | | | Ratio of joint applications | |
| | | | | ☐ Joint applicants | |
| | | | | Total number of applications | |

94

<table>
<tr><td colspan="2"><b>INTERNATIONAL SEARCH REPORT</b></td><td>International application No.<br>PCT/JP2004/004293</td></tr>
</table>

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-92228 A (Patolis Corp.),<br>29 March, 2002 (29.03.02),<br>Abstract<br>(Family: none) | 1-54 |
| A | WO 00/60495 A2 (AURIGIN SYSTEMS INC.),<br>12 October, 2000 (12.10.00),<br>Abstract<br>& JP 2003-527647 A | 1-54 |
| A | JP 2002-32543 A (Nippon Shokubai Co., Ltd.),<br>31 January, 2002 (31.01.02),<br>Abstract<br>(Family: none) | 1-54 |

☐ Further documents are listed in the continuation of Box C.　　☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search<br>27 April, 2004 (27.04.04) | Date of mailing of the international search report<br>18 May, 2004 (18.05.04) |
|---|---|
| Name and mailing address of the ISA/<br>Japanese Patent Office | Authorized officer |
| Facsimile No. | Telephone No. |

Form PCT/ISA/210 (second sheet) (January 2004)